# EUROPEAN PATENT APPLICATION

(11) **EP 4 401 401 A1**
(43) Date of publication of application: **17.07.2024**
(21) Application number: 21957964.6
(22) Date of filing: 26.09.2021
(51) Int. Cl.: H04N 7/18, G06F 3/0484

(54) **IMAGE PROCESSING APPARATUS AND METHOD**

(71) Applicant: Huawei Technologies Co., Ltd., Shenzhen, Guangdong 518129 (CN)
(72) Inventor: ZHANG, Xingxin, Shenzhen, Guangdong 518129 (CN); WANG, Xiaomin, Shenzhen, Guangdong 518129 (CN)
(74) Representative: Maiwald GmbH
(86) International application number: PCT/CN2021/120593
(87) International publication number: WO 2023/044844

(57) **Abstract**

This application provides an image processing apparatus and method. The apparatus includes: a first processing unit, configured to obtain a first stitched image based on a first image and a second image; and a sending unit, configured to send the first stitched image, where a quantity of row pixels of the first image is M, and a quantity of column pixels is N; a quantity of row pixels of the second image is P, a quantity of column pixels is Q, and Q>_M; and a quantity of row pixels of the first stitched image is N+P, and a quantity of column pixels is Q. The first stitched image includes the second image and a third image. The third image is an image obtained through first preprocessing of the first image. The first preprocessing includes rotating the first image, or the first preprocessing includes rotating and padding the first image. Therefore, the obtained first stitched image includes a small quantity of padded pixels, and in a process of transmitting the first stitched image, the padded pixels occupy a small amount of transmission bandwidth. This improves transmission efficiency of the first stitched image.

## Description

### TECHNICAL FIELD

This application relates to the field of image processing, and more specifically, to an image processing apparatus and method.

### BACKGROUND

As a main interface of human-computer interaction, displays play an important role in intelligentization. Multi-screen display becomes a new trend of cockpit display after large-screen display, and one-core multi-screen display becomes a focus of vehicle factories and cockpit system integrators. In the multi-screen display, functions of a conventional central display screen are separated, so that navigation information, multimedia information, and the like are displayed on one screen, and vehicle information such as a seat, an air conditioner, and an advanced driving assistance system (advanced driving assistance system, ADAS) is displayed on the other screen or the other two screens. This reduces menu levels of system applications, and simplifies user operations.

For example, a cockpit domain controller (cockpit domain controller, CDC) transmits an image to a display device for display through cables by using a serializer/deserializer (serializer/deserializer, SerDes) technology. The CDC includes a system on a chip (system on a chip, SoC) and a serializer, and the display device includes a deserializer and a display. A specific process of transmitting the image from the CDC to the display is as follows: The SoC transmits the image to a serializer (serializer, Ser) through a mobile industry processor interface (mobile industry processor interface, MIPI), an open LVDS display interface (open lvds display interface, oLDI), a display port (display port, DP), cables on a printed circuit board (printed circuit board, PCB) of the SoC, or the like. The Ser transmits the image to deserializers (deserializer, Des) of different display devices through different ports, then the Des transmits the image to the display through a board interface like the MIPI, the oLDI, or the DP, and the display displays the image.

Due to limitations on a pin and an interface of the SoC and the Ser, a plurality of images cannot be distinguished at an interface layer. Therefore, the SoC needs to horizontally stitch displayed images into a regular large image through specific processing and transmit the stitched image to the Ser. The Ser (which supports one-to-two segmentation, that is, supports segmenting one image into two images) performs segmentation on the large image, to obtain two images, and separately sends the images to corresponding display devices through two ports of the serializer for display. However, sizes of displays of display devices are usually different. To facilitate stitching, the SoC needs to perform pixel padding on at least one of the two to-be-stitched images, so as to match a column specification of the other image, so that quantities of column pixels of the two images are consistent. Because the Ser and the Des cannot prune padded pixels, the padded pixels are transmitted to the display as valid pixels, and the display prunes the padded pixels and then displays the image. In this solution, excessive padded pixels overoccupy transmission bandwidth. This causes low image transmission efficiency.

### SUMMARY

This application provides an image processing apparatus and method, to reduce a quantity of padded pixels, and improve image transmission efficiency.

According to a first aspect, an image processing apparatus is provided, where the apparatus includes: a first processing unit, configured to obtain a first stitched image based on a first image and a second image; and a sending unit, configured to send the first stitched image, where a quantity of row pixels of the first image is M, a quantity of column pixels is N, M>N, and both M and N are positive integers; a quantity of row pixels of the second image is P, a quantity of column pixels is Q, Q>_M, and both P and Q are positive integers; and a quantity of row pixels of the first stitched image is N+P, a quantity of column pixels is Q, the first stitched image includes the second image and a third image, the third image is an image obtained through first preprocessing of the first image, and the first preprocessing includes rotating the first image, or the first preprocessing includes rotating and padding the first image.

For example, the first processing unit includes an SoC.

For example, the image processing apparatus is a domain controller or another apparatus having an image processing function, for example, a CDC or a mobile data center (mobile data center, MDC).

It should be understood that, in embodiments of this application, a quantity of row pixels is a quantity of pixels in each row. A quantity of column pixels is a quantity of pixels in each column.

In the foregoing image processing apparatus, the first processing unit first rotates the first image whose quantity of row pixels is M and quantity of column pixels is N, or rotates and pads the first image whose quantity of row pixels is M and quantity of column pixels is N, to obtain the third image. Then, the first processing unit obtains the first stitched image whose quantity of row pixels is N+P and quantity of column pixels is Q based on the third image and the second image whose quantity of row pixels is P and quantity of column pixels is Q. Therefore, a quantity of padded pixels in the first stitched image is N×(Q-M). However, according to an existing solution, the first image and the second image are stitched, and a quantity of padded pixels included in an obtained stitched image is M×(Q-N). Because Q>_M>N, the quantity of padded pixels included in the first stitched image obtained by the first processing unit is less than the quantity of padded pixels included in the stitched image obtained in the existing solution. Therefore, when the sending unit transmits the first stitched image obtained by the first processing unit, because the padded pixels occupy a small amount of transmission bandwidth, transmission efficiency of the first stitched image is improved.

With reference to the first aspect, in some implementations of the first aspect, that the first processing unit is configured to obtain the first stitched image based on the first image and the second image includes: The first processing unit is specifically configured to: rotate the first image, to obtain the third image; and stitch the third image and the second image, to obtain the first stitched image.

For example, the rotating the first image may be rotating the first image by (90°+180°×n), to obtain the third image, where n is an integer.

For example, the stitching the third image and the second image may be horizontally stitching the third image and the second image. The horizontally stitching may be understood as performing row pixel stitching on two images.

For example, if Q=M, the first processing unit rotates, by (90°+180°×n), the first image whose quantity of row pixels is M and quantity of column pixels is N, to obtain the third image whose quantity of row pixels is N and quantity of column pixels is M. In addition, the third image whose quantity of row pixels is N and quantity of column pixels is M and the third image whose quantity of row pixels is P and quantity of column pixels is Q are horizontally stitched, to obtain the first stitched image whose quantity of row pixels is N+P and quantity of column pixels is Q. The quantities of column pixels of the third image and the second image in the obtained first stitched image are consistent, and the second image is not processed in a process of obtaining the first stitched image. Therefore, in one aspect, compared with the existing solution, complexity of processing the second image by the first processing unit is not additionally increased. In another aspect, each row of the first stitched image includes a complete row of pixels of the second image. A device that receives the first stitched image does not need to buffer pixels of the second image, and can extract a row of pixels of the second image only by performing simple segmentation on the first stitched image, so that the second image can be quickly forwarded in real time.

With reference to the first aspect, in some other implementations of the first aspect, the first processing unit is specifically configured to: rotate the first image, to obtain a fourth image; perform pixel padding on the fourth image, to obtain the third image; and stitch the third image and the second image, to obtain the first stitched image.

For example, the rotating the first image may be rotating the first image by (90°+180°×n), to obtain the fourth image, where n is an integer.

For example, the performing pixel padding on the fourth image may be performing column pixel padding on the fourth image, thereby increasing a quantity of column pixels of the fourth image.

For example, the stitching the third image and the second image may be horizontally stitching the third image and the second image.

For example, first, the first processing unit rotates, by (90°+180°×n), the first image whose quantity of row pixels is M and quantity of column pixels is N, to obtain the fourth image whose quantity of row pixels is N and quantity of column pixels is M. Second, the first processing unit performs column pixel padding on the fourth image, so that a quantity of pixels in each column of the fourth image increases from M to Q, and a quantity of pixels in each row remains unchanged and is still N, so as to obtain the third image. In this case, a quantity of padded pixels is N×(Q-M), a quantity of row pixels of the third image is N, and a quantity of column pixels is Q. Finally, the first processing unit horizontally stitches the third image whose quantity of row pixels is N and quantity of column pixels is Q and the second image whose quantity of row pixels is P and quantity of column pixels is Q, to obtain the first stitched image whose quantity of row pixels is N+P and quantity of column pixels is Q. The quantities of column pixels of the third image and the second image in the obtained first stitched image are consistent, and the second image is not processed in a process of obtaining the first stitched image. Therefore, in one aspect, compared with the existing solution, complexity of processing the second image by the first processing unit is not additionally increased. In another aspect, each row of the first stitched image includes a complete row of pixels of the second image. A device that receives the first stitched image does not need to buffer pixels of the second image, and can extract a row of pixels of the second image only by performing simple segmentation on the first stitched image, so that the second image can be quickly forwarded in real time.

With reference to the first aspect, in some other implementations of the first aspect, that the first processing unit is specifically configured to perform pixel padding on the fourth image to obtain the third image includes: The first processing unit is specifically configured to perform pixel padding from a first target position of the fourth image, to obtain the third image, where the first target position includes at least one of the following: a top position, a bottom position, or a middle position.

With reference to the first aspect, in still some other implementations of the first aspect, the first processing unit is specifically configured to: perform pixel padding on the first image, to obtain a fifth image; rotate the fifth image, to obtain the third image; and stitch the third image and the second image, to obtain the first stitched image.

For example, the performing pixel padding on the first image may be performing row pixel padding on the first image, thereby increasing the quantity of row pixels of the first image.

For example, the rotating the fifth image may be rotating the first image by (90°+180°×n), to obtain the fifth image, where n is an integer.

For example, the stitching the third image and the second image may be horizontally stitching the third image and the second image.

For example, first, the first processing unit performs row pixel padding on the first image whose quantity of row pixels is M and quantity of column pixels is N, so that a quantity of pixels in each row of the first image increases from M to Q, and a quantity of pixels in each column remains unchanged and is still N, so as to obtain the fifth image. In this case, a quantity of padded pixels is (Q-M)×N, a quantity of row pixels of the fifth image is Q, and a quantity of column pixels is N. Second, the first processing unit rotates, by (90°+180°×n), the fifth image whose quantity of row pixels is Q and quantity of column pixels is N, to obtain the third image whose quantity of row pixels is N and quantity of column pixels is Q. Finally, the first processing unit horizontally stitches the third image whose quantity of row pixels is N and quantity of column pixels is Q and the second image whose quantity of row pixels is P and quantity of column pixels is Q, to obtain the first stitched image whose quantity of row pixels is N+P and quantity of column pixels is Q. The quantities of column pixels of the third image and the second image in the obtained first stitched image are consistent, and the second image is not processed in a process of obtaining the first stitched image. Therefore, in one aspect, compared with the existing solution, complexity of processing the second image by the first processing unit is not additionally increased. In another aspect, each row of the first stitched image includes a complete row of pixels of the second image. In this way, a device that receives the first stitched image does not need to buffer pixels of the second image, and can extract a row of pixels of the second image only by performing simple segmentation on the first stitched image, so that the second image can be quickly forwarded in real time.

With reference to the first aspect, in still some other implementations of the first aspect, that the first processing unit is specifically configured to perform pixel padding on the first image to obtain the fifth image includes: The first processing unit is specifically configured to perform pixel padding from a second target position of the first image, to obtain the fifth image, where the second target position includes at least one of the following: a left position, a right position, or a middle position.

With reference to the first aspect, in still some other implementations of the first aspect, the first processing unit is specifically configured to: rotate the first image, to obtain a fourth image; stitch the fourth image and the second image, to obtain a second stitched image; and perform pixel padding on the second stitched image, to obtain the first stitched image.

For example, the rotating the first image may be rotating the first image by (90°+180°×n), to obtain the fourth image, where n is an integer.

For example, the stitching the fourth image and the second image may be horizontally stitching the fourth image and the second image.

For example, the performing pixel padding on the second stitched image may be performing column pixel padding on the fourth image in the second stitched image, thereby increasing a quantity of column pixels of the fourth image, so that the second stitched image is a regular image.

In embodiments of this application, a regular image may be understood as that a quantity of pixels in each row of the image is the same, and a quantity of pixels in each column of the image is also the same. A quantity of row pixels may be the same as or different from a quantity of column pixels.

In embodiments of this application, an irregular image may be understood as that a quantity of pixels in at least one row of the image is different from a quantity of pixels in another row, and/or a quantity of pixels in at least one column of the image is different from a quantity of pixels in another column.

For example, first, the first processing unit rotates, by (90°+180°×n), the first image whose quantity of row pixels is M and quantity of column pixels is N, to obtain the fourth image whose quantity of row pixels is N and quantity of column pixels is M. Second, the first processing unit horizontally stitches the fourth image whose quantity of row pixels is N and quantity of column pixels is M and the second image whose quantity of row pixels is P and quantity of column pixels is Q, to obtain the second stitched image. In this case, the second stitched image is an irregular image, and a quantity (M) of pixels in at least one column of the second stitched image is different from a quantity (Q) of pixels in another column. Finally, the first processing unit performs column pixel padding on a column (that is, a column corresponding to the fourth image) whose quantity of column pixels is less than Q in the second stitched image, so that a quantity of pixels in each column of the fourth image increases from M to Q, to obtain a regular first stitched image. In this case, a quantity of padded pixels is N×(Q-M), a quantity of row pixels of the first stitched image is N+P, and a quantity of column pixels is Q. The quantities of column pixels of the third image and the second image in the obtained first stitched image are consistent, and the second image is not processed in a process of obtaining the first stitched image. Therefore, in one aspect, compared with the existing solution, complexity of processing the second image by the first processing unit is not additionally increased. In another aspect, each row of the first stitched image includes a complete row of pixels of the second image. A device that receives the first stitched image does not need to buffer pixels of the second image, and can extract a row of pixels of the second image only by performing simple segmentation on the first stitched image, so that the second image can be quickly forwarded in real time.

With reference to the first aspect, in still some other implementations of the first aspect, that the first processing unit is specifically configured to perform pixel padding on the second stitched image to obtain the first stitched image includes: The first processing unit is specifically configured to perform pixel padding from a first target position of the fourth image in the second stitched image, to obtain the first stitched image, where the first target position includes a top position, a bottom position, or a middle position.

With reference to the first aspect, in some implementations of the first aspect, the sending unit is specifically configured to send the first stitched image to a second processing unit or a transmission unit.

For example, the image processing apparatus may further include a first interface, and the sending unit sends the first stitched image to the second processing unit or the transmission unit through the first interface. For example, the first interface includes but is not limited to an MIPI, an oLDI, or a DP. For example, the second processing unit includes an FPGA unit and/or a Ser.

According to a second aspect, an image processing apparatus is provided, where the apparatus includes: an obtaining unit, configured to obtain a first stitched image; and a second processing unit, configured to perform first processing on the first stitched image, to obtain a first image and a second image, where a quantity of row pixels of the first stitched image is N+P, a quantity of column pixels is Q, the first stitched image includes the second image and a third image, and N, P, and Q are all positive integers; a quantity of row pixels of the first image is M, a quantity of column pixels is N, M>N, and M is a positive integer; a quantity of row pixels of the second image is P, a quantity of column pixels is Q, and Q>_M; the first processing includes segmenting the first stitched image to obtain the second image and the third image; and the first processing further includes rotating the third image, or the first processing further includes rotating and de-padding the third image.

For example, the second processing unit includes a field programmable gate array (FPGA, field programmable gate array) unit and/or a Ser.

In the image processing apparatus, first, the obtaining unit obtains the first stitched image whose quantity of row pixels is N+P and quantity of column pixels is Q, and the first stitched image includes the second image whose quantity of row pixels is P and quantity of column pixels is Q and the third image. Second, the second processing unit segments the first stitched image, to obtain the second image and the third image, and rotates the third image, to obtain the first image, or rotates and de-pads the third image, to obtain the first image. The image processing apparatus does not need to process the second image in a process of processing the first stitched image. In one aspect, compared with an existing solution, complexity of processing the second image by the image processing apparatus is not additionally increased. In another aspect, each row of the first stitched image includes a complete row of pixels of the second image. The image processing apparatus does not need to buffer pixels of the second image, and can extract a row of pixels of the second image only by performing simple segmentation on the first stitched image, so that the second image can be quickly forwarded in real time. In addition, because no second processing unit is disposed in an existing image processing apparatus, the existing image processing apparatus does not have a de-padding function. Therefore, an image transmitted by the existing image processing apparatus includes padded pixels. However, in this embodiment of this application, the second processing unit is disposed in the foregoing image processing apparatus, so that the second processing unit can de-pad the third image to obtain the first image. In this way, neither the obtained first image nor the second image includes padded pixels. In a subsequent process of transmitting the first image and the second image, in one aspect, no padded pixel occupies transmission bandwidth. This improves transmission efficiency of the first image and the second image. In another aspect, neither the first image nor the second image includes padded pixels, and pixel clocks (which refer to a quantity of image pixels transmitted per second) corresponding to the first image and the second image are small, so that a requirement for an interface on a device that receives the first image and the second image can be reduced.

With reference to the second aspect, in some implementations of the second aspect, the second processing unit is specifically configured to: segment the first stitched image, to obtain the second image and the third image; and rotate the third image, to obtain the first image.

For example, the segmenting the first stitched image may be horizontally segmenting the first stitched image. The horizontally segmenting may be understood as performing row pixel segmentation on an image to obtain a plurality of images.

For example, the rotating the third image may be rotating the third image by (-90°-180°×n), to obtain the first image, where n is an integer.

For example, the second processing unit horizontally segments the first stitched image whose quantity of row pixels is N+P and quantity of column pixels is Q, to obtain the second image whose quantity of row pixels is P and quantity of column pixels is Q and the third image whose quantity of row pixels is N and quantity of column pixels is Q. In addition, the second processing unit rotates, by (-90°-180°×n), the third image whose quantity of row pixels is N and quantity of column pixels is Q, to obtain the first image whose quantity of row pixels is Q and quantity of column pixels is N.

With reference to the second aspect, in some other implementations of the second aspect, the second processing unit is specifically configured to: segment the first stitched image, to obtain the second image and the third image; rotate the third image, to obtain a fifth image; and de-pad the fifth image, to obtain the first image.

For example, the segmenting the first stitched image may be horizontally segmenting the first stitched image.

For example, the rotating the third image may be rotating the third image by (-90°-180°×n), to obtain the fifth image, where n is an integer.

For example, the de-padding the fifth image may be performing row de-padding on the fifth image, thereby reducing a quantity of row pixels of the fifth image.

For example, first, the second processing unit horizontally segments the first stitched image whose quantity of row pixels is N+P and quantity of column pixels is Q, to obtain the second image whose quantity of row pixels is P and quantity of column pixels is Q and the third image whose quantity of row pixels is N and quantity of column pixels is Q. Second, the second processing unit rotates, by (-90°-180°×n), the third image whose quantity of row pixels is N and quantity of column pixels is Q, to obtain the fifth image whose quantity of row pixels is Q and quantity of column pixels is N. Finally, the second processing unit performs row de-padding on the fifth image whose quantity of row pixels is Q and quantity of column pixels is N, so that a quantity of pixels in each row of the fifth image is reduced from Q to M, and a quantity of pixels in each column remains unchanged and is still N, so as to obtain the first image. In this case, a quantity of de-padded pixels is (Q-M)×N, the quantity of row pixels of the first image is M, and the quantity of column pixels is N.

With reference to the second aspect, in some other implementations of the second aspect, that the second processing unit is specifically configured to de-pad the fifth image to obtain the first image includes: The second processing unit is specifically configured to perform de-padding from a second target position of the fifth image, to obtain the first image, where the second target position includes at least one of the following: a left position, a right position, or a middle position.

With reference to the second aspect, in still some other implementations of the second aspect, the second processing unit is further specifically configured to: segment the first stitched image, to obtain the second image and the third image; de-pad the third image, to obtain a fourth image; and rotate the fourth image, to obtain the first image.

For example, the segmenting the first stitched image may be horizontally segmenting the first stitched image.

For example, the de-padding the third image may be performing column de-padding on the third image, thereby reducing a quantity of column pixels of the third image.

For example, the rotating the fourth image may be rotating the fourth image by (-90°-180°×n), to obtain the first image, where n is an integer.

For example, first, the second processing unit horizontally segments the first stitched image whose quantity of row pixels is N+P and quantity of column pixels is Q, to obtain the second image whose quantity of row pixels is P and quantity of column pixels is Q and the third image whose quantity of row pixels is N and quantity of column pixels is Q. Second, the second processing unit performs column de-padding on the third image whose quantity of row pixels is N and quantity of column pixels is Q, so that a quantity of pixels in each column of the third image is reduced from Q to M, and a quantity of pixels in each row remains unchanged and is still N, so as to obtain the fourth image. In this case, a quantity of de-padded pixels is N×(Q-M), a quantity of row pixels of the fourth image is N, and a quantity of column pixels is M. Finally, the second processing unit rotates, by (-90°-180°×n), the fourth image whose quantity of row pixels is N and quantity of column pixels is M, to obtain the first image whose quantity of row pixels is M and quantity of column pixels is N.

With reference to the second aspect, in still some other implementations of the second aspect, that the second processing unit is further specifically configured to de-pad the third image to obtain the fourth image includes: The second processing unit is specifically configured to perform de-padding from a first target position of the third image, to obtain the fourth image, where the first target position includes at least one of the following: a top position, a bottom position, or a middle position.

With reference to the second aspect, in some implementations of the second aspect, the apparatus further includes a first sending unit, a second sending unit, a first port, and a second port, where the first sending unit is configured to send the second image through the first port, and the second sending unit is configured to send the first image through the second port.

According to a third aspect, an image processing apparatus is provided, where the apparatus includes: an obtaining unit, configured to obtain a first stitched image; and a second processing unit, configured to perform second processing on the first stitched image, to obtain a first image and a second image, where a quantity of row pixels of the first stitched image is N+P, a quantity of column pixels is Q, the first stitched image includes the second image and a third image, and N, P, and Q are all positive integers; a quantity of row pixels of the first image is M, a quantity of column pixels is N, M>N, and M is a positive integer; a quantity of row pixels of the second image is P, a quantity of column pixels is Q, and Q>_M; the second processing includes de-padding the first stitched image to obtain a second stitched image; and the second processing further includes rotating and segmenting the second stitched image to obtain the first image and the second image.

For example, the second processing unit includes an FPGA unit and/or a Ser.

In the image processing apparatus, first, the obtaining unit obtains the first stitched image whose quantity of row pixels is N+P and quantity of column pixels is Q, and the first stitched image includes the second image whose quantity of row pixels is P and quantity of column pixels is Q and the third image. Second, the second processing unit de-pads the first stitched image, to obtain the second stitched image, and rotates and segments the second stitched image, to obtain the first image and the second image. The image processing apparatus does not need to process the second image in a process of processing the first stitched image. In one aspect, compared with an existing solution, complexity of processing the second image by the image processing apparatus is not additionally increased. In another aspect, each row of the first stitched image includes a complete row of pixels of the second image. The image processing apparatus does not need to buffer pixels of the second image, and can extract a row of pixels of the second image only by performing simple segmentation on the first stitched image, so that the second image can be quickly forwarded in real time. In addition, because no second processing unit is disposed in an existing image processing apparatus, the existing image processing apparatus does not have a de-padding function. Therefore, an image transmitted by the existing image processing apparatus includes padded pixels. However, in this embodiment of this application, the second processing unit is disposed in the foregoing image processing apparatus, so that the second processing unit can de-pad the first stitched image to obtain the second stitched image. In this way, neither the finally obtained first image nor the second image includes padded pixels. In a subsequent process of transmitting the first image and the second image, in one aspect, no padded pixel occupies transmission bandwidth. This improves transmission efficiency of the first image and the second image. In another aspect, neither the first image nor the second image includes padded pixels, and pixel clocks corresponding to the first image and the second image are small, so that a requirement for an interface on a device that receives the first image and the second image can be reduced.

With reference to the third aspect, in some implementations of the third aspect, the second processing unit is specifically configured to: de-pad the first stitched image, to obtain the second stitched image; segment the second stitched image, to obtain the second image and a fourth image; and rotate the fourth image, to obtain the first image.

For example, the de-padding the first stitched image may be performing column de-padding on the third image in the first stitched image, thereby reducing a quantity of column pixels of the third image, so that the first stitched image is converted into an irregular image (namely, the second stitched image). The horizontally segmenting may be understood as performing row pixel segmentation on an image to obtain a plurality of images.

For example, the segmenting the second stitched image may be horizontally segmenting the second stitched image. The horizontally segmenting may be understood as performing row pixel segmentation on an image to obtain a plurality of images.

For example, the rotating the fourth image may be rotating the fourth image by (-90°-180°×n), to obtain the first image, where n is an integer.

For example, first, the second processing unit performs column de-padding on the third image in the first stitched image whose quantity of row pixels is N+P and quantity of column pixels is Q, so that a quantity of pixels in each column of the third image is reduced from Q to M, and a quantity of pixels in each row remains unchanged and is still N, so as to obtain the second stitched image. In this case, the second stitched image is an irregular image, a quantity of pixels (M) in at least one column of the second stitched image is different from a quantity of pixels (Q) in another row, and the second stitched image includes the second image whose quantity of row pixels is P and quantity of column pixels is Q and the fourth image whose quantity of row pixels is N and quantity of column pixels is M. Second, the second processing unit horizontally segments the second stitched image, to obtain the second image whose quantity of row pixels is P and quantity of column pixels is Q and the fourth image whose quantity of row pixels is N and quantity of column pixels is M. Finally, the second processing unit rotates the fourth image by (-90°-180°×n), to obtain the first image whose quantity of row pixels is M and quantity of column pixels is N.

With reference to the third aspect, in some implementations of the third aspect, that the second processing unit is specifically configured to de-pad the first stitched image to obtain the second stitched image includes: The second processing unit is specifically configured to perform de-padding from a first target position of the third image in the first stitched image, to obtain the second stitched image, where the first target position includes at least one of the following: a top position, a bottom position, or a middle position.

With reference to the third aspect, in some implementations of the third aspect, the apparatus further includes a first sending unit, a second sending unit, a first port, and a second port, where the first sending unit is configured to send the second image through the first port, and the second sending unit is configured to send the first image through the second port.

According to a fourth aspect, an image processing apparatus is provided, where the apparatus includes: an obtaining unit, configured to obtain a third image; and a third processing unit, configured to perform second preprocessing on the third image, to obtain a first image, where the second preprocessing includes rotating the third image, or the second preprocessing includes rotating and de-padding the third image.

For example, the third processing unit includes an FPGA unit and/or a Des.

In the foregoing image processing apparatus, the obtaining unit obtains the third image, and the third processing unit rotates the third image, to obtain the first image, or rotates and de-pads the third image, to obtain the first image. Because no third processing unit is disposed in an existing image processing apparatus, the existing image processing apparatus does not have a de-padding function. Therefore, an image transmitted by the existing image processing apparatus includes padded pixels. However, in this embodiment of this application, the third processing unit is disposed in the foregoing image processing apparatus, so that the third processing unit can de-pad the third image to obtain the first image. In this way, the obtained first image does not include padded pixels. In a subsequent process of transmitting the first image, in one aspect, no padded pixel occupies transmission bandwidth. This improves transmission efficiency of the first image. In another aspect, the first image does not include padded pixels, and a pixel clock corresponding to the first image is small, so that a requirement for an interface on a device that receives the first image can be reduced.

With reference to the fourth aspect, in some implementations of the fourth aspect, the third processing unit is specifically configured to rotate the third image, to obtain the first image.

For example, the rotating the third image may be rotating the third image by (-90°-180°×n), to obtain the first image, where n is an integer.

For example, the third processing unit rotates, by (-90°-180°×n), the third image whose quantity of row pixels is N and quantity of column pixels is M, to obtain the first image whose quantity of row pixels is M and quantity of column pixels is N.

With reference to the fourth aspect, in some other implementations of the fourth aspect, the third processing unit is specifically configured to: rotate the third image, to obtain a fifth image; and de-pad the fifth image, to obtain the first image.

For example, the rotating the third image may be rotating the third image by (-90°-180°×n), to obtain the fifth image, where n is an integer.

For example, the de-padding the fifth image may be performing row de-padding on the fifth image, thereby reducing a quantity of row pixels of the fifth image.

For example, the third processing unit rotates, by (-90°-180°×n), the third image whose quantity of row pixels is N and quantity of column pixels is Q, to obtain the fifth image whose quantity of row pixels is Q and quantity of column pixels is N. In addition, the third processing unit performs row de-padding on the fifth image whose quantity of row pixels is Q and quantity of column pixels is N, so that a quantity of pixels in each row of the fifth image is reduced from Q to M, and a quantity of pixels in each column remains unchanged and is still N, so as to obtain the first image. In this case, a quantity of de-padded pixels is (Q-M)×N, the quantity of row pixels of the first image is M, and the quantity of column pixels is N. With reference to the fourth aspect, in some other implementations of the fourth aspect, that the third processing unit is specifically configured to de-pad the fifth image to obtain the first image includes: The third processing unit is specifically configured to perform de-padding from a second target position of the fifth image, to obtain the first image, where the second target position includes at least one of the following: a left position, a right position, or a middle position.

With reference to the fourth aspect, in still some other implementations of the fourth aspect, the third processing unit is specifically configured to: de-pad the third image, to obtain a fourth image; and rotate the fourth image to obtain the first image.

For example, the de-padding the third image may be performing column de-padding on the third image, thereby reducing a quantity of column pixels of the third image.

For example, the rotating the fourth image may be rotating the fourth image by (-90°-180°×n), to obtain the first image, where n is an integer.

For example, the third processing unit performs column de-padding on the third image whose quantity of row pixels is N and quantity of column pixels is Q, so that a quantity of pixels in each column of the third image is reduced from Q to M, and a quantity of pixels in each row remains unchanged and is still N, so as to obtain the fourth image. In this case, a quantity of de-padded pixels is N×(Q-M), a quantity of row pixels of the fourth image is N, and a quantity of column pixels is M. In addition, the third processing unit rotates, by (-90°-180°×n), the fourth image whose quantity of row pixels is N and quantity of column pixels is M, to obtain the first image whose quantity of row pixels is M and quantity of column pixels is N.

With reference to the fourth aspect, in still some other implementations of the fourth aspect, that the third processing unit is specifically configured to de-pad the third image to obtain the fourth image includes: The third processing unit is specifically configured to perform de-padding from a first target position of the third image, to obtain the fourth image, where the first target position includes at least one of the following: a top position, a bottom position, or a middle position.

With reference to the fourth aspect, in some implementations of the fourth aspect, the apparatus further includes a sending unit, configured to send the first image.

For example, the image processing apparatus may further include a second interface, and the sending unit sends the first image through the second interface. For example, the second interface includes but is not limited to an MIPI, an oLDI, or a DP.

According to a fifth aspect, an image processing apparatus is provided, where the apparatus includes: an obtaining unit, configured to obtain a fifth image; and a third processing unit, configured to de-pad the fifth image, to obtain a first image.

For example, the third processing unit includes an FPGA unit and/or a Des.

In the foregoing image processing apparatus, the obtaining unit obtains the fifth image, and the third processing unit de-pads the fifth image, to obtain the first image. Because no third processing unit is disposed in an existing image processing apparatus, the existing image processing apparatus does not have a de-padding function. Therefore, an image transmitted by the existing image processing apparatus includes padded pixels. However, in this embodiment of this application, the third processing unit is disposed in the image processing apparatus, so that the third processing unit can de-pad the fifth image to obtain the first image. In this way, the obtained first image does not include padded pixels. In a subsequent process of transmitting the first image, in one aspect, no padded pixel occupies transmission bandwidth. This improves transmission efficiency of the first image. In another aspect, the first image does not include padded pixels, and a pixel clock corresponding to the first image is small, so that a requirement for an interface on a device that receives the first image can be reduced.

With reference to the fifth aspect, in some implementations of the fifth aspect, that the third processing unit is configured to de-pad the fifth image to obtain the first image includes: The third processing unit is specifically configured to perform de-padding from a second target position of the fifth image, to obtain the first image, where the second target position includes at least one of the following: a left position, a right position, or a middle position.

With reference to the fifth aspect, in some implementations of the fifth aspect, the apparatus further includes: a sending unit, configured to send the first image.

According to a sixth aspect, an image processing apparatus is provided, where the apparatus includes: an obtaining unit, configured to obtain a fourth image; and a third processing unit, configured to rotate the fourth image, to obtain a first image.

For example, the third processing unit includes an FPGA unit and/or a Des.

For example, the rotating the fourth image may be rotating the fourth image by (-90°-180°×n), to obtain the first image, where n is an integer.

For example, the third processing unit rotates, by (-90°-180°×n), the fourth image whose quantity of row pixels is N and quantity of column pixels is M, to obtain the first image whose quantity of row pixels is M and quantity of column pixels is N.

With reference to the sixth aspect, in some implementations of the sixth aspect, the apparatus further includes: a sending unit, configured to send the first image.

For example, the image processing apparatus may further include a second interface, and the sending unit sends the first image through the second interface. For example, the second interface includes but is not limited to an MIPI, an oLDI, or a DP.

According to a seventh aspect, an apparatus is provided, where the apparatus includes: a first processing unit, configured to obtain a first stitched image based on a first image and a second image; a sending unit, configured to send the first stitched image; an obtaining unit, configured to obtain the first stitched image; and a second processing unit, configured to perform first processing on the first stitched image, to obtain the first image and the second image, where a quantity of row pixels of the first image is M, a quantity of column pixels is N, M>N, and both M and N are positive integers; a quantity of row pixels of the second image is P, a quantity of column pixels is Q, Q>_M, and both P and Q are positive integers; a quantity of row pixels of the first stitched image is N+P, a quantity of column pixels is Q, the first stitched image includes the second image and a third image, the third image is an image obtained through first preprocessing of the first image, and the first preprocessing includes rotating the first image, or the first preprocessing includes rotating and padding the first image; the first processing includes segmenting the first stitched image to obtain the second image and the third image; and the first processing further includes rotating the third image, or the first processing further includes rotating and de-padding the third image.

For example, the first processing unit includes a system on a chip SoC.

For example, the second processing unit includes an FPGA unit and/or a Ser.

For example, the apparatus is a domain controller, for example, a cockpit domain controller CDC or an MDC.

In the foregoing image processing apparatus, the first processing unit first rotates the first image whose quantity of row pixels is M and quantity of column pixels is N, or rotates and pads the first image whose quantity of row pixels is M and quantity of column pixels is N, to obtain the third image. Then, the first processing unit obtains the first stitched image whose quantity of row pixels is N+P and quantity of column pixels is Q based on the third image and the second image whose quantity of row pixels is P and quantity of column pixels is Q. Therefore, a quantity of padded pixels in the first stitched image is N×(Q-M). However, according to an existing solution, the first image and the second image are stitched, and a quantity of padded pixels included in an obtained stitched image is M×(Q-N). Because Q>_M>N, the quantity of padded pixels included in the first stitched image obtained by the first processing unit is less than the quantity of padded pixels included in the stitched image obtained in the existing solution. Therefore, when the sending unit transmits the first stitched image obtained by the first processing unit, because the padded pixels occupy a small amount of transmission bandwidth, transmission efficiency of the first stitched image is improved. In addition, the second processing unit segments the first stitched image, to obtain the second image and the third image, and rotates the third image, to obtain the first image, or rotates and de-pads the third image, to obtain the first image. The image processing apparatus does not need to process the second image in a process of processing the first stitched image. In one aspect, compared with the existing solution, complexity of processing the second image by the image processing apparatus is not additionally increased. In another aspect, each row of the first stitched image includes a complete row of pixels of the second image. The image processing apparatus does not need to buffer pixels of the second image, and can extract a row of pixels of the second image only by performing simple segmentation on the first stitched image, so that the second image can be quickly forwarded in real time. In addition, because no second processing unit is disposed in an existing image processing apparatus, the existing image processing apparatus does not have a de-padding function. Therefore, an image transmitted by the existing image processing apparatus includes padded pixels. However, in this embodiment of this application, the second processing unit is disposed in the foregoing image processing apparatus, so that the second processing unit can de-pad the third image to obtain the first image. In this way, neither the obtained first image nor the second image includes padded pixels. In a subsequent process of transmitting the first image and the second image, in one aspect, no padded pixel occupies transmission bandwidth. This improves transmission efficiency of the first image and the second image. In another aspect, neither the first image nor the second image includes padded pixels, and pixel clocks (which refer to a quantity of image pixels transmitted per second) corresponding to the first image and the second image are small, so that a requirement for an interface on a device that receives the first image and the second image can be reduced.

With reference to the seventh aspect, in some implementations of the seventh aspect, that the first processing unit is configured to obtain the first stitched image based on the first image and the second image includes: The first processing unit is specifically configured to: rotate the first image, to obtain the third image; and stitch the third image and the second image, to obtain the first stitched image.

With reference to the seventh aspect, in some implementations of the seventh aspect, the first processing unit is further specifically configured to rotate the first image by (90°+180°×n), to obtain the third image, where n is an integer.

With reference to the seventh aspect, in some other implementations of the seventh aspect, the first processing unit is specifically configured to: rotate the first image, to obtain a fourth image; perform pixel padding on the fourth image, to obtain the third image; and stitch the third image and the second image, to obtain the first stitched image.

With reference to the seventh aspect, in some other implementations of the seventh aspect, that the first processing unit is specifically configured to perform pixel padding on the fourth image to obtain the third image includes: The first processing unit is specifically configured to perform pixel padding from a first target position of the fourth image, to obtain the third image, where the first target position includes at least one of the following: a top position, a bottom position, or a middle position.

With reference to the seventh aspect, in still some other implementations of the seventh aspect, the first processing unit is specifically configured to: perform pixel padding on the first image, to obtain a fifth image; rotate the fifth image, to obtain the third image; and stitch the third image and the second image, to obtain the first stitched image.

With reference to the seventh aspect, in still some other implementations of the seventh aspect, that the first processing unit is specifically configured to perform pixel padding on the first image to obtain the fifth image includes: The first processing unit is specifically configured to perform pixel padding from a second target position of the first image, to obtain the fifth image, where the second target position includes at least one of the following: a left position, a right position, or a middle position.

With reference to the seventh aspect, in still some other implementations of the seventh aspect, the first processing unit is further specifically configured to rotate the first image by (90°+180°×n), to obtain the fifth image, where n is an integer.

With reference to the seventh aspect, in still some other implementations of the seventh aspect, the first processing unit is specifically configured to: rotate the first image, to obtain a fourth image; stitch the fourth image and the second image, to obtain a second stitched image; and perform pixel padding on the second stitched image, to obtain the first stitched image.

With reference to the seventh aspect, in still some other implementations of the seventh aspect, that the first processing unit is specifically configured to perform pixel padding on the second stitched image to obtain the first stitched image includes: The first processing unit is specifically configured to perform pixel padding from a first target position of the fourth image in the second stitched image, to obtain the first stitched image, where the first target position includes a top position, a bottom position, or a middle position.

With reference to the seventh aspect, in some implementations of the seventh aspect, the first processing unit is further specifically configured to rotate the first image by (90°+180°×n), to obtain the fourth image, where n is an integer.

With reference to the seventh aspect, in some implementations of the seventh aspect, the sending unit is specifically configured to send the first stitched image to a second processing unit or a transmission unit.

For example, the image processing apparatus may further include a first interface, and the sending unit sends the first stitched image to the second processing unit or the transmission unit through the first interface. For example, the first interface includes but is not limited to an MIPI, an oLDI, or a DP.

With reference to the seventh aspect, in some implementations of the seventh aspect, the second processing unit is specifically configured to: segment the first stitched image, to obtain the second image and the third image; and rotate the third image, to obtain the first image.

With reference to the seventh aspect, in some implementations of the seventh aspect, the second processing unit is further specifically configured to rotate the third image by (-90°-180°×n), to obtain the first image, where n is an integer.

With reference to the seventh aspect, in some other implementations of the seventh aspect, the second processing unit is specifically configured to: segment the first stitched image, to obtain the second image and the third image; rotate the third image, to obtain a fifth image; and de-pad the fifth image, to obtain the first image.

With reference to the seventh aspect, in some other implementations of the seventh aspect, that the second processing unit is specifically configured to de-pad the fifth image to obtain the first image includes: The second processing unit is specifically configured to perform de-padding from a second target position of the fifth image, to obtain the first image, where the second target position includes at least one of the following: a left position, a right position, or a middle position.

With reference to the seventh aspect, in some other implementations of the seventh aspect, the second processing unit is further specifically configured to rotate the third image by (-90°-180°×n), to obtain the fifth image, where n is an integer.

With reference to the seventh aspect, in still some other implementations of the seventh aspect, the second processing unit is further specifically configured to: segment the first stitched image, to obtain the second image and the third image; de-pad the third image, to obtain a fourth image; and rotate the fourth image, to obtain the first image.

With reference to the seventh aspect, in still some other implementations of the seventh aspect, that the second processing unit is further specifically configured to de-pad the third image to obtain the fourth image includes: The second processing unit is specifically configured to perform de-padding from a first target position of the third image, to obtain the fourth image, where the first target position includes at least one of the following: a top position, a bottom position, or a middle position.

With reference to the seventh aspect, in still some other implementations of the seventh aspect, the second processing unit is further specifically configured to rotate the fourth image by (-90°-180°×n), to obtain the first image, where n is an integer.

With reference to the seventh aspect, in some implementations of the seventh aspect, the apparatus further includes a first sending unit, a second sending unit, a first port, and a second port, where the first sending unit is configured to send the second image through the first port, and the second sending unit is configured to send the first image through the second port.

According to an eighth aspect, an apparatus is provided, where the apparatus includes: a first processing unit, configured to obtain a first stitched image based on a first image and a second image; a sending unit, configured to send the first stitched image; an obtaining unit, configured to obtain the first stitched image; and a second processing unit, configured to perform second processing on the first stitched image, to obtain the first image and the second image, where a quantity of row pixels of the first image is M, a quantity of column pixels is N, M>N, and M and N are both positive integers; a quantity of row pixels of the second image is P, a quantity of column pixels is Q, Q>_M, and both P and Q are positive integers; a quantity of row pixels of the first stitched image is N+P, a quantity of column pixels is Q, the first stitched image includes the second image and a third image, the third image is an image obtained through first preprocessing of the first image, and the first preprocessing includes rotating the first image, or the first preprocessing includes rotating and padding the first image; the second processing includes de-padding the first stitched image to obtain a second stitched image; and the second processing further includes rotating and segmenting the second stitched image to obtain the first image and the second image.

For example, the first processing unit includes an SoC.

For example, the second processing unit includes an FPGA unit and/or a Ser.

For example, the apparatus is a domain controller, for example, a CDC or an MDC.

In the foregoing image processing apparatus, the first processing unit first rotates the first image whose quantity of row pixels is M and quantity of column pixels is N, or rotates and pads the first image whose quantity of row pixels is M and quantity of column pixels is N, to obtain the third image. Then, the first processing unit obtains the first stitched image whose quantity of row pixels is N+P and quantity of column pixels is Q based on the third image and the second image whose quantity of row pixels is P and quantity of column pixels is Q. Therefore, a quantity of padded pixels in the first stitched image is N×(Q-M). However, according to an existing solution, the first image and the second image are stitched, and a quantity of padded pixels included in an obtained stitched image is M×(Q-N). Because Q>_M>N, the quantity of padded pixels included in the first stitched image obtained by the first processing unit is less than the quantity of padded pixels included in the stitched image obtained in the existing solution. Therefore, when the sending unit transmits the first stitched image obtained by the first processing unit, because the padded pixels occupy a small amount of transmission bandwidth, transmission efficiency of the first stitched image is improved. In addition, the second processing unit de-pads the first stitched image, to obtain the second stitched image, and rotates and segments the second stitched image, to obtain the first image and the second image. The image processing apparatus does not need to process the second image in a process of processing the first stitched image. In this way, in one aspect, compared with the existing solution, complexity of processing the second image by the image processing apparatus is not additionally increased. In another aspect, each row of the first stitched image includes a complete row of pixels of the second image. The image processing apparatus does not need to buffer pixels of the second image, and can extract a row of pixels of the second image only by performing simple segmentation on the first stitched image, so that the second image can be quickly forwarded in real time. In addition, because no second processing unit is disposed in an existing image processing apparatus, the existing image processing apparatus does not have a de-padding function. Therefore, an image transmitted by the existing image processing apparatus includes padded pixels. However, in this embodiment of this application, the second processing unit is disposed in the foregoing image processing apparatus, so that the second processing unit can de-pad the first stitched image to obtain the second stitched image. In this way, neither the finally obtained first image nor the second image includes padded pixels. In a subsequent process of transmitting the first image and the second image, in one aspect, no padded pixel occupies transmission bandwidth. This improves transmission efficiency of the first image and the second image. In another aspect, neither the first image nor the second image includes padded pixels, and pixel clocks corresponding to the first image and the second image are small, so that a requirement for an interface on a device that receives the first image and the second image can be reduced.

With reference to the eighth aspect, in some implementations of the eighth aspect, that the first processing unit is configured to obtain the first stitched image based on the first image and the second image includes: The first processing unit is specifically configured to: rotate the first image, to obtain the third image; and stitch the third image and the second image, to obtain the first stitched image.

With reference to the eighth aspect, in some implementations of the eighth aspect, the first processing unit is further specifically configured to rotate the first image by (90°+180°×n), to obtain the third image, where n is an integer.

With reference to the eighth aspect, in some other implementations of the eighth aspect, the first processing unit is specifically configured to: rotate the first image, to obtain a fourth image; perform pixel padding on the fourth image, to obtain the third image; and stitch the third image and the second image, to obtain the first stitched image.

With reference to the eighth aspect, in some other implementations of the eighth aspect, that the first processing unit is specifically configured to perform pixel padding on the fourth image to obtain the third image includes: The first processing unit is specifically configured to perform pixel padding from a first target position of the fourth image, to obtain the third image, where the first target position includes at least one of the following: a top position, a bottom position, or a middle position.

With reference to the eighth aspect, in still some other implementations of the eighth aspect, the first processing unit is specifically configured to: perform pixel padding on the first image, to obtain a fifth image; rotate the fifth image, to obtain the third image; and stitch the third image and the second image, to obtain the first stitched image.

With reference to the eighth aspect, in still some other implementations of the eighth aspect, that the first processing unit is specifically configured to perform pixel padding on the first image to obtain the fifth image includes: The first processing unit is specifically configured to perform pixel padding from a second target position of the first image, to obtain the fifth image, where the second target position includes at least one of the following: a left position, a right position, or a middle position.

With reference to the eighth aspect, in still some other implementations of the eighth aspect, the first processing unit is further specifically configured to rotate the first image by (90°+180°×n), to obtain the fifth image, where n is an integer.

With reference to the eighth aspect, in still some other implementations of the eighth aspect, the first processing unit is specifically configured to: rotate the first image, to obtain a fourth image; stitch the fourth image and the second image, to obtain a second stitched image; and perform pixel padding on the second stitched image to obtain the first stitched image.

With reference to the eighth aspect, in still some other implementations of the eighth aspect, that the first processing unit is specifically configured to perform pixel padding on the second stitched image to obtain the first stitched image includes: The first processing unit is specifically configured to perform pixel padding from a first target position of the fourth image in the second stitched image, to obtain the first stitched image, where the first target position includes a top position, a bottom position, or a middle position.

With reference to the eighth aspect, in some implementations of the eighth aspect, the first processing unit is further specifically configured to rotate the first image by (90°+180°×n), to obtain the fourth image, where n is an integer.

With reference to the eighth aspect, in some implementations of the eighth aspect, the sending unit is specifically configured to send the first stitched image to a second processing unit or a transmission unit.

For example, the image processing apparatus may further include a first interface, and the sending unit sends the first stitched image to the second processing unit or the transmission unit through the first interface. For example, the first interface includes but is not limited to an MIPI, an oLDI, or a DP.

With reference to the eighth aspect, in some implementations of the eighth aspect, the second processing unit is specifically configured to: de-pad the first stitched image, to obtain the second stitched image; segment the second stitched image, to obtain the second image and a fourth image; and rotate the fourth image, to obtain the first image.

With reference to the eighth aspect, in some implementations of the eighth aspect, that the second processing unit is specifically configured to de-pad the first stitched image to obtain the second stitched image includes: The second processing unit is specifically configured to perform de-padding from a first target position of the third image in the first stitched image, to obtain the second stitched image, where the first target position includes at least one of the following: a top position, a bottom position, or a middle position.

With reference to the eighth aspect, in some implementations of the eighth aspect, the second processing unit is further specifically configured to rotate the fourth image by (-90°-180°×n), to obtain the first image, where n is an integer.

With reference to the eighth aspect, in some implementations of the eighth aspect, the apparatus further includes a first sending unit, a second sending unit, a first port, and a second port, where the first sending unit is configured to send the second image through the first port, and the second sending unit is configured to send the first image through the second port.

According to a ninth aspect, an image processing method is provided, where the method includes: obtaining a first stitched image based on a first image and a second image; and sending the first stitched image, where a quantity of row pixels of the first image is M, a quantity of column pixels is N, M>N, and both M and N are positive integers; a quantity of pixels of the second image is P, a quantity of column pixels is Q, Q≥M, and both P and Q are positive integers; and a quantity of pixels of the first stitched image is N+P, a quantity of column pixels is Q, the first stitched image includes the second image and a third image, the third image is an image obtained through first preprocessing of the first image , and the first preprocessing includes rotating the first image, or the first preprocessing includes rotating and padding the first image.

For example, the method may be applied to an SoC.

In the foregoing technical solution, first, the first image whose quantity of row pixels is M and quantity of column pixels is N is rotated, or the first image whose quantity of row pixels is M and quantity of column pixels is N is rotated and padded, to obtain the third image. Then, the first stitched image whose quantity of row pixels is N+P and quantity of column pixels is Q is obtained based on the third image and the second image whose quantity of row pixels is P and quantity of column pixels is Q. Therefore, a quantity of padded pixels in the first stitched image is N×(Q-M). However, according to an existing solution, the first image and the second image are stitched, and a quantity of padded pixels included in an obtained stitched image is M×(Q-N). Because Q>_M>N, the quantity of padded pixels included in the obtained first stitched image is less than the quantity of padded pixels included in the stitched image obtained in the existing solution. Therefore, in a process of transmitting the first stitched image, because the padded pixels occupy a small amount of transmission bandwidth, transmission efficiency of the first stitched image is improved.

With reference to the ninth aspect, in some implementations of the ninth aspect, the obtaining a first stitched image based on a first image and a second image includes: rotating the first image, to obtain the third image; and stitching the third image and the second image, to obtain the first stitched image.

With reference to the ninth aspect, in some implementations of the ninth aspect, the rotating the first image, to obtain the third image includes: rotating the first image by (90°+180°×n), to obtain the third image, where n is an integer.

With reference to the ninth aspect, in some other implementations of the ninth aspect, the obtaining a first stitched image based on a first image and a second image includes: rotating the first image, to obtain a fourth image; performing pixel padding on the fourth image, to obtain the third image; and stitching the third image and the second image, to obtain the first stitched image.

With reference to the ninth aspect, in some other implementations of the ninth aspect, the performing pixel padding on the fourth image, to obtain the third image includes: performing pixel padding from a first target position of the fourth image, to obtain the third image, where the first target position includes at least one of the following: a top position, a bottom position, or a middle position.

With reference to the ninth aspect, in still some other implementations of the ninth aspect, the obtaining a first stitched image based on a first image and a second image includes: performing pixel padding on the first image, to obtain a fifth image; rotating the fifth image, to obtain the third image; and stitching the third image and the second image, to obtain the first stitched image.

With reference to the ninth aspect, in still some other implementations of the ninth aspect, the performing pixel padding on the first image, to obtain a fifth image includes: performing pixel padding from a second target position of the first image, to obtain the fifth image, where the second target position includes at least one of the following: a left position, a right position, or a middle position.

With reference to the ninth aspect, in still some other implementations of the ninth aspect, the rotating the fifth image, to obtain the third image includes: rotating the fifth image by (90°+180°×n), to obtain the third image, where n is an integer.

With reference to the ninth aspect, in still some other implementations of the ninth aspect, the obtaining a first stitched image based on a first image and a second image includes: rotating the first image, to obtain a fourth image; stitching the fourth image and the second image, to obtain a second stitched image; and performing pixel padding on the second stitched image, to obtain the first stitched image.

With reference to the ninth aspect, in still some other implementations of the ninth aspect, the performing pixel padding on the second stitched image, to obtain the first stitched image includes: performing pixel padding from a first target position of the fourth image in the second stitched image, to obtain the first stitched image, where the first target position includes a top position, a bottom position, or a middle position.

With reference to the ninth aspect, in some implementations of the ninth aspect, the rotating the first image, to obtain a fourth image includes: rotating the first image by (90°+180°×n), to obtain the fourth image, where n is an integer.

According to a tenth aspect, an image processing method is provided, where the method includes: obtaining a first stitched image; and performing first processing on the first stitched image, to obtain a first image and a second image, where a quantity of row pixels of the first stitched image is N+P, a quantity of column pixels is Q, the first stitched image includes the second image and a third image, and N, P, and Q are all positive integers; a quantity of row pixels of the first image is M, a quantity of column pixels is N, M>N, and M is a positive integer; a quantity of row pixels of the second image is P, a quantity of column pixels is Q, and Q>_M; the first processing includes segmenting the first stitched image to obtain the second image and the third image; and the first processing further includes rotating the third image, or the first processing further includes rotating and de-padding the third image.

For example, the method may be applied to an FPGA unit and/or a Ser.

In the foregoing technical solution, the first stitched image whose quantity of row pixels is N+P and quantity of column pixels is Q is obtained, and the first stitched image includes the second image whose quantity of row pixels is P and quantity of column pixels is Q and the third image. Second, the first stitched image is segmented to obtain the second image and the third image, and the third image is rotated to obtain the first image, or the third image is rotated and de-padded to obtain the first image. The second image does not need to be processed in a process of processing the first stitched image. In this way, in one aspect, compared with an existing solution, complexity of processing the second image is not additionally increased. In another aspect, each row of the first stitched image includes a complete row of pixels of the second image. Pixels of the second image do not need to be buffered, and a row of pixels of the second image can be extracted only by performing simple segmentation on the first stitched image, so that the second image can be quickly forwarded in real time. In addition, neither the first image nor the second image includes padded pixels. Therefore, in a subsequent process of transmitting the first image and the second image, in one aspect, no padded pixel occupies transmission bandwidth. This improves transmission efficiency of the first image and the second image. In another aspect, neither the first image nor the second image includes padded pixels, and pixel clocks (which refer to a quantity of image pixels transmitted per second) corresponding to the first image and the second image are small, so that a requirement for an interface on a device that receives the first image and the second image can be reduced.

With reference to the tenth aspect, in some implementations of the tenth aspect, the performing first processing on the first stitched image, to obtain a first image and a second image includes: segmenting the first stitched image, to obtain the second image and the third image; and rotating the third image, to obtain the first image.

With reference to the tenth aspect, in some implementations of the tenth aspect, the rotating the third image, to obtain the first image includes: rotating the third image by (-90°-180°×n), to obtain the first image, where n is an integer.

With reference to the tenth aspect, in some other implementations of the tenth aspect, the performing first processing on the first stitched image, to obtain a first image and a second image includes: segmenting the first stitched image, to obtain the second image and the third image; rotating the third image, to obtain a fifth image; and de-padding the fifth image, to obtain the first image.

With reference to the tenth aspect, in some other implementations of the tenth aspect, the de-padding the fifth image, to obtain the first image includes: performing de-padding from a second target position of the fifth image, to obtain the first image, where the second target position includes at least one of the following: a left position, a right position, or a middle position.

With reference to the tenth aspect, in some other implementations of the tenth aspect, the rotating the third image, to obtain a fifth image includes: rotating the third image by (-90°-180°×n), to obtain the fifth image, where n is an integer.

With reference to the tenth aspect, in still some other implementations of the tenth aspect, the performing first processing on the first stitched image, to obtain a first image and a second image includes: segmenting the first stitched image, to obtain the second image and the third image; de-padding the third image, to obtain a fourth image; and rotating the fourth image, to obtain the first image.

With reference to the tenth aspect, in still some other implementations of the tenth aspect, the de-padding the third image, to obtain a fourth image includes: performing de-padding from a first target position of the third image, to obtain the fourth image, where the first target position includes at least one of the following: a top position, a bottom position, or a middle position.

With reference to the tenth aspect, in still some other implementations of the tenth aspect, the rotating the fourth image, to obtain the first image includes: rotating the fourth image by (-90°-180°×n), to obtain the first image, where n is an integer.

With reference to the tenth aspect, in some implementations of the tenth aspect, the method further includes: sending the second image through a first port; and sending the first image through a second port.

According to an eleventh aspect, an image processing method is provided, where the method includes: obtaining a first stitched image; and performing second processing on the first stitched image, to obtain a first image and a second image, where a quantity of row pixels of the first stitched image is N+P, a quantity of column pixels is Q, the first stitched image includes the second image and a third image, and N, P, and Q are all positive integers; a quantity of row pixels of the first image is M, a quantity of column pixels is N, M>N, and M is a positive integer; a quantity of row pixels of the second image is P, a quantity of column pixels is Q, and Q>_M; the second processing includes de-padding the first stitched image to obtain a second stitched image; and the second processing further includes rotating and segmenting the second stitched image to obtain the first image and the second image.

For example, the method may be applied to an FPGA unit and/or a Ser.

In the foregoing technical solution, the first stitched image whose quantity of row pixels is N+P and quantity of column pixels is Q is obtained, and the first stitched image includes the second image whose quantity of row pixels is P and quantity of column pixels is Q and the third image. Second, the first stitched image is de-padded to obtain a second stitched image, and the second stitched image is rotated and segmented to obtain the first image and the second image. The second image does not need to be processed in a process of processing the first stitched image. In this way, in one aspect, compared with an existing solution, complexity of processing the second image is not additionally increased. In another aspect, each row of the first stitched image includes a complete row of pixels of the second image. Pixels of the second image do not need to be buffered, and a row of pixels of the second image can be extracted only by performing simple segmentation on the first stitched image, so that the second image can be quickly forwarded in real time. In addition, neither the first image nor the second image includes padded pixels. Therefore, in a subsequent process of transmitting the first image and the second image, in one aspect, no padded pixel occupies transmission bandwidth. This improves transmission efficiency of the first image and the second image. In another aspect, neither the first image nor the second image includes padded pixels, and pixel clocks corresponding to the first image and the second image are small, so that a requirement for an interface on a device that receives the first image and the second image can be reduced.

With reference to the eleventh aspect, in some implementations of the eleventh aspect, the performing second processing on the first stitched image, to obtain a first image and a second image includes: de-padding the first stitched image, to obtain the second stitched image; segmenting the second stitched image, to obtain the second image and a fourth image; and rotating the fourth image, to obtain the first image.

With reference to the eleventh aspect, in some implementations of the eleventh aspect, the de-padding the first stitched image, to obtain the second stitched image includes: performing de-padding from a first target position of the third image in the first stitched image, to obtain the second stitched image, where the first target position includes at least one of the following: a top position, a bottom position, or a middle position.

With reference to the eleventh aspect, in some implementations of the eleventh aspect, the rotating the fourth image, to obtain the first image includes: rotating the fourth image by (-90°-180°×n), to obtain the first image, where n is an integer.

With reference to the eleventh aspect, in some implementations of the eleventh aspect, the method further includes: sending the second image through a first port; and sending the first image through a second port.

According to a twelfth aspect, an image processing method is provided, where the method includes: obtaining a third image; and performing second preprocessing on the third image, to obtain a first image, where the second preprocessing includes rotating the third image, or the second preprocessing includes rotating and de-padding the third image.

For example, the method may be applied to an FPGA unit and/or a Des.

With reference to the twelfth aspect, in some implementations of the twelfth aspect, the performing second preprocessing on the third image, to obtain a first image includes: rotating the third image, to obtain the first image.

With reference to the twelfth aspect, in some implementations of the twelfth aspect, the rotating the third image, to obtain the first image includes: rotating the third image by (-90°-180°×n), to obtain the first image, where n is an integer.

With reference to the twelfth aspect, in some other implementations of the twelfth aspect, the performing second preprocessing on the third image, to obtain a first image includes: rotating the third image, to obtain a fifth image; and de-padding the fifth image, to obtain the first image.

With reference to the twelfth aspect, in some other implementations of the twelfth aspect, the de-padding the fifth image, to obtain the first image includes: performing de-padding from a second target position of the fifth image, to obtain the first image, where the second target position includes at least one of the following: a left position, a right position, or a middle position.

With reference to the twelfth aspect, in some other implementations of the twelfth aspect, the rotating the third image, to obtain a fifth image includes: rotating the third image by (-90°-180°×n), to obtain the fifth image, where n is an integer.

With reference to the twelfth aspect, in still some other implementations of the twelfth aspect, the performing second preprocessing on the third image, to obtain a first image includes: de-padding the third image, to obtain a fourth image; and rotating the fourth image, to obtain the first image.

With reference to the twelfth aspect, in still some other implementations of the twelfth aspect, the de-padding the third image, to obtain a fourth image includes: performing de-padding from a first target position of the third image, to obtain the fourth image, where the first target position includes at least one of the following: a top position, a bottom position, or a middle position.

With reference to the twelfth aspect, in still some other implementations of the twelfth aspect, the rotating the fourth image, to obtain the first image includes: rotating the fourth image by (-90°-180°×n), to obtain the first image, where n is an integer.

With reference to the twelfth aspect, in some implementations of the twelfth aspect, the method further includes: sending the first image.

According to a thirteenth aspect, an image processing method is provided, where the method includes: obtaining a fifth image; and de-padding the fifth image, to obtain a first image.

For example, the method may be applied to an FPGA unit and/or a Des.

In the foregoing technical solution, the fifth image is obtained, and the fifth image is de-padded to obtain the first image. Because the first image does not include padded pixel, in a subsequent process of transmitting the first image, in one aspect, no padded pixel occupies transmission bandwidth. This improves transmission efficiency of the first image. In another aspect, the first image does not include padded pixels, and a pixel clock corresponding to the first image is small, so that a requirement for an interface on a device that receives the first image can be reduced.

With reference to the thirteenth aspect, in some implementations of the thirteenth aspect, the de-padding the fifth image, to obtain the first image includes: performing de-padding from a second target position of the fifth image, to obtain the first image, where the second target position includes at least one of the following: a left position, a right position, or a middle position.

With reference to the thirteenth aspect, in some implementations of the thirteenth aspect, the method further includes: sending the first image.

According to a fourteenth aspect, an image processing method is provided, where the method includes: obtaining a fourth image; and rotating the fourth image, to obtain a first image.

With reference to the fourteenth aspect, in some implementations of the fourteenth aspect, the rotating the fourth image, to obtain a first image includes: rotating the fourth image by (-90°-180°×n), to obtain the first image, where n is an integer.

With reference to the fourteenth aspect, in some implementations of the fourteenth aspect, the method further includes: sending the first image.

According to a fifteenth aspect, an image processing method is provided, where the method includes: obtaining a first stitched image based on a first image and a second image; sending the first stitched image; obtaining the first stitched image; and performing first processing on the first stitched image, to obtain the first image and the second image, where a quantity of row pixels of the first image is M, a quantity of column pixels is N, M>N, and both M and N are positive integers; a quantity of row pixels of the second image is P, a quantity of column pixels is Q, Q≥M, and both P and Q are positive integers; a quantity of row pixels of the first stitched image is N+P, a quantity of column pixels is Q, the first stitched image includes the second image and a third image, the third image is an image obtained through first preprocessing of the first image, and the first preprocessing includes rotating the first image, or the first preprocessing includes rotating and padding the first image; the first processing includes segmenting the first stitched image to obtain the second image and the third image; and the first processing further includes rotating the third image, or the first processing further includes rotating and de-padding the third image.

For example, the method may be applied to a domain controller, for example, a CDC or an MDC.

In the foregoing technical solution, first, the first image whose quantity of row pixels is M and quantity of column pixels is N is rotated, or the first image whose quantity of row pixels is M and quantity of column pixels is N is rotated and padded, to obtain the third image. Then, the first stitched image whose quantity of row pixels is N+P and quantity of column pixels is Q is obtained based on the third image and the second image whose quantity of row pixels is P and quantity of column pixels is Q. Therefore, a quantity of padded pixels in the first stitched image is N×(Q-M). However, according to an existing solution, the first image and the second image are stitched, and a quantity of padded pixels included in an obtained stitched image is M×(Q-N). Because Q>_M>N, the quantity of padded pixels included in the obtained first stitched image is less than the quantity of padded pixels included in the stitched image obtained in the existing solution. Therefore, in a process of transmitting the first stitched image, because the padded pixels occupy a small amount of transmission bandwidth, transmission efficiency of the first stitched image is improved. In addition, the first stitched image is segmented to obtain the second image and the third image, and the third image is rotated to obtain the first image, or the third image is rotated and de-padded to obtain the first image. The second image does not need to be processed in a process of processing the first stitched image. In this way, in one aspect, compared with an existing solution, complexity of processing the second image is not additionally increased. In another aspect, each row of the first stitched image includes a complete row of pixels of the second image. Pixels of the second image do not need to be buffered, and a row of pixels of the second image can be extracted only by performing simple segmentation on the first stitched image, so that the second image can be quickly forwarded in real time. In addition, neither the first image nor the second image includes padded pixels. Therefore, in a subsequent process of transmitting the first image and the second image, in one aspect, no padded pixel occupies transmission bandwidth. This improves transmission efficiency of the first image and the second image. In another aspect, neither the first image nor the second image includes padded pixels, and pixel clocks (which refer to a quantity of image pixels transmitted per second) corresponding to the first image and the second image are small, so that a requirement for an interface on a device that receives the first image and the second image can be reduced.

With reference to the fifteenth aspect, in some implementations of the fifteenth aspect, the obtaining a first stitched image based on a first image and a second image includes: rotating the first image, to obtain the third image; and stitching the third image and the second image, to obtain the first stitched image.

With reference to the fifteenth aspect, in some implementations of the fifteenth aspect, the rotating the first image, to obtain the third image includes: rotating the first image by (90°+180°×n), to obtain the third image, where n is an integer.

With reference to the fifteenth aspect, in some other implementations of the fifteenth aspect, the obtaining a first stitched image based on a first image and a second image includes: rotating the first image, to obtain a fourth image; performing pixel padding on the fourth image, to obtain the third image; and stitching the third image and the second image, to obtain the first stitched image.

With reference to the fifteenth aspect, in some other implementations of the fifteenth aspect, the performing pixel padding on the fourth image, to obtain the third image includes: performing pixel padding from a first target position of the fourth image, to obtain the third image, where the first target position includes at least one of the following: a top position, a bottom position, or a middle position.

With reference to the fifteenth aspect, in still some other implementations of the fifteenth aspect, the obtaining a first stitched image based on a first image and a second image includes: performing pixel padding on the first image, to obtain a fifth image; rotating the fifth image, to obtain the third image; and stitching the third image and the second image, to obtain the first stitched image.

With reference to the fifteenth aspect, in still some other implementations of the fifteenth aspect, the performing pixel padding on the first image, to obtain a fifth image includes: performing pixel padding from a second target position of the first image, to obtain the fifth image, where the second target position includes at least one of the following: a left position, a right position, or a middle position.

With reference to the fifteenth aspect, in still some other implementations of the fifteenth aspect, the rotating the fifth image, to obtain the third image includes: rotating the fifth image by (90°+180°×n), to obtain the third image, where n is an integer.

With reference to the fifteenth aspect, in still some other implementations of the fifteenth aspect, the obtaining a first stitched image based on a first image and a second image includes: rotating the first image, to obtain a fourth image; stitching the fourth image and the second image, to obtain a second stitched image; and performing pixel padding on the second stitched image, to obtain the first stitched image.

With reference to the fifteenth aspect, in still some other implementations of the fifteenth aspect, the performing pixel padding on the second stitched image, to obtain the first stitched image includes: performing pixel padding from a first target position of the fourth image in the second stitched image, to obtain the first stitched image, where the first target position includes a top position, a bottom position, or a middle position.

With reference to the fifteenth aspect, in some implementations of the fifteenth aspect, the rotating the first image, to obtain a fourth image includes: rotating the first image by (90°+180°×n), to obtain the fourth image, where n is an integer.

With reference to the fifteenth aspect, in some implementations of the fifteenth aspect, the performing first processing on the first stitched image, to obtain a first image and a second image includes: segmenting the first stitched image, to obtain the second image and the third image; and rotating the third image, to obtain the first image.

With reference to the fifteenth aspect, in some implementations of the fifteenth aspect, the rotating the third image, to obtain the first image includes: rotating the third image by (-90°-180°×n), to obtain the first image, where n is an integer.

With reference to the fifteenth aspect, in some other implementations of the fifteenth aspect, the performing first processing on the first stitched image, to obtain a first image and a second image includes: segmenting the first stitched image, to obtain the second image and the third image; rotating the third image, to obtain a fifth image; and de-padding the fifth image, to obtain the first image.

With reference to the fifteenth aspect, in some other implementations of the fifteenth aspect, the de-padding the fifth image, to obtain the first image includes: performing de-padding from a second target position of the fifth image, to obtain the first image, where the second target position includes at least one of the following: a left position, a right position, or a middle position.

With reference to the fifteenth aspect, in some other implementations of the fifteenth aspect, the rotating the third image, to obtain a fifth image includes: rotating the third image by (-90°-180°×n), to obtain the fifth image, where n is an integer.

With reference to the fifteenth aspect, in still some other implementations of the fifteenth aspect, the performing first processing on the first stitched image, to obtain a first image and a second image includes: segmenting the first stitched image, to obtain the second image and the third image; de-padding the third image, to obtain a fourth image; and rotating the fourth image, to obtain the first image.

With reference to the fifteenth aspect, in still some other implementations of the fifteenth aspect, the de-padding the third image, to obtain a fourth image includes: performing de-padding from a first target position of the third image, to obtain the fourth image, where the first target position includes at least one of the following: a top position, a bottom position, or a middle position.

With reference to the fifteenth aspect, in still some other implementations of the fifteenth aspect, the rotating the fourth image, to obtain the first image includes: rotating the fourth image by (-90°-180°×n), to obtain the first image, where n is an integer.

With reference to the fifteenth aspect, in some implementations of the fifteenth aspect, the method further includes: sending the second image through a first port; and sending the first image through a second port.

According to a sixteenth aspect, an image processing method is provided, where the method includes: obtaining a first stitched image based on a first image and a second image; sending the first stitched image; obtaining the first stitched image; and performing second processing on the first stitched image, to obtain the first image and the second image, where a quantity of row pixels of the first image is M, a quantity of column pixels is N, M>N, and both M and N are positive integers; a quantity of pixels of the second image is P, a quantity of column pixels is Q, Q>_M, and both P and Q are positive integers; a quantity of pixels of the first stitched image is N+P, a quantity of column pixels is Q, the first stitched image includes the second image and a third image, the third image is an image obtained through first preprocessing of the first image, and the first preprocessing includes rotating the first image, or the first preprocessing includes rotating and padding the first image; the second processing includes de-padding the first stitched image to obtain a second stitched image; and the second processing further includes rotating and segmenting the second stitched image to obtain the first image and the second image.

For example, the method may be applied to a domain controller, for example, a CDC or an MDC.

In the foregoing technical solution, first, the first image whose quantity of row pixels is M and quantity of column pixels is N is rotated, or the first image whose quantity of row pixels is M and quantity of column pixels is N is rotated and padded, to obtain the third image. Then, the first stitched image whose quantity of row pixels is N+P and quantity of column pixels is Q is obtained based on the third image and the second image whose quantity of row pixels is P and quantity of column pixels is Q. Therefore, a quantity of padded pixels in the first stitched image is N×(Q-M). However, according to an existing solution, the first image and the second image are stitched, and a quantity of padded pixels included in an obtained stitched image is M×(Q-N). Because Q>_M>N, the quantity of padded pixels included in the obtained first stitched image is less than the quantity of padded pixels included in the stitched image obtained in the existing solution. Therefore, in a process of transmitting the first stitched image, because the padded pixels occupy a small amount of transmission bandwidth, transmission efficiency of the first stitched image is improved. In addition, the first stitched image is de-padded to obtain a second stitched image, and the second stitched image is rotated and segmented to obtain the first image and the second image. The second image does not need to be processed in a process of processing the first stitched image. In this way, in one aspect, compared with an existing solution, complexity of processing the second image is not additionally increased. In another aspect, each row of the first stitched image includes a complete row of pixels of the second image. Pixels of the second image do not need to be buffered, and a row of pixels of the second image can be extracted only by performing simple segmentation on the first stitched image, so that the second image can be quickly forwarded in real time. In addition, neither the first image nor the second image includes padded pixels. Therefore, in a subsequent process of transmitting the first image and the second image, in one aspect, no padded pixel occupies transmission bandwidth. This improves transmission efficiency of the first image and the second image. In another aspect, neither the first image nor the second image includes padded pixels, and pixel clocks (which refer to a quantity of image pixels transmitted per second) corresponding to the first image and the second image are small, so that a requirement for an interface on a device that receives the first image and the second image can be reduced.

With reference to the sixteenth aspect, in some implementations of the sixteenth aspect, the obtaining a first stitched image based on a first image and a second image includes: rotating the first image, to obtain the third image; and stitching the third image and the second image, to obtain the first stitched image.

With reference to the sixteenth aspect, in some implementations of the sixteenth aspect, the rotating the first image, to obtain the third image includes: rotating the first image by (90°+180°×n), to obtain the third image, where n is an integer.

With reference to the sixteenth aspect, in some other implementations of the sixteenth aspect, the obtaining a first stitched image based on a first image and a second image includes: rotating the first image, to obtain a fourth image; performing pixel padding on the fourth image, to obtain the third image; and stitching the third image and the second image, to obtain the first stitched image.

With reference to the sixteenth aspect, in some other implementations of the sixteenth aspect, the performing pixel padding on the fourth image, to obtain the third image includes: performing pixel padding from a first target position of the fourth image, to obtain the third image, where the first target position includes at least one of the following: a top position, a bottom position, or a middle position.

With reference to the sixteenth aspect, in still some other implementations of the sixteenth aspect, the obtaining a first stitched image based on a first image and a second image includes: performing pixel padding on the first image, to obtain a fifth image; rotating the fifth image, to obtain the third image; and stitching the third image and the second image, to obtain the first stitched image.

With reference to the sixteenth aspect, in still some other implementations of the sixteenth aspect, the performing pixel padding on the first image, to obtain the fifth image includes: performing pixel padding from a second target position of the first image, to obtain the fifth image, where the second target position includes at least one of the following: a left position, a right position, or a middle position.

With reference to the sixteenth aspect, in still some other implementations of the sixteenth aspect, the rotating the fifth image, to obtain the third image includes: rotating the fifth image by (90°+180°×n), to obtain the third image, where n is an integer.

With reference to the sixteenth aspect, in still some other implementations of the sixteenth aspect, the obtaining a first stitched image based on a first image and a second image includes: rotating the first image, to obtain a fourth image; stitching the fourth image and the second image, to obtain a second stitched image; and performing pixel padding on the second stitched image, to obtain the first stitched image.

With reference to the sixteenth aspect, in still some other implementations of the sixteenth aspect, the performing pixel padding on the second stitched image, to obtain the first stitched image includes: performing pixel padding from a first target position of the fourth image in the second stitched image, to obtain the first stitched image, where the first target position includes a top position, a bottom position, or a middle position.

With reference to the sixteenth aspect, in some implementations of the sixteenth aspect, the rotating the first image, to obtain a fourth image includes: rotating the first image by (90°+180°×n), to obtain the fourth image, where n is an integer.

With reference to the sixteenth aspect, in some implementations of the sixteenth aspect, the performing second processing on the first stitched image, to obtain a first image and a second image includes: de-padding the first stitched image, to obtain the second stitched image; segmenting the second stitched image, to obtain the second image and a fourth image; and rotating the fourth image, to obtain the first image.

With reference to the sixteenth aspect, in some implementations of the sixteenth aspect, the de-padding the first stitched image, to obtain the second stitched image includes: performing de-padding from a first target position of the third image in the first stitched image, to obtain the second stitched image, where the first target position includes at least one of the following: a top position, a bottom position, or a middle position.

With reference to the sixteenth aspect, in some implementations of the sixteenth aspect, the rotating the fourth image, to obtain the first image includes: rotating the fourth image by (-90°-180°×n), to obtain the first image, where n is an integer.

With reference to the sixteenth aspect, in some implementations of the sixteenth aspect, the method further includes: sending the second image through a first port; and sending the first image through a second port.

According to a seventeenth aspect, an apparatus is provided, where the apparatus includes the image processing apparatus according to any one of the fourth aspect to the sixth aspect and some implementations of the fourth aspect to some implementations of the sixth aspect.

With reference to the seventeenth aspect, in some implementations of the seventeenth aspect, the apparatus further includes a display, configured to display a first image.

According to an eighteenth aspect, an image processing apparatus is provided, including at least one memory and at least one processor, where the at least one memory is configured to store a program, and the at least one processor is configured to run the program, to implement the method according to any one of the ninth aspect to the sixteenth aspect and some implementations of the ninth aspect to some implementations of the sixteenth aspect.

According to a nineteenth aspect, a computer-readable storage medium is provided, where the computer-readable storage medium stores a program or instructions, and when the program or the instructions are executed, a computer is enabled to perform the method according to any one of the ninth aspect to the sixteenth aspect and some implementations of the ninth aspect to some implementations of the sixteenth aspect.

According to a twentieth aspect, a chip is provided, including at least one processor and an interface circuit, where the interface circuit is configured to provide program instructions or data for the at least one processor, and the at least one processor is configured to execute the program instructions, to implement the method according to any one of the ninth aspect to the sixteenth aspect and some implementations of the ninth aspect to some implementations of the sixteenth aspect.

According to a twenty-first aspect, a chip is provided, where the chip is configured to implement functions of the apparatus according to any one of the first aspect to the eighth aspect and some implementations of the first aspect to some implementations of the eighth aspect.

According to a twenty-second aspect, a terminal device is provided, where the terminal device includes the apparatus according to any one of the first aspect to the eighth aspect and some implementations of the first aspect to some implementations of the eighth aspect.

Further, the terminal device may be an intelligent transportation device (a vehicle or an uncrewed aerial vehicle), a smart home device, an intelligent manufacturing device, an intelligent wearable device, a robot, or the like. The intelligent transportation device may be, for example, an automated guided vehicle (automated guided vehicle, AGV) or an unmanned transportation vehicle.

According to a twenty-third aspect, a computer program product is provided, where the computer program product includes computer program code, and when the computer program code is run on a computer, the method according to any one of the ninth aspect to the sixteenth aspect and some implementations of the ninth aspect to some implementations of the sixteenth aspect is performed.

### BRIEF DESCRIPTION OF DRAWINGS

FIG. 1 is a schematic diagram of an example of an application scenario according to an embodiment of this application;
FIG. 2 is a schematic diagram of an example in which a device transmits an image;
FIG. 3 is a schematic diagram of an example of a transmitted image;
FIG. 4 is a schematic flowchart of an example of an image processing method according to an embodiment of this application;
FIG. 5 is a schematic diagram of an example of obtaining a first stitched image based on a first image and a second image according to an embodiment of this application;
FIG. 6 is a schematic diagram of three examples of performing pixel padding on a fourth image to obtain a third image according to an embodiment of this application;
FIG. 7 is a schematic diagram of another example of obtaining a first stitched image based on a first image and a second image according to an embodiment of this application;
FIG. 8 is a schematic diagram of three examples of performing pixel padding on a first image to obtain a fifth image according to an embodiment of this application;
FIG. 9 is a schematic diagram of still another example of obtaining a first stitched image based on a first image and a second image according to an embodiment of this application;
FIG. 10 is a schematic flowchart of another example of an image processing method according to an embodiment of this application;
FIG. 11 is a schematic diagram of an example of obtaining a first image and a second image based on a first stitched image according to an embodiment of this application;
FIG. 12 is a schematic diagram of another example of obtaining a first image and a second image based on a first stitched image according to an embodiment of this application;
FIG. 13 is a schematic diagram of three examples of de-padding a fifth image to obtain a first image according to an embodiment of this application;
FIG. 14 is a schematic diagram of three examples of de-padding a third image to obtain a fourth image according to an embodiment of this application;
FIG. 15 is a schematic flowchart of still another example of an image processing method according to an embodiment of this application;
FIG. 16 is a schematic flowchart of yet another example of an image processing method according to an embodiment of this application;
FIG. 17 is a schematic flowchart of still yet another example of an image processing method according to an embodiment of this application;
FIG. 18 is a schematic flowchart of a further example of an image processing method according to an embodiment of this application;
FIG. 19 is a schematic diagram of a structure of an example of an image processing apparatus according to an embodiment of this application;
FIG. 20 is a schematic diagram of a structure of another example of an image processing apparatus according to an embodiment of this application;
FIG. 21 is a schematic diagram of a structure of still another example of an image processing apparatus according to an embodiment of this application;
FIG. 22 is a schematic diagram of a structure of yet another example of an image processing apparatus according to an embodiment of this application; and
FIG. 23 is a schematic diagram of a structure of still yet another example of an image processing apparatus according to an embodiment of this application.

### DESCRIPTION OF EMBODIMENTS

The following describes technical solutions of this application with reference to accompanying drawings.

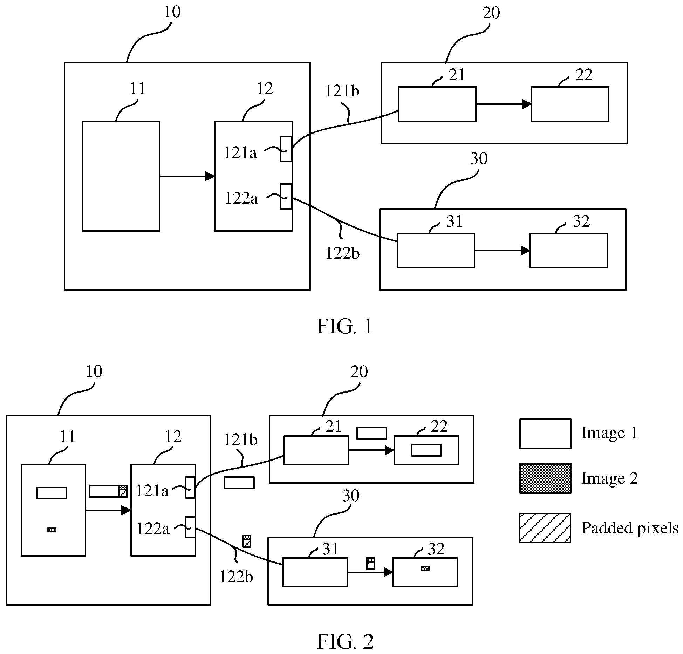

For example, FIG. 1 is a schematic diagram of an example of an application scenario according to an embodiment of this application.

As shown in FIG. 1, a first device 10 includes an SoC 11 and a serializer (serializer, Ser) 12. The SoC 11 may transmit information to the Ser 12 through, for example, a mobile industry processor interface (mobile industry processor interface, MIPI), an open low voltage differential signaling (low voltage differential signaling, LVDS) display interface (open lvds display interface, oLDI), or a display port (display port, DP). A second device 20 includes a Des 21 and a display 22. The Des 21 may transmit information to the display 22 through, for example, an MIPI, an oLDI, or a DP. A third device 30 includes a Des 31 and a display 32. The Des 31 may transmit information to the display 32 through, for example, an MIPI, an oLDI, or a DP. The Ser12 of the first device 10 may transmit information to the Des 21 of the second device 20 through a port 121a and a cable 121b. The Ser12 of the first device 10 may further transmit information to the Des 31 of the third device 30 through a port 122a and a cable 122b.

For example, the first device 10 may include but is not limited to a domain controller, for example, a CDC or an MDC. For example, the second device 20 or the third device 30 may include but is not limited to an in-vehicle infotainment (in-vehicle infotainment, IVI) device, a head-up display (head-up display, HUD) device, a vehicle-mounted device, or the like.

In an example, the first device 10 separately transmits, to the second device 20 and the third device 30, two images that are generated or stored internally or obtained from another device, for display by the second device 20 and the third device 30. The SoC 11 needs to stitch display image data of two displays (the display 22 and the display 32) into a regular large image through processing, and send the stitched image through the MIPI, the oLDI, or the DP. The Ser 12 (which supports one-to-two, that is, supports in segmenting one image into two images) performs segmentation on the large image, to obtain two images, and separately sends the images to the second device 20 and the third device 30 through two ports of the serializer for display.

For example, the SoC 11 of the first device 10 needs to stitch (horizontally stitch or vertically stitch) an image 1 (for example, a quantity of pixels is 3840×720) and an image 2 (for example, a quantity of pixels is 480×240) into a regular large image. The Ser 12 of the first device 10 performs segmentation on the large image, to obtain two images, and separately sends the images to the second device 20 and the third device 30 through the two ports of the serializer for display.

In embodiments of this application, an example in which a quantity of pixels is represented by a quantity of row pixels×a quantity of column pixels is used for description.

For example, that the quantity of pixels is 3840×720 means that a quantity of row pixels is 3840, and a quantity of column pixels is 720.

It should be understood that the quantity of pixels may alternatively be represented by a quantity of column pixels×a quantity of row pixels. This is not limited in this application.

In some embodiments, a quantity of pixels of an image may alternatively be represented by resolution of the image.

For example, the resolution of the image may be represented by horizontal resolution×vertical resolution or vertical resolution×horizontal resolution. The vertical resolution may be understood as a quantity of horizontal scan lines of the image in a vertical direction, and the horizontal resolution is a quantity of pixels on each horizontal scan line. In other words, the vertical resolution may be equivalent to the quantity of column pixels, and the horizontal resolution may be equivalent to the quantity of row pixels.

For example, that the resolution of the image is 3840×720 means that there are 720 horizontal scan lines of the image in the vertical direction, and there are 3840 pixels on each horizontal scan line.

In embodiments of this application, a regular image may be understood as that a quantity of pixels in each row of the image is the same, and a quantity of pixels in each column of the image is also the same. A quantity of row pixels may be the same as or different from a quantity of column pixels.

In embodiments of this application, an irregular image may be understood as that a quantity of pixels in at least one row of the image is different from a quantity of pixels in another row, and/or a quantity of pixels in at least one column of the image is different from a quantity of pixels in another column.

In embodiments of this application, horizontally stitching may be understood as performing row pixel stitching on two images. After the horizontally stitching, the quantity of row pixels is a sum of quantities of row pixels of the two images. Vertically stitching may be understood as performing column pixel stitching on two images. After the vertically stitching, the quantity of column pixels is a sum of quantities of column pixels of the two images.

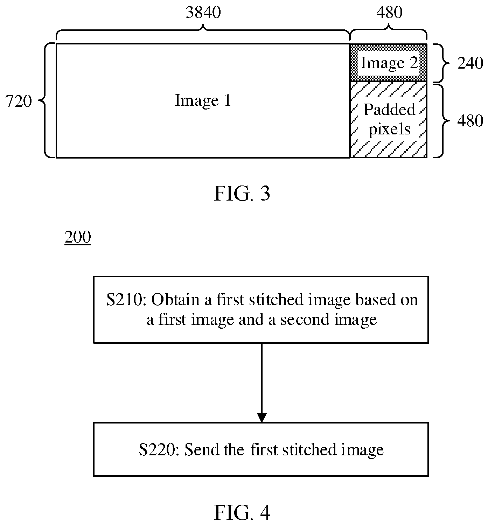

With reference to FIG. 2 and FIG. 3, the following describes in detail a process in which the first device 10 separately transmits the image 1 to the second device 20 and the image 2 to the third device 30 for display.

FIG. 2 is a schematic diagram of an example in which the first device 10 transmits an image to the second device 20 and the third device 30.

For example, as shown in FIG. 2, due to pin and interface limitations of an SoC, a plurality of images cannot be distinguished at interface layers of the SoC and a Ser. The SoC 11 needs to horizontally stitch the image 1 and the image 2 into a regular large image. However, because display formats of the image 1 and the image 2 are inconsistent, for example, a quantity of column pixels of the image 2 is less than a quantity of column pixels of the image 1, for example, padded pixels may be added at the bottom of the image 2 for padding (Padding), so as to match the display format of the image 1, so that a quantity (720) of column pixels of the large image obtained through stitching of the image 1 and the image 2 matches that of the image 1. For example, FIG. 3 is a schematic diagram of a large image obtained through stitching and pixel padding of the image 1 and the image 2.

In addition, as shown in FIG. 2, the SoC 11 may send the stitched large image to the Ser 12 through an MIPI, an oLDI, or a DP. After receiving the large image, the Ser 12 needs to segment the large image. For example, after receiving the large image shown in FIG. 2, the Ser 12 needs to horizontally split the large image, to obtain the image 1 and an image 3, where the image 3 includes the image 1 and padded pixels. The Ser 12 may send the image 1 to a Des 21 through the port 121a and the cable 121b, and send the image 3 to the Des 31 through the port 122a and the cable 122b.

In embodiments of this application, horizontally splitting (or horizontally segmenting) may be understood as performing row pixel splitting (or segmentation) on an image to obtain a plurality of images, or may be understood as reverse processing of the horizontally stitching. Vertically splitting (or vertically segmenting) may be understood as performing column pixel splitting (or segmenting) on an image to obtain a plurality of images, or may be understood as reverse processing of the vertically stitching.

Because the Des 31 does not have a capability of pruning padded pixels (de-padding), the Des 31 directly sends the image 3 to the display 32 through the MIPI or the oLDI. After receiving the image 3, the display 32 prunes the padded pixels of the image 3, to obtain the image 2, and the image 2 is displayed on the display 32.

It can be learned that, in a process in which the first device 10 transmits the image 3 to the third device 30, because the image 3 includes the padded pixels, and the padded pixels occupy transmission bandwidth. This causes low transmission efficiency. In addition, because the image 3 transmitted by the Des 31 includes the padded pixels, a pixel clock (pixel clock, PLCK) is large. This imposes a higher interface requirement on the MIPI, the oLDI, or the DP on the display 32, and some screen-side devices cannot adapt to the pixel clock. The PLCK is a quantity of image pixels transmitted per second, and a corresponding clock needs to be set on a transmitter and a receiver based on the PLCK. The pixel clock is related to an image format and a frame rate. For example, for the image 1, if the frame rate is 60 frames per second, a quantity of pixels that need to be transmitted per second is 3840×720×60=165888000, that is, the PLCK=165.888 MHz. For the image 3, a quantity of pixels that need to be transmitted per second is 480×720×60=20736000, that is, the PLCK=20.736 MHz. For the image 2, a quantity of pixels that need to be transmitted per second is 480×240×60=6912000, and the PLCK=6.912 MHz. The PLCK of the image 3 is improved by 200% compared with that of the image 2. A higher PLCK indicates higher requirements for hardware capabilities of the transmitter and the receiver.

Therefore, embodiments of this application provide an image processing method. An image obtained by using the method includes a small quantity of padded pixels. Therefore, in a process of transmitting the image, the padded pixels occupy a small amount of transmission bandwidth. This improves image transmission efficiency.

The following describes in detail the image processing method provided in embodiments of this application with reference to specific accompanying drawings.

FIG. 4 is a schematic flowchart of an example of an image processing method 200 according to an embodiment of this application.

For example, as shown in FIG. 4, the method 200 includes the following steps.

S210: Obtain a first stitched image based on a first image and a second image. A quantity of row pixels of the first image is M, a quantity of column pixels is N, and M>N. A quantity of row pixels of the second image is P, a quantity of column pixels is Q, and Q≥M. A quantity of row pixels of the first stitched image is N+P, and a quantity of column pixels is Q. The first stitched image includes the second image and a third image. The third image is an image obtained through first preprocessing of the first image. The first preprocessing includes rotating the first image, or the first preprocessing includes rotating and padding the first image.

It should be understood that a quantity of pixels in embodiments of this application is a positive integer. To be specific, M, N, P, and Q are positive integers.

It should be understood that, in embodiments of this application, a quantity of row pixels is a quantity of pixels in each row.

For example, the quantity of row pixels of the first image is M, that is, there are M pixels in each row of the first image. For another example, the quantity of row pixels of the second image is P, that is, there are P pixels in each row of the first image. For another example, the quantity of row pixels of the first stitched image is N+P, that is, there are N+P pixels in each row of the first stitched image.

It should be understood that, in embodiments of this application, a quantity of column pixels is a quantity of pixels in each column. For example, the quantity of column pixels of the first image is N, that is, there are N pixels in each column of the first image.

For example, the quantity of column pixels of the first image is N, that is, there are N pixels in each column of the first image. For another example, the quantity of column pixels of the second image is Q, that is, there are Q pixels in each column of the first image. For another example, the quantity of column pixels of the first stitched image is Q, that is, there are Q pixels in each column of the first stitched image.

For ease of description, an example in which a quantity of pixels of an image is represented by a quantity of row pixels×a quantity of column pixels is used for description below. It should be understood that the quantity of pixels of the image may alternatively be represented by a quantity of column pixels×a quantity of row pixels. This is not limited in this application.

In all embodiments of this application, a value relationship between P and Q is not limited. For example, P may be greater than, equal to, or less than Q. In the following accompanying drawings, an example in which P is greater than Q is used for description.

In embodiments of this application, a manner of implementing S210 is not limited. The following describes S210 in detail by using Manner 1 to Manner 4 as an example. Manner 1, Manner 3, and Manner 4 are applicable to a case in which a quantity of pixels of the first image and a quantity of pixels of the second image satisfy Q>M. Manner 2 is applicable to a case in which the quantity of pixels of the first image and the quantity of pixels of the second image satisfy Q=M.

### Manner 1

Manner 1 may include S11 to S13. The following specifically describes S11 to S13.

S11: Rotate the first image, to obtain a fourth image.

In some embodiments, the first image may be rotated by (90°+180°×n), to obtain the fourth image. In this case, a quantity of pixels of the fourth image is N×M.

In embodiments of this application, n is an integer. For example, when n is 0, the first image may be rotated by 90°, to obtain the fourth image. For another example, when n is 1, the first image may be rotated by 270°, to obtain the fourth image. For another example, when n is - 1, the first image may be rotated by -90°, to obtain the fourth image.

Positive and negative directions of an image rotation angle are not limited in embodiments of this application. For example, the positive direction of the image rotation angle may be a clockwise direction, and the negative direction of the image rotation angle is a counterclockwise direction. For another example, the positive direction of the image rotation angle may be a counterclockwise direction, and the negative direction of the image rotation angle is a clockwise direction. An example in which the positive direction of the image rotation angle is a clockwise direction, and the negative direction of the image rotation angle is a counterclockwise direction is used for description.

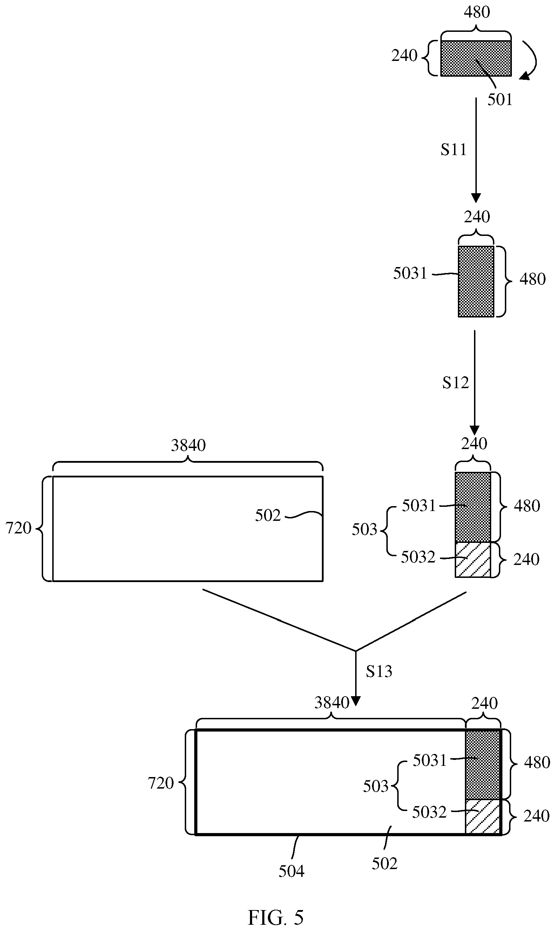

For example, FIG. 5 is a schematic diagram of an example of obtaining a first stitched image 504 based on a first image 501 and a second image 502 in Manner 1 according to an embodiment of this application. As shown in FIG. 5, a quantity of pixels of the first image 501 is 480×240, that is, M=480, and N=240. A quantity of pixels of the second image 502 is 3840×720, that is, P=3840, and Q=720. S11 may specifically include: rotating the first image by 90° (for example, rotating the first image clockwise by 90°), to obtain a fourth image 5031. In this case, a quantity of pixels of the fourth image 5031 is 240×480.

Further, if the fourth image and the second image are stitched into an irregular image, S12 further needs to be performed on the fourth image, so that the fourth image and the second image can be stitched into a regular image.

S12: Perform pixel padding on the fourth image, to obtain the third image.

In some embodiments, because the quantity of pixels of the fourth image is N×M, and the quantity of pixels of the second image is P×Q, column pixel padding may be performed on the fourth image, so that the fourth image and the second image can be horizontally stitched into a regular image, a quantity of pixels in each column of the fourth image increases from M to Q, and a quantity of pixels in each row remains unchanged and is still N. Therefore, a quantity of column pixels of the third image obtained through pixel padding is the same as the quantity of column pixels of the second image. In this case, a quantity of pixels padded in the fourth image is N×(Q-M), and a quantity of pixels of the third image is N×Q.

For ease of description, horizontally stitching is used as an example for description below in embodiments of this application.

In some embodiments, pixel padding may be performed from a first target position of the fourth image, to obtain the third image. For example, the first target position includes at least one of the following: a top position, a bottom position, or a middle position.

In some embodiments, the first target position may be preset.

For example, in embodiments of this application, a bottom position of an image may be understood as a position of the last row of the image. For example, the bottom position of the fourth image may be understood as a position of the last row of the fourth image.

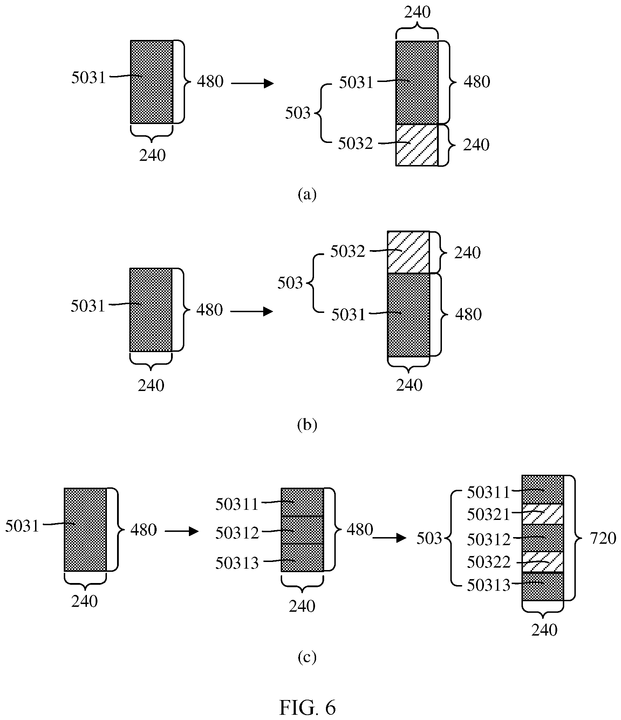

FIG. 6 is a schematic diagram of three examples of performing pixel padding on a fourth image to obtain a third image according to an embodiment of this application.

For example, as shown in (a) in FIG. 6, pixel padding is performed after the bottom position (a position of the last row) of the fourth image 5031, to obtain a third image 503. In this case, the quantity of pixels of the third image 503 is 240×720, the third image 503 includes the fourth image 5031 and a pixel padding area 5032, and a quantity of pixels of the pixel padding area 5032 is 240×240.

For example, in embodiments of this application, a top position of an image may be understood as a position of the first row of the image. For example, the top position of the fourth image may be understood as a position of the first row of the fourth image.

For another example, as shown in (b) in FIG. 6, pixel padding is performed before the top position (a position of the first row) of the fourth image 5031, to obtain the third image 503. In this case, the quantity of pixels of the third image 503 is 240×720, the third image 503 includes the fourth image 5031 and a pixel padding area 5032, and a quantity of pixels of the pixel padding area 5032 is 240×240.

For example, in embodiments of this application, a middle position of an image may be understood as a position of any at least one of those from the first row (excluding the first row) to the last row (excluding the last row) of the image. For example, the middle position of the fourth image may be understood as a position of any at least one of those from the first row (excluding the first row) to the last row (excluding the last row) of the fourth image.

In some embodiments, at least one middle position may be included. A quantity of middle positions is not limited in this application.

Optionally, in an embodiment in which a plurality of middle positions are included, S12 specifically includes: First, column pixel segmentation (which may be understood as the foregoing vertically splitting) is performed on the fourth image, to obtain a plurality of first sub-images. Second, the plurality of first sub-images are disposed at intervals, so that first gap areas are formed between the plurality of first sub-images. Finally, pixel padding is performed on the first gap area, to obtain the third image.

For example, a quantity of first sub-images is not limited in embodiments of this application, provided that the quantity of first sub-images is greater than 1. For example, as shown in (c) in FIG. 6, an example in which there are three first sub-images is used for description.

For example, a size of each of the plurality of first sub-images obtained through column pixel segmentation of the fourth image is not limited in embodiments of this application.

For example, as shown in (c) in FIG. 6, pixel padding is performed from two middle positions (positions of any at least one of the first row to the last row) of the fourth image 5031, to obtain the third image 503. Specifically, first, column pixel segmentation is performed on the fourth image 5031, to obtain three first sub-images, namely, a first sub-image 50311, a first sub-image 50312, and a first sub-image 50313. Second, the first sub-image 50311, the first sub-image 50312, and the first sub-image 50313 are disposed at intervals, so that a first gap area 50321 and a first gap area 50322 are formed between the first sub-image 50311, the first sub-image 50312, and the first sub-image 50313. Finally, pixel padding is performed on the first gap area 50321 and the first gap area 50322, to obtain the third image 503. In this case, the quantity of pixels of the third image 503 is 240×720, and the third image 503 includes the first sub-image 50311, the first sub-image 50312, the first sub-image 50313, the first gap area 50321 filled with pixels, and the first gap area 50322 filled with pixels.

For example, sizes of intervals between the plurality of first sub-images are not limited in embodiments of this application. For example, the intervals between the first sub-images may be equal.

For example, as shown in FIG. 5, according to S12, pixel padding is performed after the bottom position of the fourth image 5031, to obtain the third image 503. The quantity of pixels of the third image 503 is 240×720.

It should be understood that, in FIG. 5, S12 is described by using an example in which pixel padding is performed after the bottom position of the fourth image 5031, to obtain the third image 503.

S13: Stitch the third image and the first image, to obtain the first stitched image.

In some embodiments, the third image and the first image are horizontally stitched, to obtain the first stitched image.

For example, as shown in FIG. 5, the third image 503 and the first image 502 are horizontally stitched, to obtain the first stitched image 504. In this case, a quantity of pixels of the first stitched image is (240+3840)x720.

It can be learned from Manner 1 described above that, in Manner 1, the first preprocessing includes rotating and padding the first image.

### Manner 2

Manner 2 may include S21 and S22. The following specifically describes S21 and S22.

S21: Rotate the first image, to obtain the third image.

In some embodiments, the first image may be rotated by (90°+180°×n), to obtain the third image. In this case, the quantity of pixels of the third image is N×M.

A value of n is consistent with the foregoing value of n.

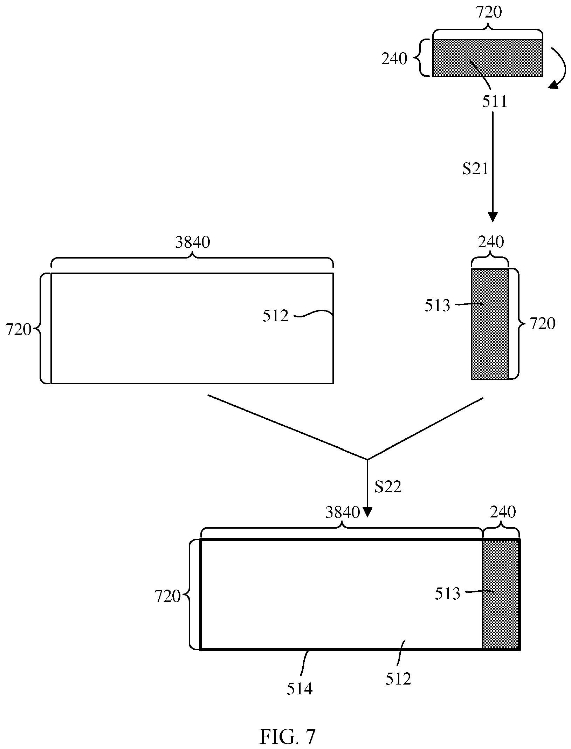

For example, FIG. 7 is a schematic diagram of an example of obtaining a first stitched image 514 based on a first image 511 and a second image 512 in Manner 2 according to an embodiment of this application. As shown in FIG. 7, a quantity of pixels of the first image 511 is 720×240, that is, M=720, and N=240. A quantity of pixels of the second image 512 is 3840×720, that is, P=3840, and Q=720. S21 may specifically include: rotating the first image by 90° (for example, rotating the first image clockwise by 90°), to obtain a third image 513. In this case, a quantity of pixels of the third image 513 is 240×720.

S22: Stitch the third image and the second image, to obtain the first stitched image.

In some embodiments, the third image and the second image are horizontally stitched, to obtain the first stitched image.

For example, as shown in FIG. 7, the third image 513 and the second image 512 are horizontally stitched, to obtain the first stitched image 514. In this case, a quantity of pixels of the first stitched image is (240+3840)×720.

It can be learned from Manner 2 described above that, in Manner 2, the first preprocessing includes rotating the first image.

### Manner 3

Manner 3 may include S31 to S33. The following specifically describes S31 to S33.

S31: Perform pixel padding on the first image, to obtain a fifth image.

In some embodiments, because the quantity of pixels of the first image is M×N, and the quantity of pixels of the second image is P×Q, row pixel padding may be performed on the first image, so that the first image and the second image can be horizontally stitched into a regular image, a quantity of pixels in each row of the first image increases from M to Q, and a quantity of pixels in each column remains unchanged and is still N. Therefore, a quantity of row pixels of the fifth image obtained through pixel padding is the same as the quantity of row pixels of the second image. In this case, a quantity of pixels padded in the first image is (Q-M) ×N, and a quantity of pixels of the fifth image is Q×N.

In some embodiments, pixel padding may be performed from a second target position of the first image, to obtain the fifth image. For example, the second target position includes at least one of the following: a left position, a right position, or a middle position.

In some embodiments, the second target position may be preset.

For example, in embodiments of this application, a left position of an image is a position of the first column of the image. For example, the left position of the first image may be understood as a position of the first column of the first image.

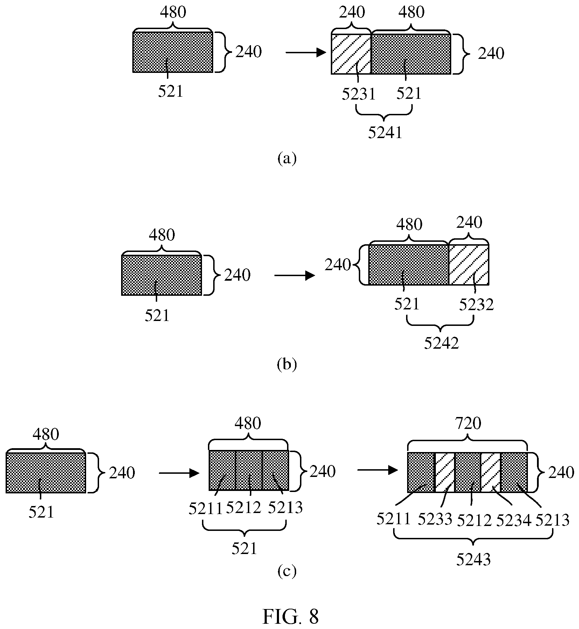

FIG. 8 is a schematic diagram of three examples of performing pixel padding on a first image to obtain a fifth image according to an embodiment of this application.

For example, as shown in (a) in FIG. 8, pixel padding is performed from a left position (a position of the first column) of a first image 521, to obtain a fifth image 5241. In this case, a quantity of pixels of the fifth image 5241 is 720×240, the fifth image 524 includes the first image 521 and a pixel padding area 5231, and a quantity of pixels of the pixel padding area 5231 is 240×240.

For example, in embodiments of this application, a right position of an image is a position of the last column of the image. For example, the right position of the first image may be understood as a position of the last column of the first image.

For example, as shown in (b) in FIG. 8, pixel padding is performed from a right position (a position of the last column) of the first image 521, to obtain a fifth image 5242. In this case, a quantity of pixels of the fifth image 5242 is 720×240, the fifth image 5242 includes the first image 521 and a pixel padding area 5232, and a quantity of pixels of the pixel padding area 5232 is 240×240.

For example, in embodiments of this application, a middle position of an image is a position of any at least one of those from the first column (excluding the first column) to the last column (excluding the last column) of the image. For example, the middle position of the first image may be understood as a position of any at least one of those from the first column (excluding the first column) to the last column (excluding the last column) of the first image.

In some embodiments, at least one middle position may be included. A quantity of middle positions is not limited in this application.

Optionally, in an embodiment in which a plurality of middle positions are included, S31 specifically includes: First, row pixel segmentation (which may alternatively be understood as the foregoing horizontally splitting) is performed on the first image, to obtain a plurality of second sub-images. Second, the plurality of second sub-images are disposed at intervals, so that second gap areas are formed between the plurality of second sub-images. Finally, pixel padding is performed on the second gap area, to obtain the fifth image.

For example, a quantity of second sub-images is not limited in embodiments of this application, provided that the quantity of second sub-images is greater than 1. For example, as shown in (c) in FIG. 8, an example in which there are three second sub-images is used for description.

For example, a size of each of the plurality of second sub-images obtained through row pixel segmentation of the first image is not limited in embodiments of this application.

For example, as shown in (c) in FIG. 8, pixel padding is performed from two middle positions (positions of any at least one of the first column to the last column) of the first image 521, to obtain a fifth image 5243. Specifically, first, row pixel segmentation is performed on the first image 521, to obtain three second sub-images, namely, a second sub-image 5211, a second sub-image 5212, and a second sub-image 5213. Second, the second sub-image 5211, the second sub-image 5212, and the second sub-image 5213 are disposed at intervals, so that a second gap area 5233 and a second gap area 5234 are formed between the second sub-image 5211, the second sub-image 5212, and the second sub-image 5213. Finally, pixel padding is performed on the second gap area 5233 and the second gap area 5234, to obtain the fifth image 5243. In this case, a quantity of pixels of the fifth image 5243 is 720×240, and the fifth image 5243 includes the second sub-image 5211, the second sub-image 5212, the second sub-image 5213, the second gap area 5233 filled with pixels, and the second gap area 5234 filled with pixels.

For example, sizes of intervals between the plurality of second sub-images are not limited in embodiments of this application. For example, the intervals between the second sub-images may be equal.

S32: Rotate the fifth image, to obtain the third image.

In some embodiments, the fifth image may be rotated by (90°+180°×n), to obtain the third image. In this case, the quantity of pixels of the third image is N×Q.

S33: Stitch the third image and the second image, to obtain the first stitched image.

In some embodiments, the third image and the second image are horizontally stitched, to obtain the first stitched image.

It can be learned from Manner 3 described above that, in Manner 3, the first preprocessing includes rotating and padding the first image.

### Manner 4

Manner 4 may include S41 to S43. The following specifically describes S41 to S43.

S41: Rotate the first image, to obtain a fourth image.

In some embodiments, the first image may be rotated by (90°+180°×n), to obtain the fourth image.

For related descriptions in S41, refer to the related descriptions in S11. Details are not described herein again.

S42: Stitch the fourth image and the second image, to obtain a second stitched image.

In some embodiments, the fourth image and the second image may be horizontally stitched, to obtain the second stitched image. In this case, the second stitched image is an irregular image, and a quantity (M) of pixels in at least one column of the second stitched image is different from a quantity (Q) of pixels in another column.

S43: Perform pixel padding on the second stitched image, to obtain the first stitched image.

In some embodiments, the performing pixel padding on the second stitched image may be performing column pixel padding on the fourth image in the second stitched image, that is, performing column pixel padding on a column (that is, a column corresponding to the fourth image) whose quantity of column pixels is less than Q in the second stitched image, so that a quantity of pixels in each column of the fourth image increases from M to Q, to obtain a regular second stitched image.

In some embodiments, pixel padding may be performed from a first target position of a fourth image in the second stitched image, to obtain the first stitched image. The first target position includes a top position, a bottom position, or a middle position.

For descriptions of the top position, the bottom position, or the middle position, refer to the related descriptions in S12. Details are not described herein again.

It can be learned from Manner 4 described above that, in Manner 4, the first preprocessing includes rotating and padding the first image.

For example, S210 may be performed by a first processing unit. For example, the first processing unit may include the foregoing SoC.

In some embodiments, the first image and/or the second image may be an image generated or stored by the first processing unit. In some other embodiments, the first image and/or the second image may alternatively be an image that is sent by another apparatus and that is received by the first processing unit. For example, the another apparatus may be a camera, an event data recorder, or the like. Alternatively, the first image and/or the second image may be an image obtained through processing performed by the first processing unit on the image that is sent by the another apparatus and that is received by the first processing unit. For example, the processing may include pruning, stitching, compression, and the like. This is not limited in this application.

In some embodiments, the first image and/or the second image may be an image formed by stitching a plurality of images. This is not limited in this application.

As shown in FIG. 4, the method 200 further includes S220.

S220: Send the first stitched image.

For example, S220 may be performed by a sending unit.

In some embodiments, the method 200 is performed by a first image processing apparatus. Specifically, the first image processing apparatus includes the first processing unit and the sending unit. The first processing unit in the first image processing apparatus performs S210, and the sending unit in the first image processing apparatus performs S220.

For example, in embodiments of this application, the first image processing apparatus includes but is not limited to a domain controller or another apparatus having an image processing function, for example, an MDC, a CDC, or a gateway having an image processing function.

In some embodiments, the first image processing apparatus further includes a first interface, and the sending unit of the second image processing apparatus sends the first stitched image to another apparatus through the first interface.

For example, the first interface includes but is not limited to an MIPI, an oLDI, or a DP.

It can be learned from the first stitched image (for example, the first stitched image 504 shown in FIG. 5 and the first stitched image 514 shown in FIG. 7) obtained based on the foregoing method 200 that, according to the image processing method provided in embodiments of this application, the obtained first stitched image includes 240×240 padded pixels (for example, the first stitched image 504 shown in FIG. 5) or 0×0 padded pixels (for example, the first stitched image 514 shown in FIG. 7), which are less than padded pixels (480×480) included in the stitched image (as shown in FIG. 3) obtained based on the image processing method provided in an existing solution. In this way, in a process of transmitting the first stitched image, the padded pixels occupy a small amount of transmission bandwidth. This improves transmission efficiency of the first stitched image. In addition, compared with the existing solution, complexity of processing the second image is not additionally increased in the method 200.

In some embodiments, S210 may be further implemented in another manner. Any processing in which the first stitched image obtained in another manner has fewer padded pixels than the stitched image obtained in the existing solution is applicable to the another manner in embodiments of this application.

For example, in a possible implementation, the another manner may include: Row pixels in each row of the first image are connected head to tail, that is, a value of i is from 1 to N, and i is a positive integer. Pixels in the (i+1)^{th} row of the first image are horizontally stitched to the last pixel in the i^{th} row of the first image, and a new quantity of row pixels is re-cut by using the quantity of row pixels of the second image as a granularity, to obtain a seventh image. If the seventh image has a row whose quantity of row pixels is less than the quantity of row pixels of the second image, row pixel padding may be performed on the row, in the seventh image, whose quantity of row pixels is less than the quantity of row pixels of the second image, so that a quantity of pixels in each row of the seventh image is the quantity of row pixels of the second image. In addition, the second image and the first image are vertically stitched, to obtain the first stitched image.

For example, if the quantity of pixels of the first image is 480×240, the quantity of pixels of the second image is 1080×720. The value of i is from 1 to 240, and after the pixels in the (i+1)^{th} row of the first image are horizontally stitched to the last pixel in the i^{th} row of the first image, the row pixels in each row of the first image are connected head to tail, and a new quantity of row pixels is re-cut by using 1080 as a granularity, to obtain the seventh image. In this case, a quantity of row pixels in the last row of the seventh image is 720, which is less than 1080. Therefore, pixel padding may be performed on the last row of the seventh image, so that the quantity of row pixels in the last row of the seventh image is 1080. In this way, a quantity of pixels in each row of the seventh image is 1080. In this case, a quantity of column pixels of the seventh image is 107. Then, the second image and the seventh image are vertically stitched, to obtain the first stitched image. In this case, the quantity of pixels of the first stitched image is 1080×827, and a quantity of padded pixels included in the first stitched image is (1080-720)=360.

In this case, if the second image in the first stitched image is above the first image, a device that receives the first stitched image may buffer pixels of the second image, so that the device that receives the first stitched image still stably outputs the second image within a time period of transmitting the first image. If the second image in the first stitched image is below the first image, a device that receives the first stitched image may buffer pixels of the first image, so that the device that receives the first stitched image still stably outputs the first image within a time period of transmitting the second image.

For example, in another possible implementation, the another manner may include: Column pixels in each column of the first image are connected head to tail, that is, a value of j is from 1 to M, and j is a positive integer. Pixels in the (j+1)^{th} column of the first image are vertically stitched to the last pixel in the j^{th} column of the first image, and a new quantity of column pixels is re-cut by using the quantity of column pixels of the second image as a granularity, to obtain an eighth image. If the eighth image has a column whose quantity of column pixels is less than the quantity of column pixels of the second image, pixel padding may be performed on the column, in the eighth image, whose quantity of column pixels is less than the quantity of column pixels of the second image, so that a quantity of pixels in each column of the eighth image is the quantity of column pixels of the second image. In addition, the second image and the eighth image are horizontally stitched, to obtain the first stitched image.

For example, if the quantity of pixels of the first image is 480×240, the quantity of pixels of the second image is 1080×720. The value of j is from 1 to 480, and after the pixels in the (j+1)^{th} column of the first image are vertically stitched to the last pixel in the j^{th} column of the first image, the column pixels in each column of the first image are connected head to tail, and a new quantity of column pixels is re-cut by using 720 as a granularity, to obtain the eighth image. In this case, the eighth image does not have a column whose quantity of column pixels is less than 720, a quantity of column pixels of the eighth image is 720, and a quantity of row pixels of the eighth image is 160. Then, the second image and the eighth image are horizontally stitched, to obtain the first stitched image. In this case, the quantity of pixels of the first stitched image is 1240×720, and the first stitched image does not include padded pixels.

For example, in still another possible implementation, the another manner may include: The first image and the second image are split and then recombined and stitched, to obtain the first stitched image. In this case, the obtained first stitched image may include or may not include padded pixels.

It should be understood that different manners of splitting, and recombining and stitching correspond to different processing complexity. When factors related to processing complexity are not considered, the first image and the second image may be split and then recombined and stitched in different manners of splitting, and recombining and stitching, to obtain the first stitched image.

For example, the foregoing first image is cut to obtain a plurality of sub-images, so that after the plurality of sub-images are stitched, the plurality of sub-images can be adapted to the quantity of column pixels or the quantity of row pixels of the second image, and then the image obtained through segmentation of the first image and stitching of the second image, to obtain the first stitched image.

For example, if the quantity of column pixels of the second image is L times the quantity of column pixels of the first image (that is, Q=L×N), first, row pixel segmentation may be performed on the first image, to obtain L sub-images. Second, the L sub-images are vertically stitched, to obtain a sixth image. In this case, a quantity of row pixels of the sixth image is 1/L of the quantity of row pixels of the first image, and a quantity of column pixels of the sixth image is the quantity of column pixels of the second image. Finally, the sixth image and the second image are horizontally stitched, to obtain the first stitched image. In this case, the quantity of row pixels of the first stitched image is a sum of the quantity of row pixels of the second image and the quantity of row pixels of the sixth image, and the quantity of column pixels of the first stitched image is the quantity of column pixels of the second image or the sixth image. Because the quantity of column pixels of the second image is the same as the quantity of column pixels of the sixth image, in this case, the obtained first stitched image has no padded pixel. Compared with padded pixels (480×480) included in a stitched image (as shown in FIG. 3) obtained based on the image processing method provided in the existing solution, the padded pixels included in the first stitched image are much fewer. In this way, in a process of transmitting the first stitched image, no padded pixel occupies transmission bandwidth. This improves transmission efficiency of the first stitched image.

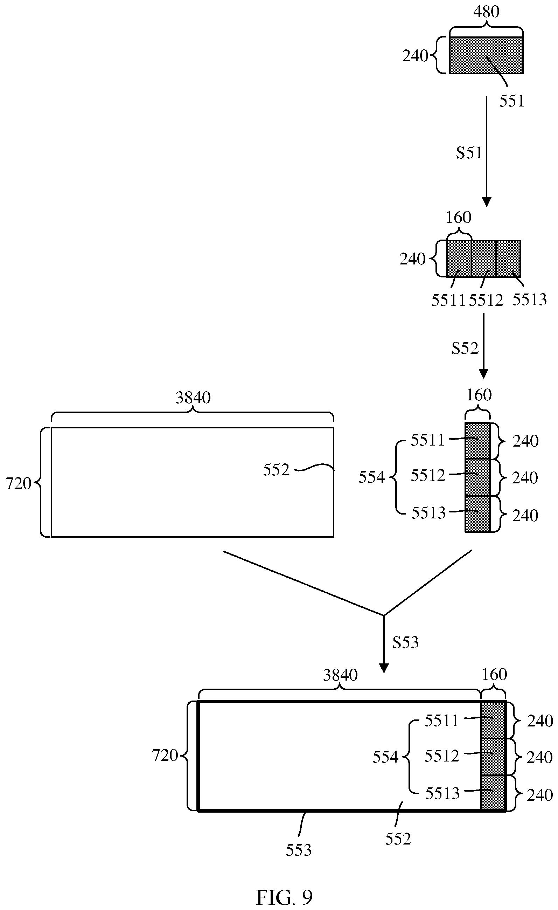

For example, FIG. 9 is a schematic diagram of an example of obtaining a first stitched image 553 based on a first image 551 and a second image 552 according to an embodiment of this application. As shown in FIG. 9, a quantity of pixels of the first image 551 is 480×240, that is, M=480, and N=240. A quantity of pixels of the second image 552 is 3840×720, that is, P=3840, and Q=720. A process of obtaining the first stitched image 553 based on the first image 551 and the second image 552 includes S51 to S53. In S51, because the quantity 720 of column pixels of the second image 552 is three times the quantity 240 of column pixels of the first image 551 (that is, L=3), row pixel segmentation may be performed on the first image 551, to obtain three sub-images, for example, a third sub-image 5511, a third sub-image 5512, and a third sub-image 5513. In this case, quantities of pixels of the third sub-image 5511, the third sub-image 5512, and the third sub-image 5513 are all 160×240. In S52, the third sub-image 5511, the second image 552, and the third sub-image 5512 are vertically stitched, to obtain a sixth image 554. In this case, a quantity of pixels of the sixth image 554 is 160×720. Finally, the sixth image 554 and the second image 552 are horizontally stitched, to obtain the first stitched image 553. In this case, the quantity of pixels of the first stitched image is (3840+160)×720.

The foregoing embodiments are described by using an example in which the first stitched image is obtained based on the second image and the image obtained through the first preprocessing of the first image. It should be understood that, in some embodiments, the first image and an image obtained through the first preprocessing of the second image may be further vertically stitched, to obtain the first stitched image. In this case, if the quantity of pixels of the first image is still M×N, and the quantity of pixels of the second image is still P×Q, the quantity of pixels of the first stitched image is Q×(P+N). For specific process descriptions, refer to the related descriptions in the foregoing method 200. Details are not described herein again.

In this case, if the second image in the first stitched image is above the first image, a device that receives the first stitched image may buffer pixels of the second image, so that the device that receives the first stitched image still stably outputs the second image within a time period of transmitting the first image. If the second image in the first stitched image is below the first image, a device that receives the first stitched image may buffer pixels of the first image, so that the device that receives the first stitched image still stably outputs the first image within a time period of transmitting the second image.

The following describes another image processing method 200' provided in an embodiment of this application. The method is applicable to an embodiment in which a quantity Q of column pixels of a second image is less than a quantity M of row pixels of a first image. In the method 200, a fourth stitched image or a fifth stitched image may be obtained based on the first image and the second image. A quantity of row pixels of the first image is M, a quantity of column pixels is N, M>N, and N<Q. A quantity of row pixels of the second image is P, a quantity of column pixels is Q, and Q<M. A quantity of row pixels of the fourth stitched image or the fifth stitched image is P+K×N, and a quantity of column pixels is Q. The fourth stitched image or the fifth stitched image includes the second image and an image obtained through third preprocessing of the first image. The third preprocessing includes rotation and segmentation, or the third preprocessing includes rotation, segmentation, and padding.

The following describes the method 200' by using S211' to S215" as an example. It should be understood that S211' to S215" are merely one possible implementation of the method 200', and there may be another implementation of the method 200'. For example, before the following S214‴, the first image may be first horizontally segmented, then rotated, and then horizontally stitched, to obtain a ninth image. A specific implementation of the method 200' is not limited in embodiments of this application.

The method 200' includes S211' to S215'. The following specifically describes S211' to S215'.

S211': Rotate the first image, to obtain a fourth image. The quantity of row pixels of the first image is M, the quantity of column pixels is N, M>N, and N<Q.

In some embodiments, the first image is rotated by (90°+180°×n), to obtain the fourth image. In this case, a quantity of pixels of the fourth image is N×M. n is an integer.

S212': Vertically segment the fourth image, to obtain K sub-images. K>1, and K satisfies (K-1)×Q<M≤K×Q. Quantities of row pixels of the K sub-images are all N, and quantities of column pixels of the K sub-images are all M/K.

S213': Horizontally stitch the K sub-images, to obtain the ninth image. A quantity of row pixels of the ninth image is K×N, and a quantity of column pixels is M/K.

S214': Horizontally stitch the ninth image and the second image, to obtain a third stitched image. The quantity of row pixels of the second image is P, the quantity of column pixels of the second image is Q, and Q<M.

In this case, if M<K×Q, the third stitched image is an irregular image, a quantity of pixels in P columns of the third stitched image is Q, and a quantity of pixels in K×N columns is M/K. In other words, the quantity of pixels in M/K columns of the third stitched image is different from the quantity of pixels in other P columns. In this case, step S215' further needs to be performed. If M=K×Q, the third stitched image is a regular image, and the operation in S215' does not need to be performed. A quantity of row pixels of the third stitched image is P+K×N, and a quantity of column pixels is Q (or M/K).

S215': Perform row pixel padding on the third stitched image, to obtain the fourth stitched image. The quantity of row pixels of the fourth stitched image is P+K×N, and the quantity of column pixels is Q (in this case, Q>M/K).

According to S215, row pixel padding is performed on a row, in the third stitched image, whose quantity of row pixels is less than P+K×N, so that a quantity of row pixels in the row, in the third stitched image, whose quantity of row pixels is less than P+K×N increases from P to P+K×N, thereby obtaining a regular fourth stitched image. In this case, a quantity of padded pixels is N×(K×Q-M).

In some embodiments, S212' to S215' may alternatively be replaced with S216' to S219'.

S216': Perform column pixel padding on the fourth image, to obtain a tenth image. In this case, a quantity of row pixels of the tenth image is N, and a quantity of column pixels is K×Q. K>1, and K satisfies (K-1)×Q<M≤K×Q.

If M=K×Q, S216' does not need to be performed, and S217' to S219' are directly performed. If M<K×Q, 216' needs to be performed.

In this case, a quantity of padded pixels is N×(K×Q-M).

S217': Vertically segment the tenth image, to obtain K sub-images. Quantities of row pixels of the K sub-images are all N, and quantities of column pixels of the K sub-images are all Q.

S218': Horizontally stitch the K sub-images, to obtain an eleventh image. A quantity of row pixels of the eleventh image is K×N, and a quantity of column pixels is Q.

S219': Horizontally stitch the second image and the eleventh image, to obtain the fifth stitched image. The quantity of row pixels of the fifth stitched image is P+K×N, and the quantity of column pixels is Q.

In some embodiments, the method 200' may be executed by the foregoing first processing unit.

In some embodiments, the method 200' further includes: sending the fourth stitched image or the fifth stitched image.

For example, the fourth stitched image or the fifth stitched image may be sent by a sending unit.

In some embodiments, the method 200' is performed by a first image processing apparatus. Specifically, the first image processing apparatus includes a first processing unit and the sending unit. The first processing unit in the first image processing apparatus performs the method 200', and the sending unit in the first image processing apparatus sends the fourth stitched image or the fifth stitched image.

For example, in embodiments of this application, the first image processing apparatus includes but is not limited to a domain controller, for example, an MDC, a CDC, or the like.

In some embodiments, the first image processing apparatus further includes a first interface, and the sending unit of the second image processing apparatus sends the fourth stitched image or the fifth stitched image to another apparatus through the first interface.

For example, the first interface includes but is not limited to an MIPI, an oLDI, or a DP.

A quantity of padded pixels included in the fourth stitched image or the fifth stitched image obtained according to the method 200' is N×(K×Q-M). However, according to an existing solution, the first image and the second image are stitched, and a quantity of padded pixels included in the obtained stitched image is M×(Q-N). Because N<Q and M≤K×Q, the quantity of padded pixels included in the obtained fourth stitched image or the obtained fifth stitched image is less than the quantity of padded pixels included in the stitched image obtained in the existing solution. Therefore, in a process of transmitting the fourth stitched image or the fifth stitched image, because the padded pixels occupy a small amount of transmission bandwidth, transmission efficiency of the fourth stitched image or the fifth stitched image is improved. In addition, in the method 200', the second image is not processed in a process of obtaining the fourth stitched image or the fifth stitched image. In this way, in one aspect, compared with the existing solution, complexity of processing the second image is not additionally increased. In another aspect, each row of the fourth stitched image or the fifth stitched image includes a complete row of pixels of the second image. A device that receives the fourth stitched image or the fifth stitched image does not need to buffer pixels of the second image, and can extract a row of pixels of the second image only by performing simple segmentation on the fourth stitched image or the fifth stitched image, so that the second image can be quickly forwarded in real time.

An embodiment of this application further provides another image processing method 300. In the image processing method 300, first processing may be performed on a stitched image, to obtain a first image and a second image.

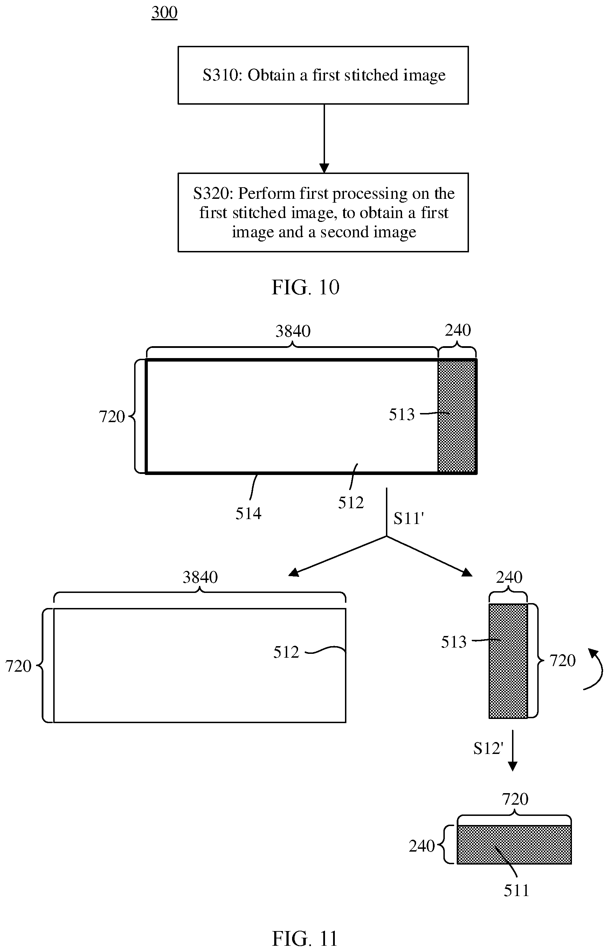

For example, FIG. 10 is a schematic flowchart of an example of the image processing method 300 according to an embodiment of this application.

As shown in FIG. 10, the method 300 includes the following steps.

S310: Obtain a first stitched image. A quantity of pixels of the first stitched image is (N+P)×Q. The first stitched image includes the second image and a third image. A quantity of pixels of the second image is P×Q, and Q≥M.

In some embodiments, S310 may be performed by an obtaining unit.

Optionally, in some embodiments, S310 may be obtaining the first stitched image from the sending unit of the first image processing apparatus in the foregoing method 200.

S320: Perform first processing on the first stitched image, to obtain the first image and the second image. A quantity of pixels of the first image is M×N, and M>N. The first processing includes segmenting the first stitched image, to obtain the second image and the third image. The first processing further includes rotating the third image, or the first processing further includes rotating and de-padding the third image.

In embodiments of this application, a manner of implementing S320 is not limited. The following describes S320 in detail by using Manner 1' to Manner 3' as an example. Manner 1' is applicable to a case in which the quantity of pixels of the first image and the quantity of pixels of the second image satisfy Q=M. Manner 2' and Manner 3' are applicable to a case in which the quantity of pixels of the first image and the quantity of pixels of the second image satisfy Q>M.

### Manner 1'

Manner 1' may include S11' and S12'. The following specifically describes S11' and S12'.

S11': Segment the first stitched image, to obtain the second image and the third image.

In some embodiments, if the first stitched image is obtained through horizontally stitching, in S11', the first stitched image is horizontally segmented, to obtain the second image and the third image.

The first stitched image is horizontally segmented, so that image data can be more smoothly output on a first port and a second port subsequently. In other words, in a same time period, corresponding image data is output on both the ports.

In some embodiments, if the first stitched image is obtained through vertically stitching, in S11', the first stitched image is vertically segmented, to obtain the second image and the third image.

Because the quantity of pixels of the first stitched image is (N+P)×Q, and the quantity of pixels of the second image is P×Q, it can be learned from S11' that a quantity of pixels of the third image is N×Q.

FIG. 11 is a schematic diagram of an example of obtaining the first image and the second image in Manner 1' according to an embodiment of this application. For example, as shown in FIG. 11, a first stitched image 514 includes a second image 512 and a third image 513, a quantity of pixels of the second image 512 is 3840×720, and a quantity of pixels of the first stitched image is (3840+240)×720. According to S11, the second image 512 and the third image 513 may be obtained. A quantity of pixels of the third image 513 is 240×720.

S12': Rotate the third image, to obtain the first image.

In some embodiments, the third image may be rotated by (-90°-180°×n), to obtain the first image.

A value of n is consistent with the foregoing value of n.

Because the quantity of pixels of the first image is M×N, it can be learned from S12' that the quantity of pixels of the third image is N×M. However, it can be learned from S11' that the quantity of pixels of the third image is still N×Q. Therefore, in this case, M=Q. Therefore, Manner 1 is applicable to a solution in which the quantity of pixels of the first image and the quantity of pixels of the second image satisfy M=Q.

For example, as shown in FIG. 11, according to S12', the third image 513 is rotated (rotated counterclockwise by 90°), to obtain the first image 511. In this way, a solution of obtaining the first image 511 and the second image 512 based on the first stitched image 514 is implemented. It can be learned that a quantity of row pixels of the first image is equal to a quantity of column pixels of the second image.

### Manner 2'

Manner 2' may include S21' to S23'. The following specifically describes S21' to S23'.

S21': Segment the first stitched image, to obtain the second image and the third image.

For related descriptions of S21', refer to the foregoing related descriptions of S11'.

### Details are not described herein again.

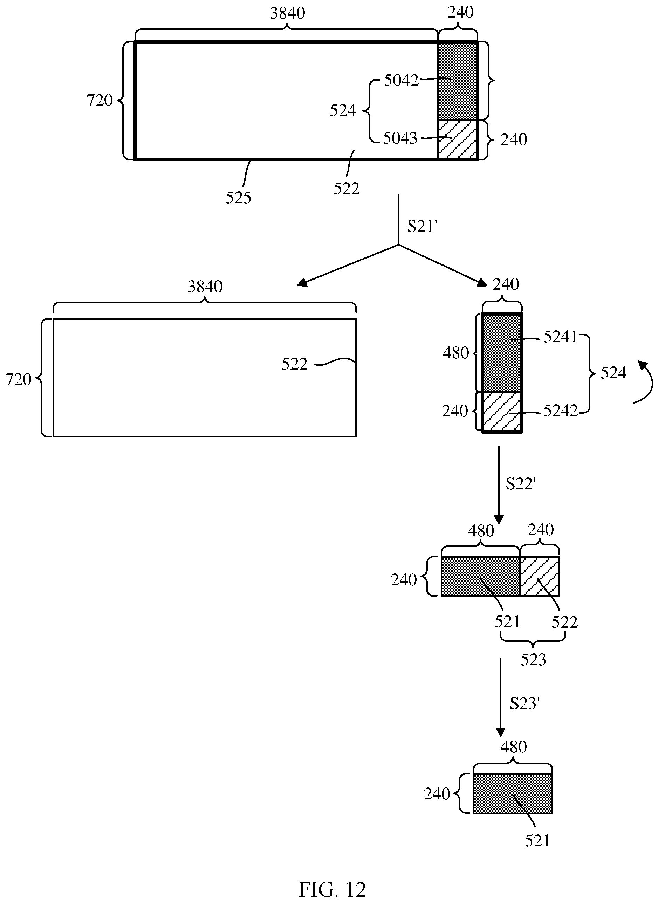

FIG. 12 is a schematic diagram of an example of obtaining the first image and the second image in Manner 2' according to an embodiment of this application. For example, as shown in FIG. 12, a first stitched image 525 includes a second image 522 and a third image 524, a quantity of pixels of the second image 522 is 3840×720, a quantity of pixels of the third image 524 is 240×720, and a quantity of pixels of the first stitched image is (3840+240)×720. According to S21', the second image 522 and the third image 524 may be obtained.

S22': Rotate the third image, to obtain a fifth image.

In some embodiments, the third image may be rotated by (-90°-180°×n), to obtain the fifth image.

A value of n is consistent with the foregoing value of n.

It can be learned from S11' that the quantity of pixels of the third image is N×Q. Therefore, a quantity of pixels of the fifth image is Q×N.

For example, as shown in FIG. 12, according to S22', the third image 524 is rotated (for example, rotated counterclockwise by 90°), to obtain a fifth image 523. A quantity of pixels of the fifth image 523 is 720×240.

S23': De-pad the fifth image, to obtain the first image.

In some embodiments, the de-padding the fifth image may be performing row de-padding on the fifth image, so that a quantity of pixels in each row of the fifth image is reduced from Q to M, and a quantity of pixels in each column remains unchanged and is still N. In this case, a quantity of de-padded pixels is (Q-M)×N.

In some embodiments, de-padding may be performed from a second target position of the fifth image, to obtain the first image. For example, the second target position includes at least one of the following: a left position, a right position, or a middle position.

For a part of the second target position that is not described, refer to the related descriptions in S31. Details are not described herein again.

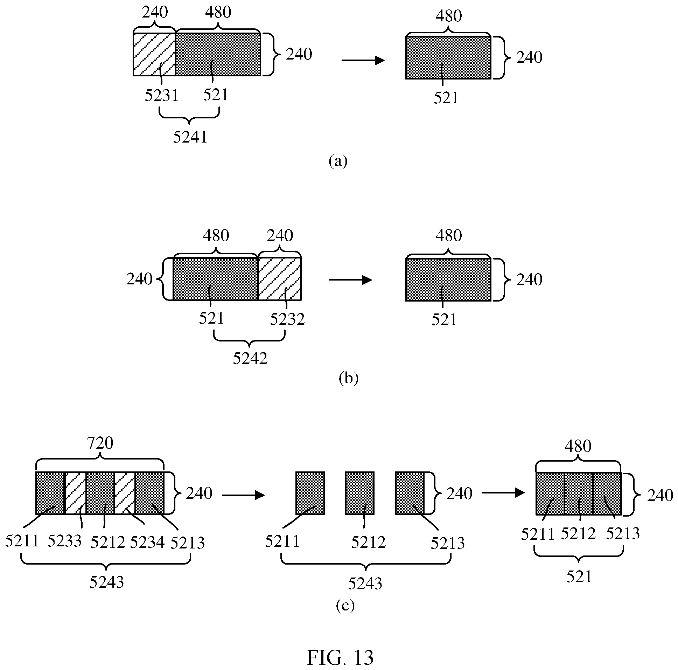

FIG. 13 is a schematic diagram of three examples of de-padding the fifth image to obtain the first image according to an embodiment of this application.

For example, as shown in (a) in FIG. 13, de-padding is performed from a left position (a position of the first column) of a fifth image 5241, to obtain a first image 521. In this case, a quantity of pixels of the fifth image 5241 is 720×240, and the fifth image 524 includes the first image 521 and a pixel padding area 5231.

For example, as shown in (b) in FIG. 13, de-padding is performed from a right position (a position of the last column) of a fifth image 5242, to obtain the first image 521. In this case, a quantity of pixels of the fifth image 5242 is 720×240, and the fifth image 5242 includes the first image 521 and a pixel padding area 5232.

In some embodiments, at least one middle position may be included. A quantity of middle positions is not limited in this application.

Optionally, in an embodiment in which there are a plurality of middle positions, S23' specifically includes: First, de-padding is performed from at least one middle position of the fifth image, to obtain a plurality of second sub-images. Then, the plurality of second sub-images are horizontally stitched, so that the plurality of second sub-images form the first image.

For example, a quantity of second sub-images is not limited in embodiments of this application, provided that the quantity of second sub-images is greater than 1. For example, as shown in (c) in FIG. 13, an example in which there are three second sub-images is used for description.

For example, as shown in (c) in FIG. 13, first, de-padding is performed from two middle positions (positions respectively corresponding to a second gap area 5233 and a second gap area 5234) of a fifth image 5243, to obtain three second sub-images, namely, a second sub-image 5211, a second sub-image 5212, and a second sub-image 5213. Second, the second sub-image 5211, the second sub-image 5212, and the second sub-image 5213 are horizontally stitched, so that the second sub-image 5211, the second sub-image 5212, and the second sub-image 5213 form the first image 521. In this case, a quantity of pixels of the fifth image 5243 is 720×240, and the fifth image 5243 includes the second sub-image 5211, the second sub-image 5212, the second sub-image 5213, the second gap area 5233 filled with pixels, and the second gap area 5234 filled with pixels.

For example, sizes of intervals between the plurality of second sub-images are not limited in embodiments of this application. For example, the intervals between the second sub-images may be equal.

For example, as shown in FIG. 12, according to S23', de-padding is performed from a right position of the fifth image 523, to obtain the first image 521. A quantity of pixels of the first image 523 is 480×240.

It should be understood that, in FIG. 12, S23' is described by using an example in which de-padding is performed from the right position of the fifth image 523, to obtain the first image 521.

### Manner 3'

Manner 3' may include S31' to S33'. The following specifically describes S31' to S33'.

S31': Segment the first stitched image, to obtain the second image and the third image.

For related descriptions of S31', refer to the foregoing related descriptions of S11'. Details are not described herein again.

S32': De-pad the third image, to obtain a fourth image.

In some embodiments, the de-padding the third image may be performing column de-padding on the third image, so that a quantity of pixels in each column of the third image is reduced from Q to M, and a quantity of pixels in each row remains unchanged and is still N. In this case, a quantity of de-padded pixels is N×(Q-M), and a quantity of pixels of the fourth image is N×M.

In some embodiments, de-padding may be performed from a first target position of the third image, to obtain the fourth image. For example, the first target position includes at least one of the following: a top position, a bottom position, or a middle position.

For a part of the first target position that is not described, refer to the related descriptions in S12. Details are not described herein again.

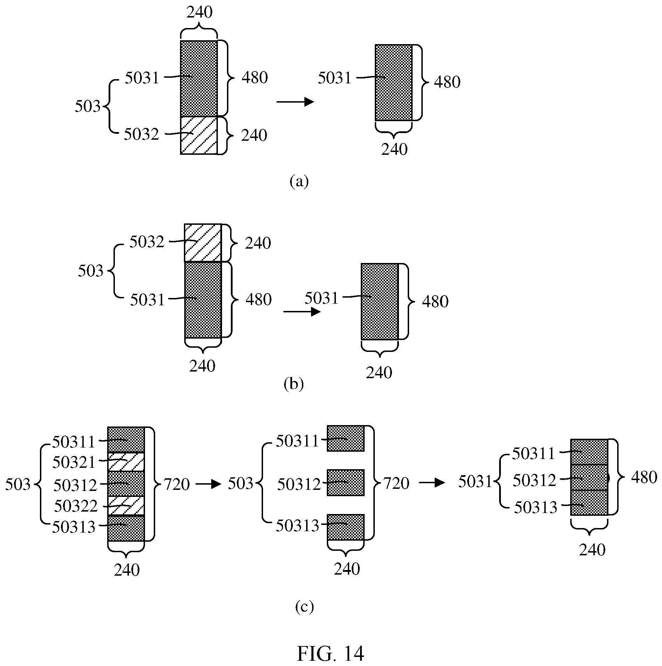

FIG. 14 is a schematic diagram of three examples of de-padding the third image to obtain the fourth image according to an embodiment of this application.

For example, as shown in (a) in FIG. 14, de-padding is performed before a bottom position (a position of the last row) of a third image 503, to obtain a fourth image 5031. In this case, a quantity of pixels of the third image 503 is 240×720, the third image 503 includes the fourth image 5031 and a pixel padding area 5032, and a quantity of pixels of the fourth image 5031 is 240×480.

For example, as shown in (b) in FIG. 14, de-padding is performed after a top position (a position of the first row) of the third image 503, to obtain the fourth image 5031. In this case, the quantity of pixels of the third image 503 is 240×720, the third image 503 includes the fourth image 5031 and the pixel padding area 5032, and the quantity of pixels of the fourth image 5031 is 240×480.

In some embodiments, at least one middle position may be included. A quantity of middle positions is not limited in this application.

Optionally, in an embodiment in which there are a plurality of middle positions, S32' specifically includes: First, de-padding is performed from at least one middle position of the fifth image, to obtain a plurality of first sub-images. Then, the plurality of first sub-images are vertically stitched, so that the plurality of first sub-images form the fourth image.

For example, a quantity of first sub-images is not limited in embodiments of this application, provided that the quantity of first sub-images is greater than 1. For example, as shown in (c) in FIG. 14, an example in which there are three first sub-images is used for description.

For example, as shown in (c) in FIG. 14, first, de-padding is performed from two middle positions (positions respectively corresponding to a first gap area 50321 and a first gap area 50322) of the fifth image 503, to obtain three first sub-images, namely, a first sub-image 50311, a first sub-image 50312, and a first sub-image 50313. Second, the first sub-image 50311, the first sub-image 50312, and the first sub-image 50313 are vertically stitched, so that the first sub-image 50311, the first sub-image 50312, and the first sub-image 50313 form the fourth image 5031. In this case, the quantity of pixels of the fourth image 5031 is 240×480, and the fifth image 503 includes the first sub-image 50311, the first sub-image 50312, the first sub-image 50313, the first gap area 50321 filled with pixels, and the first gap area 50322 filled with pixels.

For example, sizes of intervals between the plurality of first sub-images are not limited in embodiments of this application. For example, the intervals between the first sub-images may be equal.

S33': Rotate the fourth image, to obtain the first image.

In some embodiments, the fourth image is rotated by (-90°-180°×n), to obtain the first image.

A value of n is consistent with the foregoing value of n.

It can be learned from S32' that the quantity of pixels of the fourth image is N×M. Therefore, the quantity of pixels of the first image is M×N.

The foregoing embodiments are described by using an example in which the first image and the second image are obtained based on the horizontal segmentation and the rotating the third image or the rotating and de-padding the third image. It should be understood that, in some embodiments, the first image and the second image may be further obtained based on the vertical segmentation. In this case, if the quantity of pixels of the first stitched image is Q×(P+N), the quantity of pixels of the first image is still M×N, and the quantity of pixels of the second image is still P×Q. For specific process descriptions, refer to the related descriptions in the foregoing method 300. Details are not described herein again.

In some embodiments, S320 may alternatively be implemented in another manner.

For example, in a possible implementation, the another manner may include: If the first stitched image includes padded pixels, first, the first stitched image is de-padded; second, the first stitched image obtained through de-padding is vertically segmented, to obtain the second image and a seventh image; and finally, a new quantity of row pixels is re-cut for the seventh image by using the quantity of row pixels of the first image as a granularity, to obtain the first image. If the first stitched image does not include padded pixels, the first stitched image is segmented, to obtain the second image and a seventh image, and a new quantity of row pixels is re-cut for the seventh image by using the quantity of row pixels of the first image as a granularity, to obtain the first image.

For example, if the quantity of pixels of the first stitched image is 1080×827, the first stitched image includes the second image, the seventh image, and padded pixels. The quantity of pixels of the second image is 1080×720, the padded pixels are in the last row of the seventh image in the first stitched image, and a quantity of padded pixels is 360. First, de-padding is performed on the padded pixels of the first stitched image, so that a quantity of padded pixels in the last row of the seventh image is reduced from 1080 to 720. Second, the first stitched image obtained through de-padding is vertically segmented, to obtain the second image and the seventh image. Finally, a new quantity of row pixels is re-cut for the seventh image by using the quantity (480) of row pixels of the first image as a granularity, to obtain the first image. In this case, a quantity of pixels of the obtained first image is 480×240.

In some embodiments, if the second image in the first stitched image is above the first image, pixels of the second image may be buffered, so that the second image is still stably output within a time period of transmitting the first image. If the second image in the first stitched image is below the first image, pixels of the first image may be buffered, so that the first image is still stably output within a time period of transmitting the second image.

For example, in another possible implementation, the another manner may include: If the first stitched image includes padded pixels, first, the first stitched image is de-padded; second, the first stitched image obtained through de-padding is segmented, to obtain the second image and an eighth image; and finally, a new quantity of column pixels is re-cut for the eighth image by using the quantity of column pixels of the first image as a granularity, to obtain the first image. If the first stitched image does not include padded pixels, the first stitched image is segmented, to obtain the second image and an eighth image, and a new quantity of column pixels is re-cut for the eighth image by using the quantity of row pixels of the first image as a granularity, to obtain the first image.

For example, if the quantity of pixels of the first stitched image is 1240×720, the first stitched image includes the second image and the eighth image. The quantity of pixels of the second image is 1080×720, and a quantity of column pixels of the eighth image is 160×720. First, the first stitched image is horizontally segmented, to obtain the second image and the eighth image. Finally, a new quantity of row pixels is re-cut for the eighth image by using the quantity (240) of column pixels of the first image as a granularity, to obtain the first image. In this case, a quantity of pixels of the obtained first image is 480×240.

For example, in still another possible implementation, the another manner may include: The first stitched image is split and then recombined and stitched, to separately obtain the first image and the second image. In this case, the first stitched image may include or may not include padded pixels.

It should be understood that different manners of splitting, and recombining and stitching correspond to different processing complexity. When factors related to processing complexity are not considered, the first stitched image may be split and then recombined and stitched in different manners of splitting, and recombining and stitching, to obtain the first image and the second image.

For example, the foregoing first stitched image is horizontally segmented, to obtain the second image and a sixth image, the sixth image is vertically segmented, to obtain a plurality of sub-images, and the plurality of sub-images is horizontally stitched, to obtain the first image.

Neither the first image nor the second image obtained in the another manner includes padded pixels, and pixel clocks (which refer to a quantity of image pixels transmitted per second) corresponding to the first image and the second image are small, so that a requirement for an interface on a device that receives the first image and the second image can be reduced.

In some embodiments, S320 in the method 300 may be performed by a second processing unit. For example, the second processing unit may include but is not limited to an FPGA unit and/or a Ser.

In some embodiments, the method 300 further includes S330 and S340.

S330: Send the second image through a first port.

S340: Send the first image through a second port.

The first image and the second image can be sent to different apparatuses through the first port and the second port, so that the different apparatuses use the received images.

In some embodiments, S330 in the method 300 may be performed by a first sending unit. S340 in the method 300 may be performed by a second sending unit.

Optionally, in an embodiment in which the second processing unit includes an FPGA unit and a Ser, the Ser may perform a segmentation step in the method 300. The FPGA unit may perform steps other than the segmentation step in the method 300. For example, the FPGA unit may perform steps of de-padding and/or rotation in the method 300.

In some embodiments, the method 200 and the method 300 may be performed separately. In some other embodiments, the method 200 and the method 300 may be performed in combination. This is not limited in embodiments of this application.

In some embodiments, the foregoing first image processing apparatus may further include the obtaining unit, the second processing unit, the first sending unit, and/or the second sending unit. The obtaining unit in the first image processing apparatus performs S310, the second processing unit in the first image processing apparatus performs S320, the first sending unit in the first image processing apparatus performs S330, and the second sending unit in the first image processing apparatus performs S340.

In some embodiments, S320 may alternatively be replaced with S320". The following uses an example in which a manner of implementing S320" is Manner 1", Manner 2", or Manner 3" for description.

Manner 1" includes S11'. For related descriptions of S11', refer to the foregoing descriptions. Details are not described herein again. Further, in some embodiments, when the method 300 further includes S330 and S340, S340 may alternatively be replaced with S340'.

S340': Send the third image through the second port.

The third image and the second image can be sent to different apparatuses through the first port and the second port, so that the different apparatuses process or use the received images.

Manner 2" includes S21' and S22'. For related descriptions of S21' and S22', refer to the foregoing descriptions. Details are not described herein again. Further, in some embodiments, when the method 300 further includes S330 and S340, S340 may alternatively be replaced with S340".

S340": Send the fifth image through the second port.

The fifth image and the second image can be sent to different apparatuses through the first port and the second port, so that the different apparatuses process or use the received images.

Manner 3" includes S31' and S32'. For related descriptions of S31' and S32', refer to the foregoing descriptions. Details are not described herein again. Further, in some embodiments, when the method 300 further includes S330 and S340, S340 may alternatively be replaced with S340‴.

S340‴: Send the fourth image through the second port.

The fourth image and the second image can be sent to different apparatuses through the first port and the second port, so that the different apparatuses process or use the received images.

An embodiment of this application further provides another image processing method 400. In the image processing method 400, second processing may be performed on a first stitched image, to obtain a first image and a second image.

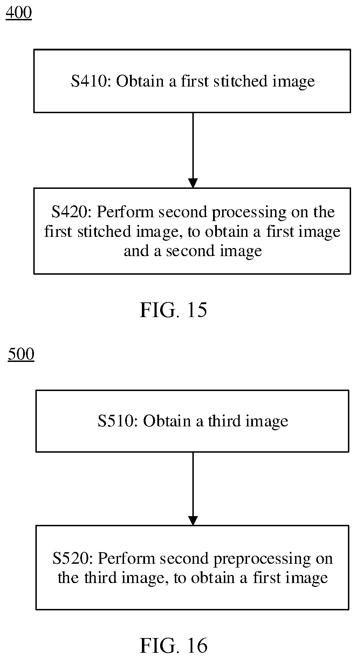

For example, FIG. 15 is a schematic flowchart of an example of the image processing method 400 according to an embodiment of this application.

As shown in FIG. 15, the method 400 includes the following steps.

S410: Obtain the first stitched image. A quantity of pixels of the first stitched image is (N+P)×Q. The first stitched image includes the second image and a third image. A quantity of pixels of the second image is P×Q, and Q>_M.

In some embodiments, S410 may be performed by an obtaining unit.

Optionally, in some embodiments, S410 may be obtaining the first stitched image from the obtaining unit of the foregoing first image processing apparatus.

S420: Perform second processing on the first stitched image, to obtain the first image and the second image. A quantity of pixels of the first image is M×N, and M>N. The second processing includes de-padding the first stitched image, to obtain a second stitched image. The second processing further includes rotating and segmenting the second stitched image, to obtain the first image and the second image.

In some embodiments, S420 specifically includes S421 to S423. The following specifically describes S421 to S423.

S421: De-pad the first stitched image, to obtain the second stitched image.

In some embodiments, the de-padding the first stitched image may be performing column de-padding on the third image in the first stitched image, so that a quantity of pixels in each column of the third image is reduced from Q to M, and a quantity of pixels in each row remains unchanged and is still N. In this way, the first stitched image is converted into an irregular image (namely, the second stitched image). In this case, a quantity of de-padded pixels is (Q-M)×N.

In some embodiments, de-padding may be performed from a first target position of the third image in the first stitched image, to obtain the second stitched image. For example, the first target position includes at least one of the following: a top position, a bottom position, or a middle position.

For related descriptions of the first target position, refer to the related descriptions in S12. Details are not described herein again.

For related descriptions of performing de-padding from the first target position of the third image in the first stitched image, refer to the related descriptions in FIG. 14. Details are not described herein again.

S422: Segment the second stitched image, to obtain the second image and a fourth image. In this case, a quantity of pixels of the fourth image is N×M.

In some embodiments, the second stitched image is horizontally segmented, to obtain the second image and the fourth image.

S423: Rotate the fourth image, to obtain the first image.

In some embodiments, the fourth image is rotated by (-90°-180°×n), to obtain the first image.

A value of n is consistent with the foregoing value of n.

For example, as shown in FIG. 12, according to 423, a fourth image 543 is rotated (for example, rotated counterclockwise by 90°), to obtain a first image 541. A quantity of pixels of the first image 541 is 480×240.

In some embodiments, S420 in the method 400 may be performed by a second processing unit. For example, the second processing unit may include but is not limited to an FPGA unit and/or a Ser.

In some embodiments, the method 400 further includes S430 and S440.

S430: Send the second image through a first port.

S440: Send the first image through a second port.

The first image and the second image can be sent to different apparatuses through the first port and the second port, so that the different apparatuses use the received images.

In some embodiments, S430 in the method 400 may be performed by a first sending unit. S440 in the method 400 may be performed by a second sending unit.

Optionally, in an embodiment in which the second processing unit includes an FPGA unit and a Ser, the Ser may perform a segmentation step in the method 400. The FPGA unit may perform steps other than the segmentation step in the method 400. For example, the FPGA unit may perform steps of de-padding and/or rotation in the method 400.

In some embodiments, the method 200 and the method 400 may be performed separately. In some other embodiments, the method 200 and the method 400 may be performed in combination. This is not limited in embodiments of this application.

In some embodiments, the foregoing first image processing apparatus may further include the obtaining unit, the second processing unit, the first sending unit, and/or the second sending unit. The obtaining unit in the first image processing apparatus performs S410, the second processing unit in the first image processing apparatus performs S420, the first sending unit in the first image processing apparatus performs S430, and the second sending unit in the first image processing apparatus performs S440.

According to the foregoing method 300 or 400, the second image does not need to be processed in a process of processing the first stitched image. In this way, complexity of processing the second image is not additionally increased. In addition, each row of the first stitched image includes a complete row of pixels of the second image. Pixels of the second image do not need to be buffered, and a row of pixels of the second image can be extracted only by performing simple segmentation on the first stitched image, so that the second image can be quickly forwarded in real time. In addition, the obtained first image and the obtained second image do not include padded pixels. In this way, in a subsequent process of transmitting the first image and the second image, in one aspect, no padded pixel occupies transmission bandwidth. This improves transmission efficiency of the first image and the second image. In another aspect, neither the first image nor the second image includes padded pixels, and pixel clocks (which refer to a quantity of image pixels transmitted per second) corresponding to the first image and the second image are small, so that a requirement for an interface on a device that receives the first image and the second image can be reduced.

In some embodiments, if the first image and/or the second image is an image formed by stitching a plurality of images, the method 300 or the method 400 further includes a step of segmenting the first image and/or the second image into a plurality of images. The method may further include a step of sending different segmented images through different ports.

An embodiment of this application further provides another image processing method 200". The method is applicable to an embodiment in which a quantity Q of column pixels of a second image is less than a quantity M of row pixels of a first image. In the method 200", the first image and the second image may be obtained based on a fourth stitched image. A quantity of row pixels of the first image is M, a quantity of column pixels is N, M>N, and N<Q. A quantity of row pixels of the second image is P, a quantity of column pixels is Q, and Q<M. A quantity of row pixels of the fourth stitched image is P+K×N, and a quantity of column pixels is Q. The fourth stitched image includes the second image and an image obtained through third preprocessing of the first image. The third preprocessing includes rotation and segmentation, or the third preprocessing includes rotation, segmentation, and padding.

The method 200" includes S210" to S220". The following specifically describes S210" to S220".

S210": Obtain the fourth stitched image. A quantity of pixels of the fourth stitched image is (P+K×N)×Q. The fourth stitched image includes a twelfth image and the second image. A quantity of row pixels of the twelfth image is K×N, and a quantity of column pixels is Q. A quantity of row pixels of the second image is P, and a quantity of column pixels is Q, where Q<M, M>N, and N<Q.

In some embodiments, S210" may be performed by an obtaining unit.

Optionally, in some embodiments, S210" may be obtaining the fourth stitched image from the sending unit of the first image processing apparatus in the foregoing method 200.

S220": Obtain the first image and the second image based on the fourth stitched image. The quantity of row pixels of the first image is M, the quantity of column pixels is N, M>N, and N<Q. The quantity of row pixels of the second image is P, the quantity of column pixels is Q, and Q<M. The quantity of row pixels of the fourth stitched image is P+K×N, and the quantity of column pixels is Q.

The following describes S220" by using S221" to S225" as an example. It should be understood that S221" to S225" are merely one possible implementation of S220", and there may be another implementation of S220". For example, after the following S223", a ninth image may be first rotated, then vertically segmented, and then horizontally stitched, to obtain the first image. A specific implementation of S220" is not limited in embodiments of this application.

S221": Segment the fourth stitched image, to obtain the twelfth image and the second image.

In some embodiments, the fourth stitched image is horizontally segmented, to obtain the twelfth image and the second image.

The fourth stitched image is horizontally segmented, so that image data can be more smoothly output on a first port and a second port subsequently. In other words, in a same time period, corresponding image data is output on both the ports.

If the twelfth image includes padded pixels, S222" further needs to be performed. In this case, M<K×Q. If the twelfth image does not include padded pixels, S222" does not need to be performed, and S223" to S225" are directly performed. In this case, M=K×Q, and the twelfth image is the following ninth image.

In some embodiments, after S221", S222" to S225" may not be performed.

S222": De-pad the twelfth image, to obtain the ninth image. A quantity of row pixels of the ninth image is K×N, and a quantity of column pixels is M/K. K>1, and K satisfies (K-1)×Q<M≤K×Q.

In some embodiments, the de-padding the twelfth image may be performing column de-padding on the twelfth image, so that a quantity of pixels in each column of the twelfth image is reduced from Q to M/K, and a quantity of pixels in each row remains unchanged and is still K×N. In this case, a quantity of de-padded pixels is N×(K×Q-M).

In some embodiments, de-padding may be performed from a first target position of the twelfth image, to obtain the ninth image.

For a part of the first target position that is not described, refer to the related descriptions in S 12. Details are not described herein again.

In some embodiments, after S222", S223" to S225" may not be performed.

In some embodiments, if M<K×Q, S221" and S222" may alternatively be replaced with S226" and S227".

S226": De-pad the fourth stitched image, to obtain a third stitched image.

In some embodiments, column de-padding is performed on the twelfth image in the fourth stitched image, so that a quantity of pixels in each column of the twelfth image is reduced from Q to M/K, and a quantity of pixels in each row remains unchanged and is still K×N. In this case, a quantity of de-padded pixels is N×(K×Q-M).

In this case, the third stitched image is an irregular image, a quantity of pixels in P columns of the third stitched image is Q, and a quantity of pixels in K×N columns is M/K. In other words, the quantity of pixels in M/K columns of the third stitched image is different from the quantity of pixels in other P columns.

In some embodiments, de-padding may be performed from a first target position of the twelfth image in the fourth stitched image, to obtain the third stitched image. For example, the first target position includes at least one of the following: a top position, a bottom position, or a middle position.

For related descriptions of the first target position, refer to the related descriptions in S12. Details are not described herein again.

S227": Horizontally segment the third stitched image, to obtain the second image and the ninth image. A quantity of row pixels of the ninth image is K×N, and a quantity of column pixels is M/K. K>1, and K satisfies (K-1)×Q<M≤K×Q.

In some embodiments, after S227", S223" to S225" may not be performed.

S223": Horizontally segment the ninth image, to obtain K sub-images. Quantities of row pixels of the K sub-images are all N, and quantities of column pixels of the K sub-images are all M/K.

In some embodiments, after S223", S224" and S225" may not be performed.

S224": Vertically stitch the K sub-images, to obtain a fourth image. A quantity of pixels of the fourth image is N×M.

In some embodiments, after S224", S225" may not be performed.

S225": Rotate the fourth image, to obtain the first image.

In some embodiments, the fourth image is rotated by (-90°-180°×n), to obtain the first image. In this case, a quantity of row pixels of the first image is M×N.

The method 200" may further include the foregoing S330 and S340. For descriptions of S330 and S340, refer to the foregoing descriptions. Details are not described herein again.

In some embodiments, S221" to S227" may be performed by a second processing unit. For example, the second processing unit may include but is not limited to an FPGA unit and/or a Ser.

In some embodiments, the method 200" and the method 200' may be performed separately. In some other embodiments, the method 200" and the method 200' may be performed in combination. In this case, the method 200' includes S211' and S215'. This is not limited in embodiments of this application.

In some embodiments, the foregoing first image processing apparatus may further include the obtaining unit, the second processing unit, the first sending unit, and/or the second sending unit. The obtaining unit in the first image processing apparatus performs S210", the second processing unit in the first image processing apparatus performs S221" to S225", the first sending unit in the first image processing apparatus performs S330, and the second sending unit in the first image processing apparatus performs S340.

An embodiment of this application further provides another image processing method 200‴. The method is applicable to an embodiment in which a quantity Q of column pixels of a second image is less than a quantity M of row pixels of a first image. The method 200‴ includes S210‴ to S220‴. The following specifically describes S210‴ to S220‴.

S210‴: Obtain a fifth stitched image. A quantity of pixels of the fifth stitched image is (P+K×N)×Q. The fifth stitched image includes an eleventh image and the second image. A quantity of row pixels of the eleventh image is K×N, and a quantity of column pixels is Q. A quantity of row pixels of the second image is P, and a quantity of column pixels is Q, where Q<M, M>N, N<Q, K>1, and K satisfies (K-1)×Q<M≤K×Q.

In some embodiments, S210‴ may be performed by an obtaining unit.

Optionally, in some embodiments, S210‴ may be obtaining the fifth stitched image from the sending unit of the first image processing apparatus in the foregoing method 200.

S220‴: Obtain the first image and the second image based on the fifth stitched image. A quantity of row pixels of the first image is M, a quantity of column pixels is N, M>N, and N<Q. The quantity of row pixels of the second image is P, the quantity of column pixels is Q, and Q<M. A quantity of row pixels of the fifth stitched image is P+K×N, and a quantity of column pixels is Q.

The following uses Manner 1‴ to Manner 3‴ as an example for description. It should be understood that Manner 1‴ to Manner 3‴ are merely three possible implementations of S220‴, and there may be another implementation of S220‴. For example, after the following S223‴, a tenth image may be first rotated and then de-padded, to obtain the first image. A specific implementation of S220‴ is not limited in embodiments of this application.

### Manner 1‴

Manner 1‴ may include S221‴ to S225‴. The following specifically describes S221‴ to S225‴.

S221‴: Segment the fifth stitched image, to obtain the eleventh image and the second image.

In some embodiments, the fifth stitched image is horizontally segmented, to obtain the eleventh image and the second image.

The fifth stitched image is horizontally segmented, so that image data can be more smoothly output on a first port and a second port subsequently. In other words, in a same time period, corresponding image data is output on both the ports.

In some embodiments, after S221‴, S224‴ and S225‴ may not be performed.

S222‴: Horizontally segment the eleventh image, to obtain K sub-images. Quantities of row pixels of the K sub-images are all N, and quantities of column pixels of the K sub-images are all Q.

In some embodiments, after S222‴, S223‴ to S225‴ may not be performed.

S223‴: Vertically stitch the K sub-images, to obtain the tenth image. In this case, a quantity of row pixels of the tenth image is N, and a quantity of column pixels is K×Q.

If the tenth image does not include padded pixel, S224‴ does not need to be performed, and S225‴ is directly performed. In this case, M=K×Q, and the tenth image is the following fourth image. If the tenth image includes padded pixels, S224‴ needs to be performed. In this case, M<K×Q.

In some embodiments, after S223‴, step S224‴ and step S225‴ may not be performed.

S224‴: De-pad the tenth image, to obtain a fourth image.

In some embodiments, the de-padding the tenth image may be performing column de-padding on the tenth image, so that a quantity of pixels in each column of the tenth image is reduced from K×Q to M, and a quantity of pixels in each row remains unchanged and is still N. In this case, a quantity of de-padded pixels is N×(K×Q-M), and a quantity of pixels of the fourth image is N×M.

In some embodiments, de-padding may be performed from a first target position of the tenth image, to obtain the fourth image.

For a part of the first target position that is not described, refer to the related descriptions in S 12. Details are not described herein again.

In some embodiments, after S224‴, S225‴ may not be performed.

S225‴: Rotate the fourth image, to obtain the first image.

In some embodiments, the fourth image is rotated by (-90°-180°×n), to obtain the first image. In this case, a quantity of row pixels of the first image is M×N.

### Manner 2‴

Manner 2‴ may include S226‴ to S230‴. The following specifically describes S226‴ to S230‴.

S226‴: De-pad the fifth stitched image, to obtain a third stitched image. In this case, a quantity of de-padded pixels is N×(K×Q-M).

In some embodiments, the de-padding the fifth stitched image may be performing row de-padding on the fifth stitched image, so that a quantity of pixels in at least K×Q-M rows of the fifth stitched image is reduced from P+K×N to a maximum of P+(K-1)×N.

In some embodiments, de-padding may be performed from a first target position of the fifth stitched image, to obtain the third stitched image.

For a part of the first target position that is not described, refer to the related descriptions in S 12. Details are not described herein again.

In this case, if M<K×Q, the fifth stitched image includes padded pixels. The third stitched image is an irregular image, and a quantity of pixels in at least K×Q-M rows in the third stitched image is P+(K-1)×N. In other words, the quantity of pixels in at least K×Q-M rows of the third stitched image is different from a quantity of pixels in other rows. If M=K×Q, the fifth stitched image does not include padded pixels, and an operation in S226‴ does not need to be performed. In this case, the fifth stitched image is the third stitched image in S227‴.

S227‴: Horizontally segment the third stitched image, to obtain a thirteenth image and the second image. In this case, a quantity of row pixels of the thirteenth image is K×N, and a quantity of column pixels is Q.

The third stitched image is horizontally segmented, so that image data can be more smoothly output on a first port and a second port subsequently. In other words, in a same time period, corresponding image data is output on both the ports.

In some embodiments, after S227‴, S228‴ to S230‴ may not be performed.

S228‴: Horizontally segment the thirteenth image, to obtain K sub-images. A quantity of row pixels of the K sub-images is N.

In some embodiments, after S228‴, step S229‴ and step S230‴ may not be performed.

S229‴: Vertically stitch the K sub-images, to obtain the fourth image. In this case, a quantity of pixels of the fourth image is N×M.

In some embodiments, after S229‴, S229‴ and S230‴ may not be performed.

S230‴: Rotate the fourth image, to obtain the first image.

In some embodiments, the fourth image is rotated by (-90°-180°×n), to obtain the first image. In this case, a quantity of row pixels of the first image is M×N.

### Manner 3‴

Manner 3‴ may include S221‴ and S231‴ to S234‴. For related descriptions of S221‴, refer to the foregoing descriptions. Details are not described herein again. The following specifically describes S231‴ to S234‴.

In some embodiments, after S221‴, S231‴ to S234‴ may not be performed.

S231‴: De-pad the eleventh image, to obtain the thirteenth image. In this case, a quantity of de-padded pixels is N×(K×Q-M).

In some embodiments, the de-padding the eleventh image may be performing row de-padding on the eleventh image, so that a quantity of pixels in at least K×Q-M rows of the eleventh image is reduced from P+K×N to a maximum of P+(K-1)×N.

In some embodiments, de-padding may be performed from a first target position of the eleventh image, to obtain the thirteenth image.

For a part of the first target position that is not described, refer to the related descriptions in S12. Details are not described herein again.

In this case, if M<K×Q, the eleventh image includes padded pixel. A quantity of pixels in at least K×Q-M rows in the thirteenth image is P+(K-1)×N. In other words, the quantity of pixels in at least K×Q-M rows of the thirteenth image is different from a quantity of pixels in other rows. If M=K×Q, the eleventh image does not include padded pixels, and an operation of S231‴ does not need to be performed. In this case, the eleventh image is the thirteenth image in S232‴.

In some embodiments, after S231‴, S232‴ to S234‴ may not be performed.

S232‴: Horizontally segment the thirteenth image, to obtain K sub-images. A quantity of row pixels of the K sub-images is N.

In some embodiments, after S232‴, S233‴ and S234‴ may not be performed.

S233‴: Vertically stitch the K sub-images, to obtain the fourth image. In this case, a quantity of pixels of the fourth image is N×M.

In some embodiments, after S233‴, S234‴ may not be performed.

S234‴: Rotate the fourth image, to obtain the first image.

In some embodiments, the fourth image is rotated by (-90°-180°×n), to obtain the first image. In this case, a quantity of row pixels of the first image is M×N.

The method 200‴ may further include the foregoing S330 and S340. For descriptions of S330 and S340, refer to the foregoing descriptions. Details are not described herein again.

In some embodiments, S220‴ may be performed by a second processing unit. For example, the second processing unit may include but is not limited to an FPGA unit and/or a Ser.

In some embodiments, the method 200‴ and the method 200' may be performed separately. In some other embodiments, the method 200‴ and the method 200' may be performed in combination. This is not limited in embodiments of this application.

In some embodiments, the foregoing first image processing apparatus may further include the obtaining unit, the second processing unit, the first sending unit, and/or the second sending unit. The obtaining unit in the first image processing apparatus performs S210‴, the second processing unit in the first image processing apparatus performs S220‴, the first sending unit in the first image processing apparatus performs S330, and the second sending unit in the first image processing apparatus performs S340.

In some embodiments, if the first image and/or the second image is an image formed by stitching a plurality of images, the method 200" or 200‴ further includes a step of segmenting the first image and/or the second image into a plurality of images. The method may further include a step of sending different segmented images through different ports.

According to the foregoing method 200" or 200‴, the second image does not need to be processed in a process of processing the fourth stitched image or the fifth stitched image. In this way, complexity of processing the second image is not additionally increased. In addition, each row of the fourth stitched image or the fifth stitched image includes a complete row of pixels of the second image. Pixels of the second image do not need to be buffered, and a row of pixels of the second image can be extracted only by performing simple segmentation on the fourth stitched image or the fifth stitched image, so that the second image can be quickly forwarded in real time. In addition, the obtained first image and the obtained second image do not include padded pixels. In this way, in a subsequent process of transmitting the first image and the second image, in one aspect, no padded pixel occupies transmission bandwidth. This improves transmission efficiency of the first image and the second image. In another aspect, neither the first image nor the second image includes padded pixels, and pixel clocks (which refer to a quantity of image pixels transmitted per second) corresponding to the first image and the second image are small, so that a requirement for an interface on a device that receives the first image and the second image can be reduced.

An embodiment of this application further provides another image processing method 500. In the image processing method 500, second preprocessing may be performed on a third image, to obtain a first image.

For example, FIG. 16 is a schematic flowchart of an example of the image processing method 500 according to an embodiment of this application.

As shown in FIG. 16, the method 500 includes the following steps.

S510: Obtain the third image.

In some embodiments, S510 may be performed by an obtaining unit.

Optionally, in some embodiments, S510 may be obtaining the third image by the obtaining unit of a second image processing apparatus.

S520: Perform second preprocessing on the third image, to obtain the first image. The second preprocessing includes rotating the third image, or the second preprocessing includes rotating and de-padding the third image.

In embodiments of this application, a manner of implementing S520 is not limited. The following describes S520 in detail by using Manner A to Manner C as an example.

In Manner A, the third image is rotated, to obtain the first image.

In some embodiments, the third image is rotated by (-90°-180°×n), to obtain the first image.

For related descriptions of Manner A, refer to the foregoing related descriptions of S12'. Details are not described herein again.

Manner B may include S521 and S522. The following specifically describes S521 and S522.

S521: Rotate the third image, to obtain a fifth image.

For related descriptions of S521, refer to the foregoing related descriptions of S22'. Details are not described herein again.

S522: De-pad the fifth image, to obtain the first image.

For related descriptions of S522, refer to the foregoing related descriptions of S23'. Details are not described herein again.

Manner C may include S521' and S522'. The following specifically describes S521' and S522'.

S521': De-pad the third image, to obtain a fourth image.

For related descriptions of S521', refer to the foregoing related descriptions of S32'. Details are not described herein again.

S522': Rotate the fourth image, to obtain the first image.

For related descriptions of S522', refer to the foregoing related descriptions of S33'. Details are not described herein again.

In some embodiments, S520 in the method 500 may be performed by a third processing unit. For example, the third processing unit may include but is not limited to an FPGA unit and/or a Des.

In some embodiments, the method 500 further includes S530.

S530: Send the first image.

In some embodiments, S530 in the method 500 may be performed by a sending unit.

In some embodiments, the method 500 is performed by the second image processing apparatus. Specifically, the second image processing apparatus includes the obtaining unit, the third processing unit, and the sending unit. The obtaining unit in the second image processing apparatus performs S510, the third processing unit in the second image processing apparatus performs S520, and the sending unit in the second image processing apparatus performs S530.

In some embodiments, the second image processing apparatus further includes a display. The sending unit of the second image processing apparatus sends the first image to the display, so that the second image processing apparatus displays the first image on the display.

For example, in embodiments of this application, for example, the second image processing apparatus includes but is not limited to an in-vehicle infotainment (in-vehicle infotainment, IVI) device, a head-up display (head-up display, HUD) device, and the like.

In some embodiments, the second image processing apparatus further includes a second interface. The sending unit of the second image processing apparatus sends the first image to the display through the second interface.

For example, in embodiments of this application, the second interface includes but is not limited to an MIPI, an oLDI, or a DP.

An embodiment of this application further provides another image processing method 600. In the image processing method 600, a fifth image may be de-padded, to obtain a first image.

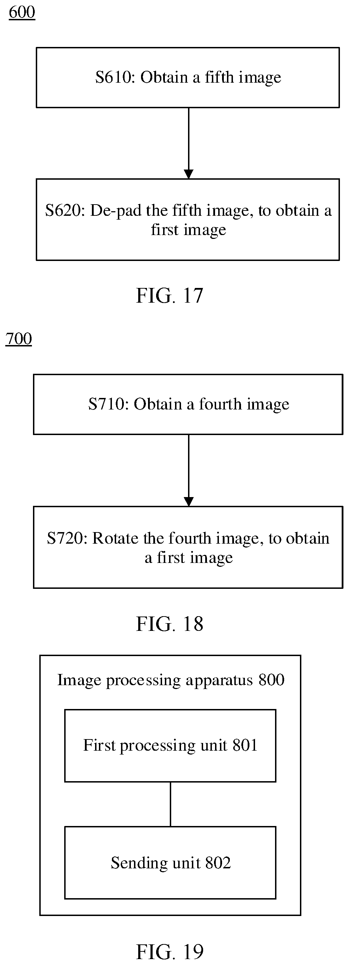

For example, FIG. 17 is a schematic flowchart of an example of the image processing method 600 according to an embodiment of this application.

As shown in FIG. 17, the method 600 includes the following steps.

S610: Obtain the fifth image.

In some embodiments, S610 may be performed by an obtaining unit.

Optionally, in some embodiments, S610 may be obtaining the fifth image by the obtaining unit of a second image processing apparatus.

S620: De-pad the fifth image, to obtain the first image.

For related descriptions of S620, refer to the foregoing related descriptions of S23'. Details are not described herein again.

In some embodiments, S620 in the method 600 may be performed by a third processing unit. For example, the third processing unit may include but is not limited to an FPGA unit and/or a Des.

In some embodiments, the method 600 further includes S630.

S630: Send the first image.

In some embodiments, S630 in the method 600 may be performed by a sending unit.

In some embodiments, the foregoing second image processing apparatus may further include the obtaining unit, the third processing unit, and the sending unit. The obtaining unit in the second image processing apparatus performs S610, the third processing unit in the second image processing apparatus performs S620, and the sending unit in the second image processing apparatus performs S630.

In some embodiments, the second image processing apparatus further includes a display. The sending unit of the second image processing apparatus sends the first image to the display, so that the second image processing apparatus displays the first image on the display.

In some embodiments, the second image processing apparatus further includes a second interface. The sending unit of the second image processing apparatus sends the first image to the display through the second interface.

An embodiment of this application further provides an image processing method 700. In the image processing method 700, a fourth image may be rotated, to obtain a first image.

For example, FIG. 18 is a schematic flowchart of an example of the image processing method 700 according to an embodiment of this application.

As shown in FIG. 18, the method 700 includes the following steps.

S710: Obtain the fourth image.

In some embodiments, S710 may be performed by an obtaining unit.

Optionally, in some embodiments, S710 may be obtaining the fourth image by the obtaining unit of a second image processing apparatus.

S720: Rotate the fourth image, to obtain the first image.

For related descriptions of S720, refer to the foregoing related descriptions of S33'. Details are not described herein again.

In some embodiments, S720 in the method 700 may be performed by a third processing unit. For example, the third processing unit may include but is not limited to an FPGA unit and/or a Des.

In some embodiments, the method 700 further includes S730.

S730: Send the first image.

In some embodiments, S730 in the method 700 may be performed by a sending unit.

In some embodiments, the foregoing second image processing apparatus may further include the obtaining unit, the third processing unit, and the sending unit. The obtaining unit in the second image processing apparatus performs S710, the third processing unit in the second image processing apparatus performs S720, and the sending unit in the second image processing apparatus performs S730.

In some embodiments, the second image processing apparatus further includes a display. The sending unit of the second image processing apparatus sends the first image to the display, so that the second image processing apparatus displays the first image on the display.

In some embodiments, the second image processing apparatus further includes a second interface. The sending unit of the second image processing apparatus sends the first image to the display through the second interface.

The first image obtained according to the foregoing method 500, 600, or 700 does not include padded pixels. In this way, in a subsequent process of transmitting the first image, in one aspect, no padded pixel occupies transmission bandwidth. This improves transmission efficiency of the first image. In another aspect, the first image does not include padded pixels, and a pixel clock corresponding to the first image is small, so that a requirement for an interface on a device that receives the first image can be reduced.

An embodiment of this application further provides still another image processing method. In the method, a first image may be obtained based on a twelfth image, an eleventh image, or a thirteenth image.

In a possible implementation, the method includes S810 and S222" to S225".

S810: Obtain the twelfth image. Aquantity of row pixels of the twelfth image is K×NP, and a quantity of column pixels is MQ. A quantity of pixels of a fourth image is N×, where Q<M, M>N, and N<Q.

For descriptions of S222" to S225", refer to the foregoing related descriptions. Details are not described herein again.

In another possible implementation, the method may include S810, S222", S226", and S227".

For descriptions of S222", S226", and S227", refer to the foregoing related descriptions. Details are not described herein again.

In still another possible implementation, the method may include S820 and S222‴ to S225‴.

S820: Obtain the eleventh image. A quantity of row pixels of the eleventh image is K×N, and a quantity of column pixels is Q.

For descriptions of S222‴ to S225‴, refer to the foregoing related descriptions. Details are not described herein again.

In still another possible implementation, the method may include S820 and S231‴ to S234‴.

For descriptions of S231‴ to S234‴, refer to the foregoing related descriptions. Details are not described herein again.

In still another possible implementation, the method may include S830 and S228‴ to S230‴.

S830: Obtain the thirteenth image. A quantity of row pixels of the thirteenth image is K×N, and a quantity of column pixels is Q.

For descriptions of S228‴ to S230‴, refer to the foregoing related descriptions. Details are not described herein again.

In some embodiments, S222" to S225", S222", S226", and S227", S222‴ to S225‴, S231‴ to S234‴, or S228‴ to S230‴ in the method may be performed by a third processing unit. For example, the third processing unit may include but is not limited to an FPGA unit and/or a Des.

In some embodiments, the method further includes S840.

S840: Send the first image.

In some embodiments, S840 in the method 700 may be performed by a sending unit.

In some embodiments, the foregoing second image processing apparatus may further include the obtaining unit, the third processing unit, and the sending unit. The obtaining unit in the second image processing apparatus performs S810, S820, or S830, the third processing unit in the second image processing apparatus performs S222" to S225", S222", S226", and S227", S222‴ to S225‴, S231‴ to S234‴, or S228‴ to S230‴, and the sending unit in the second image processing apparatus performs S840.

In some embodiments, the second image processing apparatus further includes a display. The sending unit of the second image processing apparatus sends the first image to the display, so that the second image processing apparatus displays the first image on the display.

In some embodiments, the second image processing apparatus further includes a second interface. The sending unit of the second image processing apparatus sends the first image to the display through the second interface.

The first image obtained according to the method does not include padded pixels. In this way, in a subsequent process of transmitting the first image, in one aspect, no padded pixel occupies transmission bandwidth. This improves transmission efficiency of the first image. In another aspect, the first image does not include padded pixels, and a pixel clock corresponding to the first image is small, so that a requirement for an interface on a device that receives the first image can be reduced.

In embodiments of this application, image stitching and/or segmentation are/is described by using an image in a displayed state. In a specific implementation process, image stitching and/or segmentation may be implemented by changing a storage address of each pixel in the image.

The foregoing describes in detail the image processing method provided in this application with reference to FIG. 5 and FIG. 18. The following describes in detail embodiments of an image processing apparatus in this application with reference to FIG. 19 to FIG. 23. It may be understood that, to implement functions in the foregoing embodiments, the image processing apparatus in FIG. 19 to FIG. 23 include corresponding hardware structures and/or software modules for performing the functions. A person skilled in the art should be easily aware that, in combination with the units and the method steps in the examples described in the embodiments disclosed in this application, this application can be implemented by using hardware or a combination of hardware and computer software. Whether a function is performed by using hardware or hardware driven by computer software depends on particular application scenarios and design constraints of the technical solutions.

FIG. 19 is a schematic diagram of a structure of an example of an image processing apparatus according to an embodiment of this application.

For example, as shown in FIG. 19, the image processing apparatus 800 includes: a first processing unit 801, configured to obtain a first stitched image based on a first image and a second image; and a sending unit 802, configured to send the first stitched image, where a quantity of row pixels of the first image is M, a quantity of column pixels is N, M>N, and both M and N are positive integers; a quantity of row pixels of the second image is P, a quantity of column pixels is Q, Q≥M, and both P and Q are positive integers; and a quantity of row pixels of the first stitched image is N+P, a quantity of column pixels is Q, the first stitched image includes the second image and a third image, the third image is an image obtained through first preprocessing of the first image, and the first preprocessing includes rotating the first image, or the first preprocessing includes rotating and padding the first image.

For example, the first processing unit 801 includes a system on a chip SoC.

In some embodiments, that the first processing unit 801 is configured to obtain the first stitched image based on the first image and the second image includes: The first processing unit 801 is specifically configured to: rotate the first image, to obtain the third image; and stitch the third image and the second image, to obtain the first stitched image.

Optionally, the first processing unit 801 is further specifically configured to rotate the first image by (90°+180°×n), to obtain the third image, where n is an integer.

In some other embodiments, the first processing unit 801 is specifically configured to: rotate the first image, to obtain a fourth image; perform pixel padding on the fourth image, to obtain the third image; and stitch the third image and the second image, to obtain the first stitched image.

Optionally, that the first processing unit 801 is specifically configured to perform pixel padding on the fourth image to obtain the third image includes: The first processing unit 801 is specifically configured to perform pixel padding from a first target position of the fourth image, to obtain the third image, where the first target position includes at least one of the following: a top position, a bottom position, or a middle position.

In some other embodiments, the first processing unit 801 is specifically configured to: perform pixel padding on the first image, to obtain a fifth image; rotate the fifth image, to obtain the third image; and stitch the third image and the second image, to obtain the first stitched image.

Optionally, that the first processing unit 801 is specifically configured to perform pixel padding on the first image to obtain the fifth image includes: The first processing unit 801 is specifically configured to perform pixel padding from a second target position of the first image, to obtain the fifth image, where the second target position includes at least one of the following: a left position, a right position, or a middle position.

Optionally, the first processing unit 801 is further specifically configured to rotate the first image by (90°+180°×n), to obtain the fifth image, where n is an integer.

In some other embodiments, the first processing unit 801 is specifically configured to: rotate the first image, to obtain a fourth image; stitch the fourth image and the second image, to obtain a second stitched image; and perform pixel padding on the second stitched image, to obtain the first stitched image.

Optionally, that the first processing unit 801 is specifically configured to perform pixel padding on the fourth image to obtain the third image includes: The first processing unit 801 is specifically configured to perform pixel padding from a first target position of the fourth image, to obtain the third image, where the first target position includes at least one of the following: a top position, a bottom position, or a middle position.

Optionally, the first processing unit 801 is further specifically configured to rotate the first image by (90°+180°×n), to obtain the fourth image, where n is an integer.

Optionally, the sending unit 802 is specifically configured to send the first stitched image to a second processing unit or a transmission unit.

For example, the second processing unit includes an FPGA unit and/or a Ser.

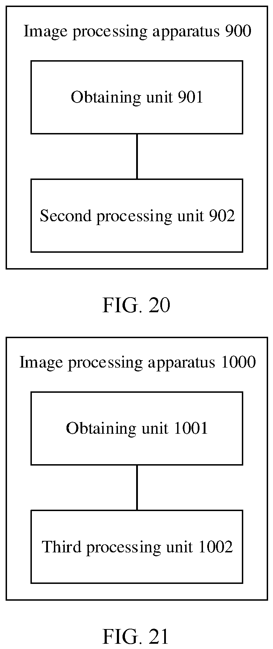

FIG. 20 is a schematic diagram of a structure of another example of an image processing apparatus according to an embodiment of this application.

For example, as shown in FIG. 20, the image processing apparatus 900 includes an obtaining unit 901 and a second processing unit 902.

For example, the second processing unit 902 includes an FPGA unit and/or a Ser.

In a possible implementation, the obtaining unit 901 configured to obtain a first stitched image. The second processing unit 902 configured to perform first processing on the first stitched image, to obtain a first image and a second image. A quantity of row pixels of the first stitched image is N+P, a quantity of column pixels is Q, the first stitched image includes the second image and a third image, and N, P, and Q are all positive integers. A quantity of row pixels of the first image is M, a quantity of column pixels is N, M>N, and M is a positive integer. A quantity of row pixels of the second image is P, a quantity of column pixels is Q, and Q>_M. The first processing includes segmenting the first stitched image to obtain the second image and the third image. The first processing further includes rotating the third image, or the first processing further includes rotating and de-padding the third image.

In some embodiments, the second processing unit 902 is specifically configured to: segment the first stitched image, to obtain the second image and the third image; and rotate the third image, to obtain the first image.

Optionally, the second processing unit 902 is further specifically configured to rotate the third image by (-90°-180°×n), to obtain the first image, where n is an integer.

In some other embodiments, the second processing unit 902 is specifically configured to: segment the first stitched image, to obtain the second image and the third image; rotate the third image, to obtain a fifth image; and de-pad the fifth image, to obtain the first image.

Optionally, that the second processing unit 902 is specifically configured to de-pad the fifth image to obtain the first image includes: The second processing unit 902 is specifically configured to perform de-padding from a second target position of the fifth image, to obtain the first image, where the second target position includes at least one of the following: a left position, a right position, or a middle position.

Optionally, the second processing unit 902 is further specifically configured to rotate the third image by (-90°-180°×n), to obtain the fifth image, where n is an integer.

In some other embodiments, the second processing unit 902 is further specifically configured to: segment the first stitched image, to obtain the second image and the third image; de-pad the third image, to obtain a fourth image; and rotate the fourth image, to obtain the first image.

Optionally, that the second processing unit 902 is further specifically configured to de-pad the third image to obtain the fourth image includes: The second processing unit 902 is specifically configured to perform de-padding from a first target position of the third image, to obtain the fourth image, where the first target position includes at least one of the following: a top position, a bottom position, or a middle position.

Optionally, the second processing unit 902 is further specifically configured to rotate the fourth image by (-90°-180°×n), to obtain the first image, where n is an integer.

Optionally, the apparatus 900 further includes a first sending unit, a second sending unit, a first port, and a second port, where the first sending unit is configured to send the second image through the first port, and the second sending unit is configured to send the first image through the second port.

In another possible implementation, the obtaining unit 901 is configured to obtain a first stitched image. The second processing unit 902 is configured to perform second processing on the first stitched image, to obtain a first image and a second image. A quantity of row pixels of the first stitched image is N+P, a quantity of column pixels is Q, the first stitched image includes the second image and a third image, and N, P, and Q are all positive integers. A quantity of row pixels of the first image is M, a quantity of column pixels is N, M>N, and M is a positive integer. A quantity of row pixels of the second image is P, a quantity of column pixels is Q, and Q≥M. The second processing includes de-padding the first stitched image to obtain a second stitched image. The second processing further includes rotating and segmenting the second stitched image to obtain the first image and the second image.

In some embodiments, the second processing unit 902 is specifically configured to: de-pad the first stitched image, to obtain the second stitched image; segment the second stitched image, to obtain the second image and a fourth image; and rotate the fourth image, to obtain the first image.

Optionally, that the second processing unit 902 is specifically configured to de-pad the first stitched image to obtain the second stitched image includes: The second processing unit 902 is specifically configured to perform de-padding from a first target position of the third image in the first stitched image, to obtain the second stitched image, where the first target position includes at least one of the following: a top position, a bottom position, or a middle position.

Optionally, the second processing unit 902 is further specifically configured to rotate the fourth image by (-90°-180°×n), to obtain the first image, where n is an integer.

Optionally, the apparatus 900 further includes a first sending unit, a second sending unit, a first port, and a second port, where the first sending unit is configured to send the second image through the first port, and the second sending unit is configured to send the first image through the second port.

FIG. 21 is a schematic diagram of a structure of another example of an image processing apparatus according to an embodiment of this application.

For example, as shown in FIG. 21, the image processing apparatus 1000 includes an obtaining unit 1001 and a third processing unit 1002.

For example, the third processing unit 1002 includes an FPGA unit and/or a Des.

In a possible implementation, the obtaining unit 1001 is configured to obtain a third image. The third processing unit 1002 is configured to perform second preprocessing on the third image, to obtain a first image. The second preprocessing includes rotating the third image, or the second preprocessing includes rotating and de-padding the third image.

In some embodiments, the third processing unit 1002 is specifically configured to rotate the third image, to obtain the first image.

Optionally, the third processing unit 1002 is further specifically configured to rotate the third image by (-90°-180°×n), to obtain the first image, where n is an integer.

In some other embodiments, the third processing unit 1002 is specifically configured to: rotate the third image, to obtain a fifth image; and de-pad the fifth image, to obtain the first image.

Optionally, that the third processing unit 1002 is specifically configured to de-pad the fifth image to obtain the first image includes: The third processing unit 1002 is specifically configured to perform de-padding from a second target position of the fifth image, to obtain the first image, where the second target position includes at least one of the following: a left position, a right position, or a middle position.

Optionally, the third processing unit 1002 is further specifically configured to rotate the third image by (-90°-180°×n), to obtain the fifth image, where n is an integer.

In some other embodiments, the third processing unit 1002 is specifically configured to: de-pad the third image, to obtain a fourth image; and rotate the fourth image to obtain the first image.

Optionally, that the third processing unit 1002 is specifically configured to de-pad the third image to obtain the fourth image includes: The third processing unit 1002 is specifically configured to perform de-padding from a first target position of the third image, to obtain the fourth image, where the first target position includes at least one of the following: a top position, a bottom position, or a middle position.

Optionally, the third processing unit 1002 is further specifically configured to rotate the fourth image by (-90°-180°×n), to obtain the first image, where n is an integer.

Optionally, the apparatus 1000 further includes a sending unit, configured to send the first image.

In another possible implementation, the obtaining unit 1001 is configured to obtain a fifth image. The third processing unit 1002 is configured to de-pad the fifth image, to obtain the first image.

Optionally, that the third processing unit 1002 is configured to de-pad the fifth image to obtain the first image includes: The third processing unit 1002 is specifically configured to perform de-padding from a second target position of the fifth image, to obtain the first image, where the second target position includes at least one of the following: a left position, a right position, or a middle position.

Optionally, the apparatus 1000 further includes a sending unit, configured to send the first image.

In still another possible implementation, the obtaining unit 1001 is configured to obtain a fourth image. The third processing unit 1002 is configured to rotate the fourth image, to obtain a first image.

Optionally, the third processing unit 1002 is further specifically configured to rotate the fourth image by (-90°-180°×n), to obtain the first image, where n is an integer.

Optionally, the apparatus 1000 further includes a sending unit, configured to send the first image.

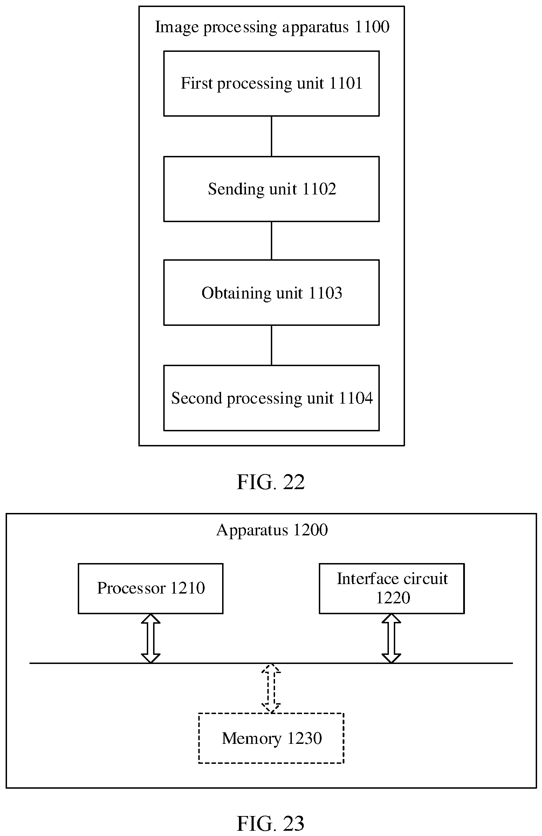

FIG. 22 is a schematic diagram of a structure of still another example of an image processing apparatus according to an embodiment of this application.

For example, as shown in FIG. 22, the image processing apparatus 1100 includes a first processing unit 1101, a sending unit 1102, an obtaining unit 1103, and a second processing unit 1104.

For example, the apparatus 1100 is a domain controller, for example, a CDC or an MDC.

For example, the first processing unit 1101 includes a system on a chip SoC.

For example, the second processing unit 1104 includes an FPGA unit and/or a Ser.

In a possible implementation, the first processing unit 1101 is configured to obtain a first stitched image based on a first image and a second image. The sending unit 1102 is configured to send the first stitched image. The obtaining unit 1103 is configured to obtain the first stitched image. The second processing unit 1104 is configured to perform first processing on the first stitched image, to obtain the first image and the second image. A quantity of row pixels of the first image is M, a quantity of column pixels is N, M>N, and both M and N are positive integers. A quantity of row pixels of the second image is P, a quantity of column pixels is Q, Q>_M, and both P and Q are positive integers. A quantity of row pixels of the first stitched image is N+P, and a quantity of column pixels is Q. The first stitched image includes the second image and a third image, the third image is an image obtained through first preprocessing of the first image, and the first preprocessing includes rotating the first image, or the first preprocessing includes rotating and padding the first image. The first processing includes segmenting the first stitched image to obtain the second image and the third image. The first processing further includes rotating the third image, or the first processing further includes rotating and de-padding the third image.

In some embodiments, that the first processing unit 1101 is configured to obtain the first stitched image based on the first image and the second image includes: The first processing unit 1101 is specifically configured to: rotate the first image, to obtain the third image; and stitch the third image and the second image, to obtain the first stitched image.

Optionally, the first processing unit 1101 is further specifically configured to rotate the first image by (90°+180°×n), to obtain the third image, where n is an integer.

In some other embodiments, the first processing unit 1101 is specifically configured to: rotate the first image, to obtain a fourth image; perform pixel padding on the fourth image, to obtain the third image; and stitch the third image and the second image, to obtain the first stitched image.

Optionally, that the first processing unit 1101 is specifically configured to perform pixel padding on the fourth image to obtain the third image includes: The first processing unit 1101 is specifically configured to perform pixel padding from a first target position of the fourth image, to obtain the third image, where the first target position includes at least one of the following: a top position, a bottom position, or a middle position.

In some other embodiments, the first processing unit 1101 is specifically configured to: perform pixel padding on the first image, to obtain a fifth image; rotate the fifth image, to obtain the third image; and stitch the third image and the second image, to obtain the first stitched image.

Optionally, that the first processing unit 1101 is specifically configured to perform pixel padding on the first image to obtain the fifth image includes: The first processing unit 1101 is specifically configured to perform pixel padding from a second target position of the first image, to obtain the fifth image, where the second target position includes at least one of the following: a left position, a right position, or a middle position.

Optionally, the first processing unit 1101 is further specifically configured to rotate the first image by (90°+180°×n), to obtain the fifth image, where n is an integer.

In some other embodiments, the first processing unit 1101 is specifically configured to: rotate the first image, to obtain a fourth image; stitch the fourth image and the second image, to obtain a second stitched image; and perform pixel padding on the second stitched image, to obtain the first stitched image.

Optionally, that the first processing unit 1101 is specifically configured to perform pixel padding on the fourth image to obtain the third image includes: The first processing unit 1101 is specifically configured to perform pixel padding from a first target position of the fourth image, to obtain the third image, where the first target position includes at least one of the following: a top position, a bottom position, or a middle position.

Optionally, the first processing unit 1101 is further specifically configured to rotate the first image by (90°+180°×n), to obtain the fourth image, where n is an integer.

Optionally, the sending unit 1102 is specifically configured to send the first stitched image to the second processing unit 1104 or a transmission unit.

In some embodiments, the first processing unit 1101 is specifically configured to: segment the first stitched image, to obtain the second image and the third image; and rotate the third image, to obtain the first image.

Optionally, the second processing unit 1104 is further specifically configured to rotate the third image by (-90°-180°×n), to obtain the first image, where n is an integer.

In some other embodiments, the second processing unit 1104 is specifically configured to: segment the first stitched image, to obtain the second image and the third image; rotate the third image, to obtain a fifth image; and de-pad the fifth image, to obtain the first image.

Optionally, that the second processing unit 1104 is specifically configured to de-pad the fifth image to obtain the first image includes: The second processing unit 1104 is specifically configured to perform de-padding from a second target position of the fifth image, to obtain the first image, where the second target position includes at least one of the following: a left position, a right position, or a middle position.

Optionally, the second processing unit 1104 is further specifically configured to rotate the third image by (-90°-180°×n), to obtain the fifth image, where n is an integer.

In some other embodiments, the second processing unit 1104 is further specifically configured to: segment the first stitched image, to obtain the second image and the third image; de-pad the third image, to obtain a fourth image; and rotate the fourth image, to obtain the first image.

Optionally, that the second processing unit 1104 is further specifically configured to de-pad the third image to obtain the fourth image includes: The second processing unit 1104 is specifically configured to perform de-padding from a first target position of the third image, to obtain the fourth image, where the first target position includes at least one of the following: a top position, a bottom position, or a middle position.

Optionally, the second processing unit 1104 is further specifically configured to rotate the fourth image by (-90°-180°×n), to obtain the first image, where n is an integer.

Optionally, the apparatus 1100 further includes a first sending unit, a second sending unit, a first port, and a second port, where the first sending unit is configured to send the second image through the first port, and the second sending unit is configured to send the first image through the second port.

In another possible implementation, the first processing unit 1101 is configured to obtain a first stitched image based on a first image and a second image. The sending unit 1102 is configured to send the first stitched image. The obtaining unit 1103 is configured to obtain the first stitched image. The second processing unit 1104 is configured to perform second processing on the first stitched image, to obtain the first image and the second image. A quantity of row pixels of the first image is M, a quantity of column pixels is N, M>N, and M and N are both positive integers. A quantity of row pixels of the second image is P, a quantity of column pixels is Q, Q>_M, and both P and Q are positive integers. A quantity of row pixels of the first stitched image is N+P, and a quantity of column pixels is Q. The first stitched image includes the second image and a third image, and the third image is an image obtained through first preprocessing of the first image. The first preprocessing includes rotating the first image, or the first preprocessing includes rotating and padding the first image. The second processing includes de-padding the first stitched image to obtain a second stitched image. The second processing further includes rotating and segmenting the second stitched image to obtain the first image and the second image.

In some embodiments, that the first processing unit 1101 is configured to obtain the first stitched image based on the first image and the second image includes: The first processing unit 1101 is specifically configured to: rotate the first image, to obtain the third image; and stitch the third image and the second image, to obtain the first stitched image.

Optionally, the first processing unit 1101 is further specifically configured to rotate the first image by (90°+180°×n), to obtain the third image, where n is an integer.

In some other embodiments, the first processing unit 1101 is specifically configured to: rotate the first image, to obtain a fourth image; perform pixel padding on the fourth image, to obtain the third image; and stitch the third image and the second image, to obtain the first stitched image.

Optionally, that the first processing unit 1101 is specifically configured to perform pixel padding on the fourth image to obtain the third image includes: The first processing unit 1101 is specifically configured to perform pixel padding from a first target position of the fourth image, to obtain the third image, where the first target position includes at least one of the following: a top position, a bottom position, or a middle position.

In some other embodiments, the first processing unit 1101 is specifically configured to: perform pixel padding on the first image, to obtain a fifth image; rotate the fifth image, to obtain the third image; and stitch the third image and the second image, to obtain the first stitched image.

Optionally, that the first processing unit 1101 is specifically configured to perform pixel padding on the first image to obtain the fifth image includes: The first processing unit 1101 is specifically configured to perform pixel padding from a second target position of the first image, to obtain the fifth image, where the second target position includes at least one of the following: a left position, a right position, or a middle position.

Optionally, the first processing unit 1101 is further specifically configured to rotate the first image by (90°+180°×n), to obtain the fifth image, where n is an integer.

In some other embodiments, the first processing unit 1101 is specifically configured to: rotate the first image, to obtain a fourth image; stitch the fourth image and the second image, to obtain a second stitched image; and perform pixel padding on the second stitched image, to obtain the first stitched image.

Optionally, that the first processing unit 1101 is specifically configured to perform pixel padding on the fourth image to obtain the third image includes: The first processing unit 1101 is specifically configured to perform pixel padding from a first target position of the fourth image, to obtain the third image, where the first target position includes at least one of the following: a top position, a bottom position, or a middle position.

Optionally, the first processing unit 1101 is further specifically configured to rotate the first image by (90°+180°×n), to obtain the fourth image, where n is an integer.

Optionally, the sending unit is specifically configured to send the first stitched image to the second processing unit 1104 or a transmission unit.

In some embodiments, the second processing unit 1104 is specifically configured to: de-pad the first stitched image, to obtain the second stitched image; segment the second stitched image, to obtain the second image and a fourth image; and rotate the fourth image, to obtain the first image.

Optionally, that the second processing unit 1104 is specifically configured to de-pad the fifth image to obtain the first image includes: The second processing unit 1104 is specifically configured to perform de-padding from a second target position of the fifth image, to obtain the first image, where the second target position includes at least one of the following: a left position, a right position, or a middle position.

Optionally, the second processing unit 1104 is further specifically configured to rotate the fourth image by (-90°-180°×n), to obtain the first image, where n is an integer.

Optionally, the apparatus 1100 further includes a first sending unit, a second sending unit, a first port, and a second port, where the first sending unit is configured to send the second image through the first port, and the second sending unit is configured to send the first image through the second port.

In some other embodiments, the second processing unit 1104 is specifically configured to: de-pad the first stitched image, to obtain the second stitched image; segment the second stitched image, to obtain the second image and a fourth image; and rotate the fourth image, to obtain the first image.

Optionally, that the second processing unit 1104 is specifically configured to de-pad the fifth image to obtain the first image includes: The second processing unit 1104 is specifically configured to perform de-padding from a second target position of the fifth image, to obtain the first image, where the second target position includes at least one of the following: a left position, a right position, or a middle position.

Optionally, the second processing unit 1104 is further specifically configured to rotate the fourth image by (-90°-180°×n), to obtain the first image, where n is an integer.

Optionally, the apparatus 1100 further includes a first sending unit, a second sending unit, a first port, and a second port, where the first sending unit is configured to send the second image through the first port, and the second sending unit is configured to send the first image through the second port.

In some embodiments, units (or components) included in the apparatus 800, the apparatus 900, the apparatus 1000, or the apparatus 1100 may be disposed in one unit (or component). In some other embodiments, at least two units (or components) in units (or components) included in the apparatus 800, the apparatus 900, the apparatus 1000, or the apparatus 1100 are disposed in a same unit. This is not limited in embodiments of this application.

FIG. 23 is a schematic diagram of a structure of another example of an image processing apparatus according to an embodiment of this application.

As shown in FIG. 23, the image processing apparatus 1200 includes at least one processor 1201 and an interface circuit 1202.

Optionally, the image processing apparatus 1200 may further include a memory 1203, and the memory 1203 is configured to store a program.

For example, the memory 1203 may be a read-only memory (read-only memory, ROM), a static storage device, a dynamic storage device, or a random access memory (random access memory, RAM). The memory 1203 may store a program. When the program stored in the memory 1203 is executed by the processor 1201, the processor 1201 and the interface circuit 1202 may be configured to perform steps of the image processing method 200, the method 200', the method 300, the method 400, the method 200", the method 500, the method 600, or the method 700 provided in embodiments of this application. In other words, the processor 1201 may obtain stored instructions from the memory 1203 through the interface circuit 1202, to perform the steps of the image processing method 200, the method 200', the method 300, the method 400, the method 200", the method 500, the method 600, or the method 700 provided in embodiments of this application.

For example, the processor 1201 may be configured to execute a related program by using a general-purpose central processing unit (central processing unit, CPU), a microprocessor, an application-specific integrated circuit (application-specific integrated circuit, ASIC), a graphic processing unit (graphic processing unit, GPU), or one or more integrated circuits, to implement a function that needs to be executed by a unit in any one of possible implementations in the image processing apparatus 1200 provided in an embodiment of this application, or perform steps of the image processing method 200, the method 200', the method 300, the method 400, the method 200", the method 500, the method 600, or the method 700 provided in embodiments of this application.

For example, the processor 1201 may alternatively be an integrated circuit chip and has a signal processing capability. In an implementation process, the steps of the image processing method 200, the method 200', the method 300, the method 400, the method 200", the method 500, the method 600, or the method 700 provided in embodiments of this application may be completed by an integrated logic circuit in a form of hardware or instructions in a form of software in the processor.

For example, the processor 1201 may alternatively be a general-purpose processor, a digital signal processor (digital signal processor, DSP), an application-specific integrated circuit (ASIC), an FPGA or another programmable logic device, a discrete gate or transistor logic device, or a discrete hardware component. The steps of the image processing method 200, the method 200', the method 300, the method 400, the method 200", the method 500, the method 600, or the method 700 provided in embodiments of this application may be implemented or performed. The general-purpose processor may be a microprocessor, or the processor may be any conventional processor or the like. The steps of the image processing method 200, the method 200', the method 300, the method 400, the method 200", the method 500, the method 600, or the method 700 provided in embodiments of this application may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes, in combination with hardware of the processor, a function that needs to be executed by a unit included in any one of possible implementations of the image processing apparatus 1200 in an embodiment of this application, or performs steps of the image processing method 200, the method 200', the method 300, the method 400, the method 200", the method 500, the method 600, or the method 700 provided in embodiments of this application.

For example, the interface circuit 1202 may use a transceiver apparatus, for example, but not limited to, a transceiver, to implement communication between the apparatus and another device or a communication network. The interface circuit 1202 may be, for example, a communication interface.

The descriptions of the procedures corresponding to the foregoing accompanying drawings have respective focuses. For a part that is not described in detail in a procedure, refer to related descriptions of another procedure.

An embodiment of this application further provides a computer-readable storage medium. The computer-readable storage medium has program instructions. When the program instructions are directly or indirectly executed, the foregoing image processing method is implemented.

An embodiment of this application further provides a terminal device. The terminal device includes the foregoing first image processing apparatus and/or the foregoing second image processing apparatus.

Further, the terminal may be an intelligent transportation device (a vehicle or an uncrewed aerial vehicle), a smart home device, an intelligent manufacturing device, an intelligent wearable device, a robot, or the like. The intelligent transportation device may be, for example, an AGV or an unmanned transportation vehicle.

An embodiment of this application further provides a computer program product including instructions. When the computer program product runs on a computing device, the computing device is enabled to perform the foregoing image processing method, or the computing device is enabled to implement a function of the foregoing image processing apparatus.

An embodiment of this application further provides a chip, including at least one processor and an interface circuit. The interface circuit is configured to provide program instructions or data for the at least one processor. The at least one processor is configured to execute the program instructions, to implement the foregoing image processing method.

## Claims

1. An image processing apparatus, wherein the apparatus comprises:
a first processing unit, configured to obtain a first stitched image based on a first image and a second image; and
a sending unit, configured to send the first stitched image, wherein
a quantity of row pixels of the first image is M, a quantity of column pixels is N, M>N, and both M and N are positive integers;
a quantity of row pixels of the second image is P, a quantity of column pixels is Q, Q>_M, and both P and Q are positive integers; and
a quantity of row pixels of the first stitched image is N+P, a quantity of column pixels is Q, the first stitched image comprises the second image and a third image, the third image is an image obtained through first preprocessing of the first image, and the first preprocessing comprises rotating the first image, or the first preprocessing comprises rotating and padding the first image.

2. The apparatus according to claim 1, wherein that the first processing unit is configured to obtain the first stitched image based on the first image and the second image comprises:
the first processing unit is specifically configured to:
rotate the first image, to obtain the third image; and
stitch the third image and the second image, to obtain the first stitched image.

3. The apparatus according to claim 2, wherein the first processing unit is further specifically configured to:
rotate the first image by (90°+180°×n), to obtain the third image, wherein n is an integer.

4. The apparatus according to claim 1, wherein the first processing unit is specifically configured to:
rotate the first image, to obtain a fourth image;
perform pixel padding on the fourth image, to obtain the third image; and
stitch the third image and the second image, to obtain the first stitched image.

5. The apparatus according to claim 4, wherein that the first processing unit is specifically configured to perform pixel padding on the fourth image to obtain the third image comprises:
the first processing unit is specifically configured to perform pixel padding from a first target position of the fourth image, to obtain the third image, wherein the first target position comprises at least one of the following: a top position, a bottom position, or a middle position.

6. The apparatus according to claim 1, wherein the first processing unit is specifically configured to:
perform pixel padding on the first image, to obtain a fifth image;
rotate the fifth image, to obtain the third image; and
stitch the third image and the second image, to obtain the first stitched image.

7. The apparatus according to claim 6, wherein that the first processing unit is specifically configured to perform pixel padding on the first image to obtain the fifth image comprises:
the first processing unit is specifically configured to perform pixel padding from a second target position of the first image, to obtain the fifth image, wherein the second target position comprises at least one of the following: a left position, a right position, or a middle position.

8. The apparatus according to claim 6 or 7, wherein the first processing unit is further specifically configured to:
rotate the first image by (90°+180°×n), to obtain the fifth image, wherein n is an integer.

9. The apparatus according to claim 1, wherein the first processing unit is specifically configured to:
rotate the first image, to obtain a fourth image;
stitch the fourth image and the second image, to obtain a second stitched image; and
perform pixel padding on the second stitched image, to obtain the first stitched image.

10. The apparatus according to claim 9, wherein that the first processing unit is specifically configured to perform pixel padding on the second stitched image to obtain the first stitched image comprises:
the first processing unit is specifically configured to perform pixel padding from a first target position of the fourth image in the second stitched image, to obtain the first stitched image, wherein the first target position comprises a top position, a bottom position, or a middle position.

11. The apparatus according to claim 4, 5, 9, or 10, wherein the first processing unit is further specifically configured to:
rotate the first image by (90°+180°×n), to obtain the fourth image, wherein n is an integer.

12. The apparatus according to any one of claims 1 to 11, wherein the sending unit is specifically configured to:
send the first stitched image to a second processing unit or a transmission unit.

13. The apparatus according to any one of claims 1 to 12, wherein the first processing unit comprises a system on a chip SoC.

14. The apparatus according to claim 12, wherein the second processing unit comprises a field programmable gate array FPGA unit and/or a serializer Ser.

15. An image processing apparatus, wherein the apparatus comprises:
an obtaining unit, configured to obtain a first stitched image; and
a second processing unit, configured to perform first processing on the first stitched image, to obtain a first image and a second image, wherein
a quantity of row pixels of the first stitched image is N+P, a quantity of column pixels is Q, the first stitched image comprises the second image and a third image, and N, P, and Q are all positive integers;
a quantity of row pixels of the first image is M, a quantity of column pixels is N, M>N, and M is a positive integer;
a quantity of row pixels of the second image is P, a quantity of column pixels is Q, and Q>_M;
the first processing comprises segmenting the first stitched image to obtain the second image and the third image; and
the first processing further comprises rotating the third image, or the first processing further comprises rotating and de-padding the third image.

16. The apparatus according to claim 15, wherein the second processing unit is specifically configured to:
segment the first stitched image, to obtain the second image and the third image; and
rotate the third image, to obtain the first image.

17. The apparatus according to claim 16, wherein the second processing unit is further specifically configured to:
rotate the third image by (-90°-180°×n), to obtain the first image, wherein n is an integer.

18. The apparatus according to claim 15, wherein the second processing unit is specifically configured to:
segment the first stitched image, to obtain the second image and the third image;
rotate the third image, to obtain a fifth image; and
de-pad the fifth image, to obtain the first image.

19. The apparatus according to claim 18, wherein that the second processing unit is specifically configured to de-pad the fifth image to obtain the first image comprises:
the second processing unit is specifically configured to perform de-padding from a second target position of the fifth image, to obtain the first image, wherein the second target position comprises at least one of the following: a left position, a right position, or a middle position.

20. The apparatus according to claim 18 or 19, wherein the second processing unit is further specifically configured to:
rotate the third image by (-90°-180°×n), to obtain the fifth image, wherein n is an integer.

21. The apparatus according to claim 15, wherein the second processing unit is further specifically configured to:
segment the first stitched image, to obtain the second image and the third image;
de-pad the third image, to obtain a fourth image; and
rotate the fourth image, to obtain the first image.

22. The apparatus according to claim 21, wherein that the second processing unit is further specifically configured to de-pad the third image to obtain the fourth image comprises:
the second processing unit is specifically configured to perform de-padding from a first target position of the third image, to obtain the fourth image, wherein the first target position comprises at least one of the following: a top position, a bottom position, or a middle position.

23. The apparatus according to claim 21 or 22, wherein the second processing unit is further specifically configured to:
rotate the fourth image by (-90°-180°×n), to obtain the first image, wherein n is an integer.

24. The apparatus according to any one of claims 15 to 23, wherein the apparatus further comprises a first sending unit, a second sending unit, a first port, and a second port, wherein
the first sending unit is configured to send the second image through the first port; and
the second sending unit is configured to send the first image through the second port.

25. The apparatus according to any one of claims 15 to 24, wherein the second processing unit comprises a field programmable gate array FPGA unit and/or a serializer Ser.

26. An image processing apparatus, wherein the apparatus comprises:
an obtaining unit, configured to obtain a first stitched image; and
a second processing unit, configured to perform second processing on the first stitched image, to obtain a first image and a second image, wherein
a quantity of row pixels of the first stitched image is N+P, a quantity of column pixels is Q, the first stitched image comprises the second image and a third image, and N, P, and Q are all positive integers;
a quantity of row pixels of the first image is M, a quantity of column pixels is N, M>N, and M is a positive integer;
a quantity of row pixels of the second image is P, a quantity of column pixels is Q, and Q>_M;
the second processing comprises de-padding the first stitched image to obtain a second stitched image; and
the second processing further comprises rotating and segmenting the second stitched image to obtain the first image and the second image.

27. The apparatus according to claim 26, wherein the second processing unit is specifically configured to:
de-pad the first stitched image, to obtain the second stitched image;
segment the second stitched image, to obtain the second image and a fourth image; and
rotate the fourth image, to obtain the first image.

28. The apparatus according to claim 27, wherein that the second processing unit is specifically configured to de-pad the first stitched image to obtain the second stitched image comprises:
the second processing unit is specifically configured to:
perform de-padding from a first target position of the third image in the first stitched image, to obtain the second stitched image, wherein the first target position comprises at least one of the following: a top position, a bottom position, or a middle position.

29. The apparatus according to claim 27 or 28, wherein the second processing unit is further specifically configured to:
rotate the fourth image by (-90°-180°×n), to obtain the first image, wherein n is an integer.

30. The apparatus according to any one of claims 26 to 29, wherein the apparatus further comprises a first sending unit, a second sending unit, a first port, and a second port, wherein
the first sending unit is configured to send the second image through the first port; and
the second sending unit is configured to send the first image through the second port.

31. The apparatus according to any one of claims 26 to 30, wherein the second processing unit comprises a field programmable gate array FPGA unit and/or a serializer Ser.

32. An image processing apparatus, wherein the apparatus comprises:
an obtaining unit, configured to obtain a third image; and
a third processing unit, configured to perform second preprocessing on the third image, to obtain a first image, wherein the second preprocessing comprises rotating the third image, or the second preprocessing comprises rotating and de-padding the third image.

33. The apparatus according to claim 32, wherein the third processing unit is specifically configured to:
rotate the third image, to obtain the first image.

34. The apparatus according to claim 33, wherein the third processing unit is further specifically configured to:
rotate the third image by (-90°-180°×n), to obtain the first image, wherein n is an integer.

35. The apparatus according to claim 32, wherein the third processing unit is specifically configured to:
rotate the third image, to obtain a fifth image; and
de-pad the fifth image, to obtain the first image.

36. The apparatus according to claim 35, wherein that the third processing unit is specifically configured to de-pad the fifth image to obtain the first image comprises:
the third processing unit is specifically configured to perform de-padding from a second target position of the fifth image, to obtain the first image, wherein the second target position comprises at least one of the following: a left position, a right position, or a middle position.

37. The apparatus according to claim 35 or 36, wherein the third processing unit is further specifically configured to:
rotate the third image by (-90°-180°×n), to obtain the fifth image, wherein n is an integer.

38. The apparatus according to claim 32, wherein the third processing unit is specifically configured to:
de-pad the third image, to obtain a fourth image; and
rotate the fourth image, to obtain the first image.

39. The apparatus according to claim 38, wherein that the third processing unit is specifically configured to de-pad the third image to obtain the fourth image comprises:
the third processing unit is specifically configured to perform de-padding from a first target position of the third image, to obtain the fourth image, wherein the first target position comprises at least one of the following: a top position, a bottom position, or a middle position.

40. The apparatus according to claim 38 or 39, wherein the third processing unit is further specifically configured to:
rotate the fourth image by (-90°-180°×n), to obtain the first image, wherein n is an integer.

41. The apparatus according to any one of claims 32 to 40, wherein the apparatus further comprises:
a sending unit, configured to send the first image.

42. The apparatus according to any one of claims 32 to 41, wherein the third processing unit comprises a field programmable gate array FPGA unit and/or a deserializer Des.

43. An image processing apparatus, wherein the apparatus comprises:
an obtaining unit, configured to obtain a fifth image; and
a third processing unit, configured to de-pad the fifth image, to obtain a first image.

44. The apparatus according to claim 43, wherein that the third processing unit is configured to de-pad the fifth image to obtain the first image comprises:
the third processing unit is specifically configured to perform de-padding from a second target position of the fifth image, to obtain the first image, wherein the second target position comprises at least one of the following: a left position, a right position, or a middle position.

45. The apparatus according to claim 43 or 44, wherein the apparatus further comprises:
a sending unit, configured to send the first image.

46. The apparatus according to any one of claims 43 to 45, wherein the third processing unit comprises a field programmable gate array FPGA unit and/or a deserializer Des.

47. An image processing apparatus, wherein the apparatus comprises:
an obtaining unit, configured to obtain a fourth image; and
a third processing unit, configured to rotate the fourth image, to obtain a first image.

48. The apparatus according to claim 47, wherein the third processing unit is further specifically configured to:
rotate the fourth image by (-90°-180°×n), to obtain the first image, wherein n is an integer.

49. The apparatus according to claim 47 or 48, wherein the apparatus further comprises:
a sending unit, configured to send the first image.

50. The apparatus according to any one of claims 47 to 49, wherein the third processing unit comprises a field programmable gate array FPGA unit and/or a deserializer Des.

51. An image processing method, wherein the method comprises:
obtaining a first stitched image based on a first image and a second image; and
sending the first stitched image, wherein
a quantity of row pixels of the first image is M, a quantity of column pixels is N, M>N, and both M and N are positive integers;
a quantity of pixels of the second image is P, a quantity of column pixels is Q, Q>_M, and both P and Q are positive integers;
a quantity of pixels of the first stitched image is N+P, a quantity of column pixels is Q, the first stitched image comprises the second image and a third image, the third image is an image obtained through first preprocessing of the first image, and the first preprocessing comprises rotating the first image, or the first preprocessing comprises rotating and padding the first image.

52. The method according to claim 51, wherein the obtaining a first stitched image based on a first image and a second image comprises:
rotating the first image, to obtain the third image; and
stitching the third image and the second image, to obtain the first stitched image.

53. The method according to claim 52, wherein the rotating the first image, to obtain the third image comprises:
rotating the first image by (90°+180°×n), to obtain the third image, wherein n is an integer.

54. The method according to claim 51, wherein the obtaining a first stitched image based on a first image and a second image comprises:
rotating the first image, to obtain a fourth image;
performing pixel padding on the fourth image, to obtain the third image; and
stitching the third image and the second image, to obtain the first stitched image.

55. The method according to claim 54, wherein the performing pixel padding on the fourth image, to obtain the third image comprises:
performing pixel padding from a first target position of the fourth image, to obtain the third image, wherein the first target position comprises at least one of the following: a top position, a bottom position, or a middle position.

56. The method according to claim 51, wherein the obtaining a first stitched image based on a first image and a second image comprises:
performing pixel padding on the first image, to obtain a fifth image;
rotating the fifth image, to obtain the third image; and
stitching the third image and the second image, to obtain the first stitched image.

57. The method according to claim 56, wherein the performing pixel padding on the first image, to obtain a fifth image comprises:
performing pixel padding from a second target position of the first image, to obtain the fifth image, wherein the second target position comprises at least one of the following: a left position, a right position, or a middle position.

58. The method according to claim 56 or 57, wherein the rotating the fifth image, to obtain the third image comprises:
rotating the fifth image by (90°+180°×n), to obtain the third image, wherein n is an integer.

59. The method according to claim 51, wherein the obtaining a first stitched image based on a first image and a second image comprises:
rotating the first image, to obtain a fourth image;
stitching the fourth image and the second image, to obtain a second stitched image; and
performing pixel padding on the second stitched image, to obtain the first stitched image.

60. The method according to claim 59, wherein the performing pixel padding on the second stitched image, to obtain the first stitched image comprises:
performing pixel padding from a first target position of the fourth image in the second stitched image, to obtain the first stitched image, wherein the first target position comprises a top position, a bottom position, or a middle position.

61. The method according to claim 54, 55, 59, or 60, wherein the rotating the first image, to obtain a fourth image comprises:
rotating the first image by (90°+180°×n), to obtain the fourth image, wherein n is an integer.

62. An image processing method, wherein the method comprises:
obtaining a first stitched image; and
performing first processing on the first stitched image, to obtain a first image and a second image, wherein
a quantity of row pixels of the first stitched image is N+P, a quantity of column pixels is Q, the first stitched image comprises the second image and a third image, and N, P, and Q are all positive integers;
a quantity of row pixels of the first image is M, a quantity of column pixels is N, M>N, and M is a positive integer;
a quantity of row pixels of the second image is P, a quantity of column pixels is Q, and Q>_M;
the first processing comprises segmenting the first stitched image to obtain the second image and the third image; and
the first processing further comprises rotating the third image, or the first processing further comprises rotating and de-padding the third image.

63. The method according to claim 62, wherein the performing first processing on the first stitched image, to obtain a first image and a second image comprises:
segmenting the first stitched image, to obtain the second image and the third image; and
rotating the third image, to obtain the first image.

64. The method according to claim 63, wherein the rotating the third image, to obtain the first image comprises:
rotating the third image by (-90°-180°×n), to obtain the first image, wherein n is an integer.

65. The method according to claim 62, wherein the performing first processing on the first stitched image, to obtain a first image and a second image comprises:
segmenting the first stitched image, to obtain the second image and the third image;
rotating the third image, to obtain a fifth image; and
de-padding the fifth image, to obtain the first image.

66. The method according to claim 65, wherein the de-padding the fifth image, to obtain the first image comprises:
performing de-padding from a second target position of the fifth image, to obtain the first image, wherein the second target position comprises at least one of the following: a left position, a right position, or a middle position.

67. The method according to claim 65 or 66, wherein the rotating the third image, to obtain a fifth image comprises:
rotating the third image by (-90°-180°×n), to obtain the fifth image, wherein n is an integer.

68. The method according to claim 62, wherein the performing first processing on the first stitched image, to obtain a first image and a second image comprises:
segmenting the first stitched image, to obtain the second image and the third image;
de-padding the third image, to obtain a fourth image; and
rotating the fourth image, to obtain the first image.

69. The method according to claim 68, wherein the de-padding the third image, to obtain a fourth image comprises:
performing de-padding from a first target position of the third image, to obtain the fourth image, wherein the first target position comprises at least one of the following: a top position, a bottom position, or a middle position.

70. The method according to claim 68 or 69, wherein the rotating the fourth image, to obtain the first image comprises:
rotating the fourth image by (-90°-180°×n), to obtain the first image, wherein n is an integer.

71. The method according to any one of claims 62 to 70, wherein the method further comprises:
sending the second image through a first port; and
sending the first image through a second port.

72. An image processing method, wherein the method comprises:
obtaining a first stitched image; and
performing second processing on the first stitched image, to obtain a first image and a second image, wherein
a quantity of row pixels of the first stitched image is N+P, a quantity of column pixels is Q, the first stitched image comprises the second image and a third image, and N, P, and Q are all positive integers;
a quantity of row pixels of the first image is M, a quantity of column pixels is N, M>N, and M is a positive integer;
a quantity of row pixels of the second image is P, a quantity of column pixels is Q, and Q>_M;
the second processing comprises de-padding the first stitched image to obtain a second stitched image; and
the second processing further comprises rotating and segmenting the second stitched image to obtain the first image and the second image.

73. The method according to claim 72, wherein the performing second processing on the first stitched image, to obtain a first image and a second image comprises:
de-padding the first stitched image, to obtain the second stitched image;
segmenting the second stitched image, to obtain the second image and a fourth image; and
rotating the fourth image, to obtain the first image.

74. The method according to claim 73, wherein the de-padding the first stitched image, to obtain the second stitched image comprises:
performing de-padding from a first target position of the third image in the first stitched image, to obtain the second stitched image, wherein the first target position comprises at least one of the following: a top position, a bottom position, or a middle position.

75. The method according to claim 73 or 74, wherein the rotating the fourth image, to obtain the first image comprises:
rotating the fourth image by (-90°-180°×n), to obtain the first image, wherein n is an integer.

76. The method according to any one of claims 72 to 75, wherein the method further comprises:
sending the second image through a first port; and
sending the first image through a second port.

77. An image processing method, wherein the method comprises:
obtaining a third image; and
performing second preprocessing on the third image, to obtain a first image, wherein the second preprocessing comprises rotating the third image, or the second preprocessing comprises rotating and de-padding the third image.

78. The method according to claim 77, wherein the performing second preprocessing on the third image, to obtain a first image comprises:
rotating the third image, to obtain the first image.

79. The method according to claim 78, wherein the rotating the third image, to obtain the first image comprises:
rotating the third image by (-90°-180°×n), to obtain the first image, wherein n is an integer.

80. The method according to claim 77, wherein the performing second preprocessing on the third image, to obtain a first image comprises:
rotating the third image, to obtain a fifth image; and
de-padding the fifth image, to obtain the first image.

81. The method according to claim 80, wherein the de-padding the fifth image, to obtain the first image comprises:
performing de-padding from a second target position of the fifth image, to obtain the first image, wherein the second target position comprises at least one of the following: a left position, a right position, or a middle position.

82. The method according to claim 80 or 81, wherein the rotating the third image, to obtain a fifth image comprises:
rotating the third image by (-90°-180°×n), to obtain the fifth image, wherein n is an integer.

83. The method according to claim 77, wherein the performing second preprocessing on the third image, to obtain a first image comprises:
de-padding the third image, to obtain a fourth image; and
rotating the fourth image, to obtain the first image.

84. The method according to claim 83, wherein the de-padding the third image, to obtain a fourth image comprises:
performing de-padding from a first target position of the third image, to obtain the fourth image, wherein the first target position comprises at least one of the following: a top position, a bottom position, or a middle position.

85. The method according to claim 83 or 84, wherein the rotating the fourth image, to obtain the first image comprises:
rotating the fourth image by (-90°-180°×n), to obtain the first image, wherein n is an integer.

86. The method according to any one of claims 77 to 85, wherein the method further comprises:
sending the first image.

87. An image processing method, wherein the method comprises:
obtaining a fifth image; and
de-padding the fifth image, to obtain a first image.

88. The method according to claim 87, wherein the de-padding the fifth image, to obtain a first image comprises:
performing de-padding from a second target position of the fifth image, to obtain the first image, wherein the second target position comprises at least one of the following: a left position, a right position, or a middle position.

89. The method according to claim 87 or 88, wherein the method further comprises:
sending the first image.

90. An image processing method, wherein the method comprises:
obtaining a fourth image; and
rotating the fourth image, to obtain a first image.

91. The method according to claim 90, wherein the rotating the fourth image, to obtain a first image comprises:
rotating the fourth image by (-90°-180°×n), to obtain the first image, wherein n is an integer.

92. The method according to claim 90 or 91, wherein the method further comprises:
sending the first image.

93. An apparatus, wherein the apparatus comprises the image processing apparatus according to any one of claims 1 to 14 and the image processing apparatus according to any one of claims 15 to 31.

94. The apparatus according to claim 93, wherein the apparatus is a cockpit domain controller CDC or a mobile data center MDC.

95. An apparatus, wherein the apparatus comprises the image processing apparatus according to any one of claims 32 to 50.

96. The apparatus according to claim 95, wherein the apparatus further comprises:
a display, configured to display a first image.

97. An image processing apparatus, comprising at least one memory and at least one processor, wherein the at least one memory is configured to store a program, and the at least one processor is configured to run the program, to implement the method according to any one of claims 51 to 92.

98. A computer-readable storage medium, wherein the computer-readable storage medium stores a computer program or instructions, and when the computer program or the instructions are executed, a computer is enabled to perform the method according to any one of claims 51 to 92.

99. A chip, comprising at least one processor and an interface circuit, wherein the interface circuit is configured to provide program instructions or data for the at least one processor, and the at least one processor is configured to execute the program instructions, to implement the method according to any one of claims 51 to 92.
